(19) Europäisches Patentamt
European Patent Office
Office européen des brevets

(11) **EP 4 773 538 A1**

(12) **EUROPEAN PATENT APPLICATION**
published in accordance with Art. 153(4) EPC

(43) Date of publication:
**08.07.2026 Bulletin 2026/28**

(21) Application number: **24873092.1**

(22) Date of filing: **26.09.2024**

(51) International Patent Classification (IPC):
*H04L 5/00* *(2006.01)*

(52) Cooperative Patent Classification (CPC):
**H04L 5/00**

(86) International application number:
**PCT/KR2024/096220**

(87) International publication number:
**WO 2025/071385 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.09.2023 KR 20230129804**

(71) Applicant: **Samsung Electronics Co., Ltd.
Suwon-si, Gyeonggi-do 16677 (KR)**

(72) Inventors:
• **JANG, Youngrok**
**Suwon-si Gyeonggi-do 16677 (KR)**
• **ABEBE, Ameha Tsegaye**
**Suwon-si Gyeonggi-do 16677 (KR)**
• **LIM, Seongmok**
**Suwon-si Gyeonggi-do 16677 (KR)**
• **JI, Hyoungju**
**Suwon-si Gyeonggi-do 16677 (KR)**
• **CHOI, Kyungjun**
**Suwon-si Gyeonggi-do 16677 (KR)**

(74) Representative: **Gulde & Partner
Patent- und Rechtsanwaltskanzlei mbB
Berliner Freiheit 2
10785 Berlin (DE)**

(54) **METHOD AND APPARATUS FOR TRANSMITTING AND RECEIVING REFERENCE SIGNALS IN WIRELESS COMMUNICATION SYSTEM**

(57) The present disclosure relates to a 5G or 6G communication system for supporting higher data transfer rates. The present disclosure relates to operations of a terminal and a base station in a wireless communication system and, particularly, to a method for transmitting and receiving uplink reference signals in a wireless communication system, and an apparatus capable of performing same. The present disclosure provides an apparatus and a method capable of effectively providing services in a mobile communication system.

FIG.10

EP 4 773 538 A1

**Description**

[Technical Field]

The disclosure relates to operations of a terminal and a base station in a wireless communication system. Specifically, the disclosure relates to a method and an apparatus for transmitting/receiving a reference signal in a wireless communication system.

[Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

As various services can be provided according to the aforementioned and the development of mobile communication systems, a method for effectively providing these services is being required.

[Disclosure of Invention]

[Technical Problem]

Embodiments set forth herein are to provide an apparatus and a method capable of effectively providing services in a mobile communication system.

[Solution to Problem]

To solve the above-mentioned problem, the disclosure provides a method for processing a control signal in a wireless communication system, the method including receiving a first control signal transmitted from a base station, processing the received first control signal, and transmitting, to the base station, a second control signal generated based on the processing.

[Advantageous Effects of Invention]

Embodiments set forth herein provide an apparatus and a method capable of effectively providing services in a mobile communication system.

[Brief Description of Drawings]

FIG. 1 illustrates a basic structure of a time-frequency domain in a wireless communication system according to an embodiment of the disclosure.

FIG. 2 illustrates a structure of a frame, a subframe, and a slot in a wireless communication system according to an embodiment of the disclosure.

FIG. 3 illustrates an example of a bandwidth part configuration in a wireless communication system according to an embodiment of the disclosure.

FIG. 4 illustrates radio protocol structures of a base station and a UE in single cell, carrier aggregation (CA), and dual connectivity (DC) situations in a wireless communication system according to an embodiment of the disclosure.

FIG. 5 illustrates an example of a control resource set configuration of a downlink control channel in a wireless communication system; according to an embodiment of the disclosure.

FIG. 6 illustrates a structure of a downlink control channel in a wireless communication system according to an embodiment of the disclosure.

FIG. 7 illustrates an example of multi-cell scheduling downlink control information (MC-DCI) including multiple frequency domain resource assignment (FDRA) fields according to an embodiment of the disclosure.

FIG. 8 illustrates an example of MC-DCI including at least one of a cell set indicator field, a scheduling cell indicator field, and multiple FDRA fields according to an embodiment of the disclosure.

FIGS. 9 (a) and 9 (b) are diagrams illustrating examples of a field indicating frequency domain resource allocation information according to a subcarrier spacing of a cell according to an embodiment of the disclosure.

FIG. 10 is a diagram illustrating a non-codebook-based physical uplink shared channel (PUSCH) transmission process according to an embodiment of the disclosure.

FIG. 11 is a diagram illustrating a possible location at which an aperiodic associated channel status information-reference signal (CSI-RS) may exist for each MC-DCI scheduling situation according to an embodiment of the disclosure.

FIG. 12 is a diagram illustrating an operation of a terminal according to an embodiment of the disclosure.

FIG. 13 is a diagram illustrating an operation of a base station according to an embodiment of the disclosure.

FIG. 14 illustrates a structure of a UE in a wireless communication system according to an embodiment of the disclosure.

FIG. 15 illustrates a structure of a base station in a wireless communication system according to an embodiment of the disclosure.

[Mode for the Invention]

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size thereof. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements. Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the disclosure, a "downlink (DL)" refers to a radio link via which a base station transmits a signal to a terminal, and an "uplink (UL)" refers to a radio link via which a terminal transmits a signal to a base station. Furthermore, in the following description, LTE or LTE-A systems may be described by way of example, but the embodiments of the disclosure may also be applied to other communication systems having similar technical backgrounds or channel types. Examples of such communication systems may include the 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may also be applied to other communication systems through some modifications without significantly departing from the scope of the disclosure.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra- mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a user equipment (UE) or a mobile station (MS) transmits data or control signals to a base station (BS, eNode B, or gNode B), and the downlink refers to a radio link via which the base station transmits data or control signals to the UE. The above multiple access scheme may separate data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. Also, the data rate required for the 5G communication system may be obtained using a frequency bandwidth more than 20MHz in a frequency band of 3 to 6GHz or 6GHz or above, instead of transmitting signals using a transmission bandwidth up to 20MHz in a band of 2GHz used in LTE.

In addition, mMTC is being considered to support application services such as the Internet of Things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km$^2$) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC is a cellular-based mission-critical wireless communication service. For example, URLLC may be used for services such as remote control for robots or machines, industrial automation, unmanned aerial vehicles, remote health care, and emergency alert. Thus, URLLC must provide communication with ultra-low latency and ultra-high reliability. For example, a service supporting URLLC must satisfy an air interface latency of less than 0.5ms, and also requires a packet error rate of 10$^{-5}$ or less. Therefore, for the services supporting URLLC, a 5G system must provide a transmit time interval (TTI) shorter than those of other services, and also may require a design for assigning a large number of resources in a frequency band in order to secure reliability of a communication link.

The three services in 5G, that is, eMBB, URLLC, and mMTC, may be multiplexed and transmitted in a single system. In this case, different transmission/reception techniques and transmission/reception parameters may be used between services in order to satisfy different requirements of the respective services. Of course, 5G is not limited to the three services described above.

In the following description, the term "a/b" may be understood as at least one of a and b.

[NR time-frequency resources]

Hereinafter, a frame structure of a 5G system will be described in more detail with reference to the accompanying drawings.

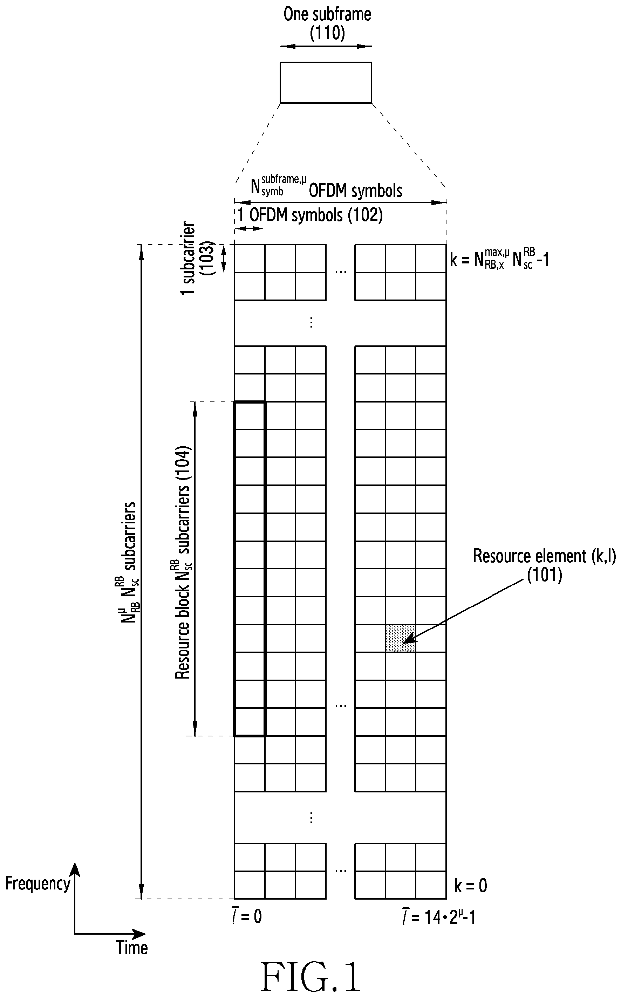

FIG. 1 illustrates a basic structure of a time-frequency domain, which is a radio resource domain used to transmit data or control channels, in a 5G system.

In FIG. 1, the horizontal axis denotes a time domain, and the vertical axis denotes a frequency domain. The basic unit of resources in the time and frequency domains is a resource element (RE) 101, which may be defined as one orthogonal frequency division multiplexing (OFDM) symbol 102 along the time axis and one subcarrier 103 along the frequency axis. In the frequency domain, $N_{SC}^{RB}$ (for example, 12) consecutive REs may constitute one resource block (RB) 104. In the time domain, one subframe 110 may include multiple OFDM symbols 102. For example, the length of one subframe may be 1ms.

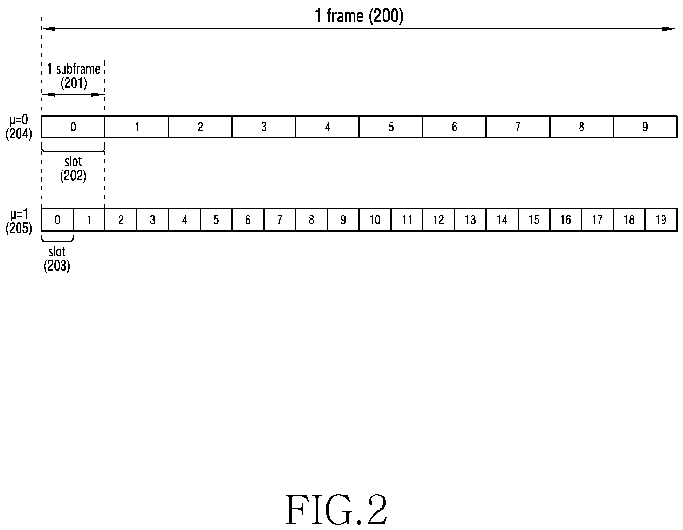

FIG. 2 illustrates a structure of a frame, a subframe, and a slot in a wireless communication system according to an embodiment of the disclosure.

An example of a structure of a frame 200, a subframe 201, and a slot 202 is illustrated in FIG. 2. One frame 200 may be defined as 10ms. One subframe 201 may be defined as 1ms, and thus one frame 200 may include a total of ten subframes 201. One slot 202 or 203 may be defined as 14 OFDM symbols (that is, the number of symbols per one slot $N_{symb}^{slot}=14$). One subframe 201 may include one or multiple slots 202 and 203, and the number of slots 202 and 203 per one subframe 201 may vary depending on configuration values $\mu$ for the subcarrier spacing 204 or 205. The example in FIG. 2 illustrates a case in which the subcarrier spacing configuration value is $\mu=0$ (204), and a case in which $\mu=1$ (205). In the case of $\mu=0$ (204), one subframe 201 may include one slot 202, and in the case of $\mu=1$ (205), one subframe 201 may include two slots 203. That is, the number of slots per one subframe $N_{slot}^{subframe,\mu}$ may differ depending on the subcarrier spacing configuration value $\mu$, and the number of slots per one frame $N_{slot}^{frame,\mu}$ may differ accordingly. $N_{slot}^{subframe,\mu}$ and $N_{slot}^{frame,\mu}$ may be defined according to each subcarrier spacing configuration $\mu$ as in Table 1 below.

[Table 1]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

[Bandwidth part (BWP)]

Next, a bandwidth part (BWP) configuration in a 5G communication system will be described in detail with reference to the accompanying drawings.

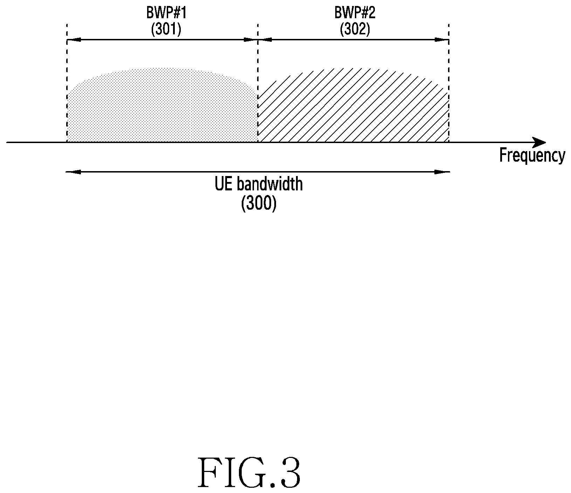

FIG. 3 illustrates an example of a bandwidth part configuration in a wireless communication system according to an embodiment of the disclosure.

FIG. 3 illustrates an example in which a UE bandwidth 300 is configured to include two bandwidth parts, that is, bandwidth part #1 (BWP#1) 301 and bandwidth part #2 (BWP#2) 302. A base station may configure one or multiple bandwidth parts for a UE, and may configure the following pieces of information with regard to each bandwidth part as given in Table 2 below.

[Table 2]

```
BWP ::=                    SEQUENCE {
    bwp-Id                    BWP-Id,
     (bandwidth part identifier)
    locationAndBandwidth      INTEGER (1..65536),
    (bandwidth part location)
    subcarrierSpacing         ENUMERATED {n0, n1, n2, n3, n4, n5},
    (subcarrier spacing)
    cyclicPrefix              ENUMERATED { extended }
    (cyclic prefix)
    }
```

Obviously, the above example is not limiting, and various parameters related to the bandwidth part may be configured for the UE, in addition to the above configuration information. The base station may transfer the configuration information to the UE through upper layer signaling, for example, radio resource control (RRC) signaling. One configured bandwidth part or at least one bandwidth part among multiple configured bandwidth parts may be activated. Whether or not the configured bandwidth part is activated may be transferred from the base station to the UE semi-statically through RRC signaling, or dynamically through downlink control information (DCI).

According to some embodiments, before a radio resource control (RRC) connection, an initial bandwidth part (BWP) for initial access may be configured for the UE by the base station through a master information block (MIB). More specifically, the UE may receive configuration information regarding a control resource set (CORESET) and a search space which may be used to transmit a PDCCH for receiving system information (which may correspond to remaining system information (RMSI) or system information block 1 (SIB1) necessary for initial access through the MIB in the initial access step. Each of the control resource set and the search space configured through the MIB may be considered identity (ID) 0. The base station may notify the UE of configuration information, such as frequency allocation information, time allocation information, and numerology, regarding control resource set #0 through the MIB. In addition, the base station may notify the UE of configuration information regarding the monitoring periodicity and occasion with regard to control resource set #0, that is, configuration information regarding search space #0, through the MIB. The UE may consider that a frequency domain configured by control resource set #0 acquired from the MIB is an initial bandwidth part for initial access. The ID of the initial bandwidth part may be considered to be 0.

The bandwidth part-related configuration supported by 5G may be used for various purposes.

According to some embodiments, the bandwidth part configuration may be used to support the case where the bandwidth supported by the UE is smaller than the system bandwidth. For example, the base station may configure the frequency location (configuration information 2) of the bandwidth part for the UE, so that the UE can transmit/receive data at a specific frequency location within the system bandwidth.

In addition, according to an embodiment, the base station may configure multiple bandwidth parts for the UE for the purpose of supporting different numerologies. For example, in order to support a UE's data transmission/reception using both a subcarrier spacing of 15kHz and a subcarrier spacing of 30kHz, two bandwidth parts may be configured as subcarrier spacings of 15kHz and 30kHz, respectively. Different bandwidth parts may be subjected to frequency division multiplexing (FDM), and if data is to be transmitted/received at a specific subcarrier spacing, the bandwidth part configured as the corresponding subcarrier spacing may be activated.

In addition, according to an embodiment, the base station may configure bandwidth parts having different sizes of bandwidths for the UE for the purpose of reducing power consumed by the UE. For example, if the UE supports a substantially large bandwidth, for example, 100MHz, and always transmits/receives data with the corresponding bandwidth, a substantially large amount of power consumption may occur. Particularly, it may be substantially inefficient from the viewpoint of power consumption to unnecessarily monitor the downlink control channel with a large bandwidth of 100MHz in the absence of traffic. In order to reduce power consumed by the UE, the base station may configure a bandwidth part of a relatively small bandwidth (for example, a bandwidth part of 20MHz) for the UE. The UE may perform a monitoring operation in the 20MHz bandwidth part in the absence of traffic, and may transmit/receive data with the 100MHz bandwidth part as instructed by the base station if data has occurred.

In connection with the bandwidth part configuring method, UEs, before being RRC-connected, may receive configuration information regarding the initial bandwidth part through an MIB in the initial access step. To be more specific, a UE may have a control resource set (i.e., CORESET) configured for a downlink control channel which may be used to transmit downlink control information (DCI) for scheduling a system information block (SIB) from the MIB of a physical broadcast channel (PBCH). The bandwidth of the control resource set configured by the MIB may be considered as the initial bandwidth part, and the UE may receive, through the configured initial bandwidth part, a physical downlink shared channel (PDSCH) through which an SIB is transmitted. The initial bandwidth part may be used not only for the purpose of receiving the SIB, but also for other system information (OSI), paging, random access, or the like.

[Bandwidth part (BWP) change]

If a UE has one or more bandwidth parts configured therefor, the base station may indicate, to the UE, to change (or switch or transition) the bandwidth parts by using a bandwidth part indicator field inside DCI. As an example, if the currently activated bandwidth part of the UE is bandwidth part #1 301 in FIG. 3, the base station may indicate bandwidth part #2 302 with a bandwidth part indicator inside DCI, and the UE may change the bandwidth part to bandwidth part #2 302 indicated by the bandwidth part indicator inside received DCI.

As described above, DCI-based bandwidth part changing may be indicated by DCI for scheduling a PDSCH or a PUSCH, and thus, upon receiving a bandwidth part change request, the UE needs to be able to receive or transmit the PDSCH or PUSCH scheduled by the corresponding DCI in the changed bandwidth part with no problem. To this end, requirements for the delay time ($T_{BWP}$) required during a bandwidth part change are specified in standards, and may be defined as given in Table 3 below, for example.

[Table 3]

| $\mu$ | NR Slot length (ms) | BWP switch delay $T_{BWP}$ (slots) | |
|---|---|---|---|
| | | Type 1[Note 1] | Type 2[Note 1] |
| 0 | 1 | 1 | 3 |
| 1 | 0.5 | 2 | 5 |
| 2 | 0.25 | 3 | 9 |
| 3 | 0.125 | 6 | 18 |
| Note 1: Depends on UE capability. | | | |
| Note 2: If the BWP switch involves changing of SCS, the BWP switch delay is determined by the larger one between the SCS before BWP switch and the SCS after BWP switch. | | | |

The requirements for the bandwidth part change delay time support type 1 or type 2, depending on the capability of the UE. The UE may report the supportable bandwidth part change delay time type to the base station.

If the UE has received DCI including a bandwidth part change indicator in slot n, according to the above-described requirement regarding the bandwidth part change delay time, the UE may complete a change to the new bandwidth part indicated by the bandwidth part change indicator at a timepoint not later than slot n+$T_{BWP}$, and may transmit/receive a data channel scheduled by the corresponding DCI in the newly changed bandwidth part. According to an embodiment, if the base station wants to schedule a data channel by using the new bandwidth part, the base station may determine time domain resource allocation regarding the data channel, based on the UE's bandwidth part change delay time ($T_{BWP}$). For example, the base station may schedule the corresponding data channel after the bandwidth part change delay time of the UE. Accordingly, the UE may not expect that the DCI that indicates a bandwidth part change will indicate a slot offset (K0 or K2) value smaller than the bandwidth part change delay time ($T_{BWP}$).

If the UE has received DCI (for example, DCI format 1_1 or 0_1) indicating a bandwidth part change, the UE may perform no transmission or reception during a time interval from the third symbol of the slot used to receive a PDCCH including the corresponding DCI to the start point of the slot indicated by a slot offset (K0 or K2) value indicated by a time domain resource allocation indicator field in the corresponding DCI. For example, if the UE has received DCI indicating a bandwidth part change in slot n, and if the slot offset value indicated by the corresponding DCI is K, the UE may perform no transmission or reception from the third symbol of slot n to the symbol before slot n+K (for example, the last symbol of slot n+K-1).

[Regarding CA/DC]

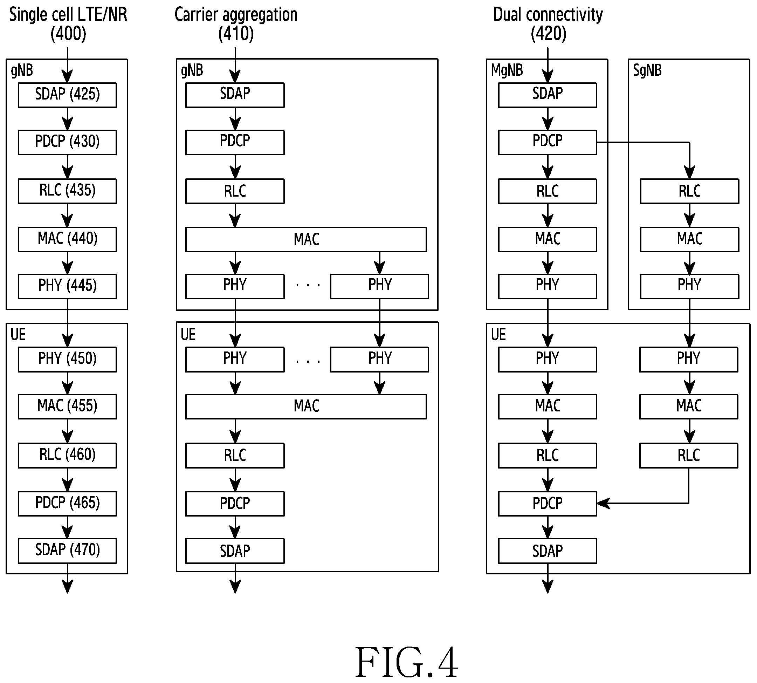

FIG. 4 illustrates radio protocol structures of a base station and a UE in single cell 400, carrier aggregation (CA) 410, and dual connectivity (DC) 420 situations according to an embodiment of the disclosure.

Referring to FIG. 4, a radio protocol of a next-generation mobile communication system includes an NR service data adaptation protocol (SDAP) 425 or 470, an NR packet data convergence protocol (PDCP) 430 or 465, an NR radio link control (RLC) 435 or 460, and an NR medium access controls (MAC) 440 or 455, on each of UE and NR base station sides.

The main functions of the NR SDAP 425 or 470 may include some of functions below.

- Transfer of user plane data
- Mapping between a QoS flow and a DRB for both DL and UL
- Marking QoS flow ID in both DL and UL packets
- Reflective QoS flow to DRB mapping for the UL SDAP PDUs

With regard to the SDAP layer device, the UE may be configured, through an RRC message, whether to use the header of the SDAP layer device or whether to use functions of the SDAP layer device according to each PDCP layer device or according to each bearer or according to each logical channel, . If an SDAP header is configured, the NAS QoS reflection configuration 1-bit indicator (NAS reflective QoS) of the SDAP header and the AS QoS reflection configuration 1-bit indicator (AS reflective QoS) thereof may be indicated by the base station, so that the UE can update or reconfigure mapping information regarding the QoS flow and data bearer of the uplink and downlink. The SDAP header may include QoS flow ID information indicating the QoS. The QoS information may be used as data processing priority, scheduling information, etc. for smoothly supporting services.

The main functions of the NR PDCP 430 or 465 may include some of functions below.

- Header compression and decompression: robust header compression (ROHC) only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

In the above-mentioned functions, the reordering of the NR PDCP device refers to a function of reordering PDCP PDUs received from a lower layer in an order based on the PDCP sequence number (SN), and may include a function of transferring data to an upper layer in the reordered sequence. Alternatively, the reordering of the NR PDCP device may include at least one of a function of instantly transferring data without considering the order, a function of recording PDCP PDUs lost as a result of reordering, a function of reporting the state of the lost PDCP PDUs to the transmitting side, and a function of requesting retransmission of the lost PDCP PDUs.

The main functions of the NR RLC 435 or 460 may include some of functions below.

- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

In the above-mentioned functions, the in-sequence delivery of the NR RLC device refers to a function of successively delivering RLC SDUs received from the lower layer to the upper layer.

The in-sequence delivery of the NR RLC device may include at least one of a function of, if one original RLC SDU is segmented into multiple RLC SDUs and the segmented RLC SDUs are received, reassembling the RLC SDUs and delivering the reassembled RLC SDUs, a function of reordering the received RLC PDUs with reference to the RLC sequence number (SN) or PDCP sequence number (SN), a function of recording RLC PDUs lost as a result of reordering, a function of reporting the state of the lost RLC PDUs to the transmitting side, and a function of requesting retransmission of the lost RLC PDUs. The in-sequence delivery of the NR RLC device may include a function of, if there is a lost RLC SDU, successively delivering only RLC SDUs before the lost RLC SDU to the upper layer, or may include a function of, if a predetermined timer has expired although there is a lost RLC SDU, successively delivering all RLC SDUs received before the timer was started to the upper layer. Alternatively, the in-sequence delivery of the NR RLC device may include a function of, if a predetermined timer has expired although there is a lost RLC SDU, successively delivering all RLC SDUs received until now to the upper layer. In addition, the in-sequence delivery of the NR RLC device may include a function of processing RLC PDUs in the received order (regardless of the sequence number order, in the order of arrival) and delivering same to the PDCP device regardless of the order (out-of-sequence delivery), and may include a function of, in the case of segments, receiving segments which are stored in a buffer or which are to be received later, reconfiguring same into one complete RLC PDU, processing, and delivering same to the PDCP device. The NR RLC layer may include no concatenation function, which may be performed in the NR MAC layer or replaced with a multiplexing function of the NR MAC layer.

The out-of-sequence delivery of the NR RLC device refers to a function of instantly delivering RLC SDUs received from the lower layer to the upper layer regardless of the order. The out-of-sequence delivery of the NR RLC device may include at least one of a function of, if one original RLC SDU is segmented into multiple RLC SDUs and the segmented RLC SDUs are received, reassembling the RLC SDUs and delivering the reassembled RLC SDUs, and a function of storing the RLC SN or PDCP SN of received RLC PDUs, and recording RLC PDUs lost as a result of reordering.

The NR MAC 440 or 455 may be connected to multiple NR RLC layer devices configured in one UE, and the main functions of the NR MAC may include some of functions below.

- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

An NR PHY layer 445 or 450 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer.

The detailed structure of the radio protocol structure may be variously changed according to the carrier (or cell) operating scheme. For example, in case that the base station transmits data to the UE, based on a single carrier (or cell), the base station and the UE may use a protocol structure having a single structure with regard to each layer, such as 400. On the other hand, in case that the base station transmits data to the UE, based on carrier aggregation(CA) which uses multiple carriers in a single TRP, the base station and the UE may use a protocol structure which has a single structure up to the RLC, but multiplexes the PHY layer through an MAC layer, such as 410. As another example, in case that the base station transmits data to the UE, based on dual connectivity (DC) which uses multiple carriers in multiple TRPs, the base station and the UE may use a protocol structure which has a single structure up to the RLC, but multiplexes the PHY layer through an MAC layer, such as 420.

[PDCCH: regarding DCI]

Next, downlink control information (DCI) in a 5G communication system will be described in detail.

In a 5G system, scheduling information regarding uplink data (or physical uplink shared channel (PUSCH)) or downlink data (or physical downlink shared channel (PDSCH)) is included in DCI and transferred from a base station to a UE through the DCI. The UE may monitor, with regard to the PUSCH or PDSCH, a fallback DCI format and a non-fallback DCI format. The fallback DCI format may include a fixed field predefined between the base station and the UE, and the non-fallback DCI format may include a configurable field.

The DCI may be subjected to channel coding and modulation processes and then transmitted through a physical downlink control channel (PDCCH) after a channel coding and modulation process. A cyclic redundancy check (CRC) may be attached to the payload of a DCI message, and the CRC may be scrambled by a radio network temporary identifier (RNTI) corresponding to the identity of the UE. Different RNTIs may be used according to the purpose of the DCI message, for example, UE-specific data transmission, power control command, or random access response. That is, the RNTI may not be explicitly transmitted, but may be transmitted while being included in a CRC calculation process. Upon receiving a DCI message transmitted through the PDCCH, the UE may identify the CRC by using the allocated RNTI, and thereby may know that the corresponding message has been transmitted to the UE.

For example, DCI for scheduling a PDSCH regarding system information (SI) may be scrambled by an SI-RNTI. DCI for scheduling a PDSCH regarding a random access response (RAR) message may be scrambled by an RA-RNTI. DCI for scheduling a PDSCH regarding a paging message may be scrambled by a P-RNTI. DCI for notifying of a slot format indicator (SFI) may be scrambled by an SFI-RNTI. DCI for notifying of transmit power control (TPC) may be scrambled by a TPC-RNTI. DCI for scheduling a UE-specific PDSCH or PUSCH may be scrambled by a cell RNTI (C-RNTI).

DCI format 0_0 may be used as fallback DCI for scheduling a PUSCH, and in this case, the CRC may be scrambled by a C-RNTI. DCI format 0_0 in which the CRC is scrambled by a C-RNTI may include the following pieces of information given in Table 4 below, for example.

[Table 4]

- Identifier for DCI formats - [1] bit
- Frequency domain resource assignment -

$$\left[ \left\lceil \log_2(N_{RB}^{UL,BWP}(N_{RB}^{UL,BWP}+1)/2) \right\rceil \right]$$

bits
- Time domain resource assignment - X bits
- Frequency hopping flag - 1 bit.
- Modulation and coding scheme - 5 bits
- New data indicator - 1 bit
- Redundancy version - 2 bits
- HARQ process number - 4 bits
- Transmit power control (TPC) command for scheduled PUSCH - [2] bits
- Uplink/ supplementary uplink (UL/SUL) indicator - 0 or 1 bit

DCI format 0_1 may be used as non-fallback DCI for scheduling a PUSCH, and in this case, the CRC may be scrambled by a C-RNTI. DCI format 0_1 in which the CRC is scrambled by a C-RNTI may include the following pieces of information given in Table 5 below, for example.

[Table 5]

- Carrier indicator - 0 or 3 bits
- UL/SUL indicator - 0 or 1 bit
- Identifier for DCI formats - [1] bits
- Bandwidth part indicator - 0, 1 or 2 bits
- Frequency domain resource assignment

    * For resource allocation type 0, $\left\lceil N_{RB}^{UL,BWP}/P \right\rceil$ bits

    * For resource allocation type 1,

    $\left\lceil \log_2(N_{RB}^{UL,BWP}(N_{RB}^{UL,BWP}+1)/2) \right\rceil$ bits
- Time domain resource assignment -1, 2, 3, or 4 bits
- Virtual resource block (VRB)-to-physical resource block (PRB) mapping - 0 or 1 bit, only for resource allocation type 1.

    * 0 bit if only resource allocation type 0 is configured;
    * 1 bit otherwise.
- Frequency hopping flag - 0 or 1 bit, only for resource allocation type 1.

    * 0 bit if only resource allocation type 0 is configured;
    * 1 bit otherwise.
- Modulation and coding scheme - 5 bits
- New data indicator - 1 bit

(continued)

- Redundancy version - 2 bits

- HARQ process number - 4 bits

- 1st downlink assignment index- 1 or 2 bits

    \* 1 bit for semi-static HARQ-ACK codebook;

    \* 2 bits for dynamic HARQ-ACK codebook with single HARQ-ACK codebook.

- 2nd downlink assignment index - 0 or 2 bits

    \* 2 bits for dynamic HARQ-ACK codebook with two HARQ-ACK sub-codebooks;

    \* 0 bit otherwise.

- TPC command for scheduled PUSCH - 2 bits

- SRS resource indicator - $\left\lceil \log_2\left( \sum_{k=1}^{L_{\max}} \binom{N_{\mathrm{SRS}}}{k} \right) \right\rceil$ or $\left\lceil \log_2\left(N_{\mathrm{SRS}}\right) \right\rceil$ bits

    \* $\left\lceil \log_2\left( \sum_{k=1}^{L_{\max}} \binom{N_{\mathrm{SRS}}}{k} \right) \right\rceil$ bits for non-codebook based PUSCH transmission;

    \* $\left\lceil \log_2\left(N_{\mathrm{SRS}}\right) \right\rceil$ bits for codebook based PUSCH transmission.

- Precoding information and number of layers - up to 6 bits

- Antenna ports - up to 5 bits

- SRS request - 2 bits

- Channel state information (CSI) request - 0, 1, 2, 3, 4, 5, or 6 bits

- Code block group (CBG) transmission information - 0, 2, 4, 6, or 8 bits

- Phase tracking reference signal (PTRS)-demodulation reference signal (DMRS) association - 0 or 2 bits.

- beta_offset indicator - 0 or 2 bits

- DMRS sequence initialization - 0 or 1 bit

DCI format 1_0 may be used as fallback DCI for scheduling a PDSCH, and in this case, the CRC may be scrambled by a C-RNTI. DCI format 1_0 in which the CRC is scrambled by a C-RNTI may include the following pieces of information given in Table 6 below, for example.

[Table 6]

- Identifier for DCI formats - [1] bit

- Frequency domain resource assignment - $\left\lceil \log_2\left( N_{\mathrm{RB}}^{\mathrm{DL,BWP}}\left(N_{\mathrm{RB}}^{\mathrm{DL,BWP}} + 1\right) / 2 \right) \right\rceil$ bits

- Time domain resource assignment - X bits

- VRB-to-PRB mapping - 1 bit.

- Modulation and coding scheme - 5 bits

- New data indicator - 1 bit

- Redundancy version - 2 bits

- HARQ process number - 4 bits

- Downlink assignment index - 2 bits

- TPC command for scheduled PUCCH - [2] bits

- Physical uplink control channel (PUCCH) resource indicator - 3 bits

(continued)

| - PDSCH-to-HARQ feedback timing indicator - [3] bits |
| --- |

DCI format 1_1 may be used as non-fallback DCI for scheduling a PDSCH, and in this case, the CRC may be scrambled by a C-RNTI. DCI format 1_1 in which the CRC is scrambled by a C-RNTI may include the following pieces of information given in Table 7 below, for example.

[Table 7]

- Carrier indicator - 0 or 3 bits
- Identifier for DCI formats - [1] bits
- Bandwidth part indicator - 0, 1 or 2 bits
- Frequency domain resource assignment

* For resource allocation type 0, $\left\lceil N_{\text{RB}}^{\text{DL,BWP}} / P \right\rceil$ bits

* For resource allocation type 1, $\left\lceil \log_2 (N_{\text{RB}}^{\text{DL,BWP}} (N_{\text{RB}}^{\text{DL,BWP}} + 1) / 2) \right\rceil$ bits

- Time domain resource assignment -1, 2, 3, or 4 bits
- VRB-to-PRB mapping - 0 or 1 bit, only for resource allocation type 1.
    * 0 bit if only resource allocation type 0 is configured;
    * 1 bit otherwise.
- Physical resource block (PRB) bundling size indicator - 0 or 1 bit
- Rate matching indicator - 0, 1, or 2 bits
- Zero power (ZP) channel state information (CSI)-reference signal (RS) trigger - 0, 1, or 2 bits

For transport block 1:
- Modulation and coding scheme - 5 bits
- New data indicator - 1 bit
- Redundancy version - 2 bits

For transport block 2:
- Modulation and coding scheme - 5 bits
- New data indicator - 1 bit
- Redundancy version - 2 bits
- HARQ process number - 4 bits
- Downlink assignment index - 0 or 2 or 4 bits
- TPC command for scheduled PUCCH - 2 bits
- PUCCH resource indicator - 3 bits
- PDSCH-to-HARQ_feedback timing indicator - 3 bits
- Antenna ports - 4, 5 or 6 bits
- Transmission configuration indication - 0 or 3 bits
- SRS request - 2 bits
- CBG transmission information - 0, 2, 4, 6, or 8 bits
- CBG flushing out information - 0 or 1 bit
- DMRS sequence initialization - 1 bit

[PDCCH: CORESET, REG, CCE, and Search Space]

Hereinafter, a downlink control channel in a 5G communication system will be described in more detail with reference to the accompanying drawings.

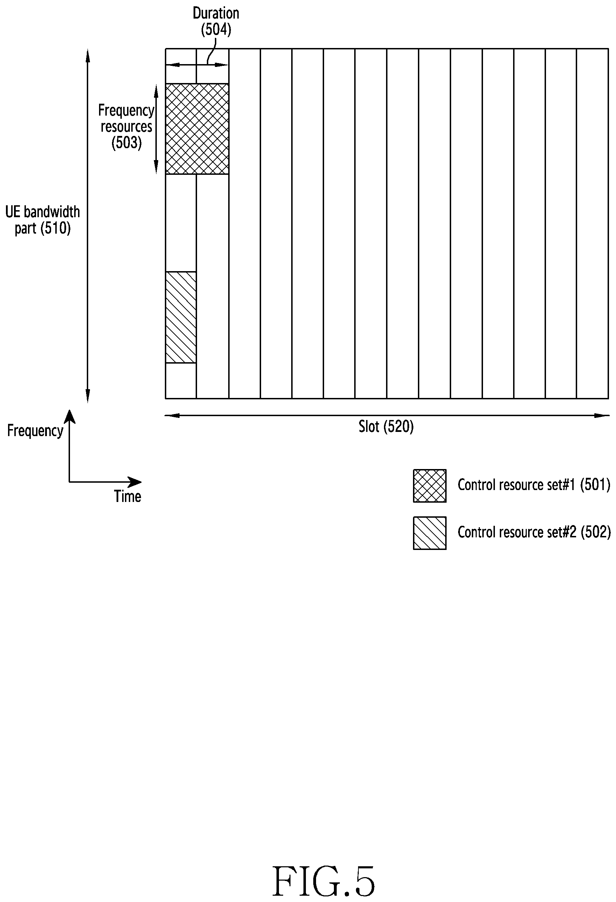

FIG. 5 illustrates an example of a control resource set (CORESET) used to transmit a downlink control channel in a 5G wireless communication system. FIG. 5 illustrates an example in which a UE bandwidth part 510 is configured along the frequency axis, and two control resource sets (control resource set #1 501 and control resource set #2 502) are configured within one slot 520 along the time axis. The control resource sets 501 and 502 may be configured in a specific frequency resource 510 within the entire UE bandwidth part 503 along the frequency domain. The control resource sets 501 and 502 may be each configured as one or multiple OFDM symbols along the time domain, and the number of the OFDM symbols may be defined as a control resource set duration 504. Referring to the example illustrated in FIG. 5, control resource set #1 501 is configured to have a control resource set duration corresponding to two symbols, and control resource set #2 502 is configured to have a control resource set duration corresponding to one symbol.

A control resource set in the 5G system described above may be configured for a UE by a base station through upper layer signaling (e.g., system information, master information block (MIB), radio resource control (RRC) signaling). The description that a control resource set is configured for a UE means that information such as a control resource set identity, the control resource set's frequency location, and the control resource set's symbol duration is provided. For example, this information may include the following pieces of information given in Table 8 below.

[Table 8]

| | |
|---|---|
| ControlResourceSet ::= | SEQUENCE { |
| -- Corresponds to L1 parameter 'CORESET-ID' | |
| controlResourceSetId | ControlResourceSetId, |
| (control resource set identity)) | |
| frequencyDomainResources | BIT STRING (SIZE (45)), |
| (frequency domain resource assignment information) | |
| duration | INTEGER (1..maxCoReSetDuration), |

```
            (time domain resource assignment information )
            cce-REG-MappingType                    CHOICE {
            (CCE-to-REG mapping scheme)
                interleaved                         SEQUENCE {

                    reg-BundleSize                      ENUMERATED {n2, n3, n6},
                    (REG bundle size)

                    precoderGranularity         ENUMERATED        {sameAsREG-
                    bundle, allContiguousRBs},

                    interleaverSize                     ENUMERATED {n2, n3, n6}
                    (interleaver size)

                    shiftIndex          INTEGER(0..maxNrofPhysicalResourceBlocks-1)
                    OPTIONAL
                    (interleaver shift)
                    },
                nonInterleaved                      NULL
            },
            tci-StatesPDCCH                 SEQUENCE(SIZE        (1..maxNrofTCI-
            StatesPDCCH)) OF TCI-StateId                OPTIONAL,
            (QCL configuration information)
            tci-PresentInDCI                ENUMERATED {enabled}
                OPTIONAL,        -- Need S
        }
```

In Table 8, tci-StatesPDCCH (simply referred to as transmission configuration indication (TCI) state) configuration information may include information of one or multiple SS/PBCH block indexes or channel state information reference signal (CSI-RS) indexes, which are quasi-co-located (QCLed) with a DMRS transmitted in a corresponding control resource set.

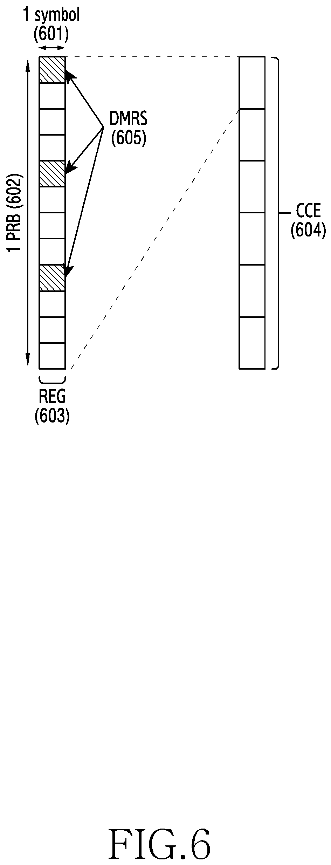

FIG. 6 illustrates an example of a basic unit of time and frequency resources constituting a downlink control channel available in 5G. According to FIG. 6, the basic unit of time and frequency resources constituting a control channel may be referred to as a resource element group (REG) 603, and the REG 603 may be defined by one OFDM symbol 601 along the time axis and one physical resource block (PRB) 602, that is, 12 subcarriers, along the frequency axis. The base station may configure a downlink control channel allocation unit by concatenating the REGs 603.

Provided that the basic unit of downlink control channel allocation in 5G is a control channel element (CCE) 604 as illustrated in FIG. 6, one CCE 604 may include multiple REGs 603. To describe the REG 603 illustrated in FIG. 6, for example, the REG 603 may include 12 REs, and if one CCE 604 includes six REGs 603, one CCE 604 may then include 72 REs. A downlink control resource set, once configured, may include multiple CCEs 604, and a specific downlink control channel may be mapped to one or multiple CCEs 604 and then transmitted according to the aggregation level (AL) in the control resource set. The CCEs 604 in the control resource set are distinguished by numbers, and the numbers of CCEs 604 may be allocated according to a logical mapping scheme.

The basic unit of the downlink control channel illustrated in FIG. 6, that is, the REG 603, may include both REs to which DCI is mapped, and an area to which a reference signal (DMRS 605) for decoding the same is mapped. As in FIG. 6, three DRMSs 605 may be transmitted inside one REG 603. The number of CCEs necessary to transmit a PDCCH may be 1, 2, 4, 8, or 16 according to the aggregation level (AL), and different number of CCEs may be used to implement link adaption of the downlink control channel. For example, in the case of AL=L, one downlink control channel may be transmitted through L CCEs. The UE needs to detect a signal while being no information regarding the downlink control channel, and thus a search space indicating a set of CCEs may be defined for blind decoding. The search space is a set of downlink control channel candidates including CCEs which the UE needs to attempt to decode at a given AL, and since 1, 2, 4, 8, or 16 CCEs may constitute a bundle at various ALs, the UE may have multiple search spaces. A search space set may be defined as a set of search spaces at all configured aggregation levels.

Search spaces may be classified into common search spaces and UE-specific search spaces. A group of UEs or all UEs may search a common search space of the PDCCH in order to receive cell-common control information such as dynamic scheduling regarding system information or a paging message. For example, PDSCH scheduling allocation information for transmitting an SIB including a cell operator information or the like may be received by searching the common search space of the PDCCH. In the case of a common search space, a group of UEs or all UEs need to receive the PDCCH, and the common search space may thus be defined as a predetermined set of CCEs. Scheduling allocation information regarding a UE-specific PDSCH or PUSCH may be received by searching the UE-specific search space of the PDCCH. The UE-specific search space may be defined UE-specifically as a function of various system parameters and the identity of the UE.

In 5G, parameters for a search space regarding a PDCCH may be configured for the UE by the base station through upper layer signaling (for example, SIB, MIB, or RRC signaling). For example, the base station may provide the UE with configurations such as the number of PDCCH candidates at each aggregation level L, the monitoring cycle regarding the search space, the monitoring occasion with regard to each symbol in a slot regarding the search space, the search space type (common search space or UE-specific search space), a combination of an RNTI and a DCI format to be monitored in the corresponding search space, a control resource set index for monitoring the search space, and the like. For example, the information configured for the UE by the base station may include the following pieces of information in Table 9 below.

[Table 9]

```
SearchSpace ::=                          SEQUENCE {
    -- Identity of the search space. SearchSpaceId = 0 identifies the SearchSpace configured via
        PBCH (MIB) or ServingCellConfigCommon.
    searchSpaceId                        SearchSpaceId,
        (search space identity)
    controlResourceSetId                 ControlResourceSetId,
        (control resource set identity)
    monitoringSlotPeriodicityAndOffset   CHOICE {
        (monitoring slot level periodicity)
        sl1                                      NULL,
        sl2                                      INTEGER (0..1),
        sl4                                      INTEGER (0..3),
        sl5                              INTEGER (0..4),
        sl8                                      INTEGER (0..7),
        sl10                             INTEGER (0..9),
        sl16                             INTEGER (0..15),
        sl20                             INTEGER (0..19)
    }
        OPTIONAL,
```

```
        duration(monitoring duration)                 INTEGER (2..2559)
        monitoringSymbolsWithinSlot                    BIT STRING (SIZE (14))
            OPTIONAL,
        (monitoring symbols within slot)
        nrofCandidates                                 SEQUENCE {
        (number of PDCCH candidates for each aggregation level)
            aggregationLevel1                          ENUMERATED {n0, n1, n2, n3, n4, n5, n6,
            n8},
            aggregationLevel2                          ENUMERATED {n0, n1, n2, n3, n4, n5, n6,
            n8},
            aggregationLevel4                          ENUMERATED {n0, n1, n2, n3, n4, n5, n6,
            n8},
            aggregationLevel8                          ENUMERATED {n0, n1, n2, n3, n4, n5, n6,
            n8},
            aggregationLevel16                         ENUMERATED {n0, n1, n2, n3, n4,
            n5, n6, n8}
        },


        searchSpaceType                                CHOICE {
        (search space type)
            -- Configures this search space as common search space (CSS) and DCI formats to
            monitor.
            common                                     SEQUENCE {
        (common search space)
                }
            ue-Specific                                SEQUENCE {
        (UE-specific search space)
                -- Indicates whether the UE monitors in this USS for DCI formats 0-0 and 1-0 or for
                formats 0-1 and 1-1.
                formats                                ENUMERATED {formats0-0-And-1-
                0, formats0-1-And-1-1},
                ...
                }
```

According to configuration information, the base station may configure one or multiple search space sets for the UE. According to some embodiments, the base station may configure search space set 1 and search space set 2 for the UE, may configure DCI format A scrambled by an X-RNTI to be monitored in a common search space in search space set 1, and may configure DCI format B scrambled by a Y-RNTI to be monitored in a UE-specific search space in search space set 2.

According to configuration information, one or multiple search space sets may exist in a common search space or a UE-specific search space. For example, search space set #1 and search space set #2 may be configured as a common search space, and search space set #3 and search space set #4 may be configured as a UE-specific search space.

Combinations of DCI formats and RNTIs given below may be monitored in a common search space. Of course, the combinations of DCI formats and RNTIs monitored in a common search space are not limited to the examples given below.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

Combinations of DCI formats and RNTIs given below may be monitored in a UE-specific search space. Of course, the combinations of DCI formats and RNTIs monitored in a UE-specific search space are not limited to the examples given below.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

The RNTIs enumerated above may follow the definition and usage given below.

Cell RNTI (C-RNTI): used to schedule a UE-specific PDSCH
Temporary cell RNTI (TC-RNTI): used to schedule a UE-specific PDSCH
Configured scheduling RNTI (CS-RNTI): used to schedule a semi-statically configured UE-specific PDSCH
Random access RNTI (RA-RNTI): used to schedule a PDSCH in a random access step
Paging RNTI (P-RNTI): used to schedule a PDSCH in which paging is transmitted
System information RNTI (SI-RNTI): used to schedule a PDSCH in which system information is transmitted
Interruption RNTI (INT-RNTI): used to indicate whether a PDSCH is punctured
Transmit power control for PUSCH RNTI (TPC-PUSCH-RNTI): used to indicate a power control command regarding a PUSCH
Transmit power control for PUCCH RNTI (TPC-PUCCH-RNTI): used to indicate a power control command regarding a PUCCH
Transmit power control for SRS RNTI (TPC-SRS-RNTI): used to indicate a power control command regarding an SRS

The DCI formats enumerated above may follow the definitions given in [Table 10 below.

[Table 10]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symb ol(s) where UE may assume no transmission is intended fo r the UE |
| 2_2 | Transmission of TPC commands for PUCCH and PUSCH |
| 2_3 | Transmission of a group of TPC commands for SRS trans missions by one or more UEs |

In 5G, the search space at aggregation level L in connection with control resource set p and search space set s may be expressed by Equation 1 below.

[Equation 1]

$$L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) \bmod \left\lfloor \frac{N_{CCE,p}}{L} \right\rfloor \right\} + i$$

- L: aggregation level
- $n_{CI}$: carrier index
- $N_{CCE,p}$: total number of CCEs existing in control resource set $p$
- $n_{s,f}^{\mu}$ : slot index
- $M_{s,max}^{(L)}$ : number of PDCCH candidates at aggregation level L
- $m_{s,n_{CI}} = 0, \ldots, M_{s,max}^{(L)} -1$ : PDCCH candidate index at aggregation level L
- $i = 0, ..., L -1$
- $Y_{p,n_{s,f}^{\mu}} = \left( A_p \cdot Y_{p,n_{s,f}^{\mu}-1} \right) \bmod D$ , $Y_{p,-1} = n_{RNTI} \neq 0$ , $A_p = 39827 \text{ for } p \bmod 3 = 0$ , $A_p = 39829 \text{ for } p \bmod 3 = 1$, $A_p = 39839 \text{ for } p \bmod 3 = 2$, $D = 65537$
- $n_{RNTI}$: UE identity

The $Y_{p,n_{s,f}^{\mu}}$ value may correspond to 0 in the case of a common search space.

The $Y_{p,n_{s,f}^{\mu}}$ value may correspond to a value changed by the UE's identity (C-RNTI or ID configured for the UE by the base station) and the time index in the case of a UE-specific search space.

In 5G, multiple search space sets may be configured by different parameters (for example, parameters in Table 9), and the group of search space sets monitored by the UE at each time point may differ accordingly. For example, if search space set #1 is configured at X-slot periodicity, if search space set #2 is configured at Y-slot periodicity, and if X and Y are different, the UE may monitor search space set #1 and search space set #2 both in a specific slot, and may monitor one of search space set #1 and search space set #2 both in another specific slot.

[PUSCH: regarding transmission scheme]

Next, a PUSCH transmission scheduling scheme will be described. PUSCH transmission may be dynamically scheduled by a UL grant inside DCI, or operated by means of configured grant Type 1 or Type 2. Dynamic scheduling indication regarding PUSCH transmission may be made by DCI format 0_0 or 0_1.

Configured grant Type 1 PUSCH transmission may be configured semi-statically by receiving configuredGrant-Config including rrc-ConfiguredUplinkGrant in Table 11 through upper signaling, without receiving a UL grant inside DCI. Configured grant Type 2 PUSCH transmission may be scheduled semi-persistently by a UL grant inside DCI after receiving configuredGrantConfig not including rrc-ConfiguredUplinkGrant in Table 11 through upper signaling. If PUSCH transmission is operated by a configured grant, parameters applied to the PUSCH transmission are applied through configuredGrantConfig (upper signaling) in Table 11 except for dataScramblingIdentityPUSCH, txConfig, codebookSubset, maxRank, and scaling of UCI-OnPUSCH, which are provided by pusch-Config (upper signaling) in Table 12. If provided with transformPrecoder inside configuredGrantConfig (upper signaling) in Table 11, the UE applies tp-pi2BPSK inside pusch-Config in Table 12 to PUSCH transmission operated by a configured grant.

[Table 11]

```
ConfiguredGrantConfig ::=          SEQUENCE {
    frequencyHopping                   ENUMERATED {intraSlot, interSlot}
OPTIONAL,     -- Need S,
    cg-DMRS-Configuration              DMRS-UplinkConfig,
    mcs-Table                          ENUMERATED {qam256, qam64LowSE}
OPTIONAL,     -- Need S
    mcs-TableTransformPrecoder         ENUMERATED {qam256, qam64LowSE}
OPTIONAL,     -- Need S
    uci-OnPUSCH                        SetupRelease { CG-UCI-OnPUSCH }
OPTIONAL,     -- Need M
    resourceAllocation                 ENUMERATED { resourceAllocationType0,
resourceAllocationType1, dynamicSwitch },
    rbg-Size                           ENUMERATED {config2}
OPTIONAL,     -- Need S
    powerControlLoopToUse              ENUMERATED {n0, n1},
    p0-PUSCH-Alpha                     P0-PUSCH-AlphaSetId,
    transformPrecoder                  ENUMERATED {enabled, disabled}
OPTIONAL,     -- Need S
    nrofHARQ-Processes                 INTEGER(1..16),
    repK                               ENUMERATED {n1, n2, n4, n8},
    repK-RV                            ENUMERATED {s1-0231, s2-0303, s3-0000}
OPTIONAL,     -- Need R
    periodicity                        ENUMERATED {
                                         sym2, sym7, sym1x14, sym2x14, sym4x14,
sym5x14, sym8x14, sym10x14, sym16x14, sym20x14,
                                         sym32x14, sym40x14, sym64x14, sym80x14,
sym128x14, sym160x14, sym256x14, sym320x14, sym512x14,
                                         sym640x14, sym1024x14, sym1280x14,
sym2560x14, sym5120x14,
                                         sym6, sym1x12, sym2x12, sym4x12, sym5x12,
sym8x12, sym10x12, sym16x12, sym20x12, sym32x12,
                                         sym40x12, sym64x12, sym80x12, sym128x12,
sym160x12, sym256x12, sym320x12, sym512x12, sym640x12,
                                         sym1280x12, sym2560x12
    },
    configuredGrantTimer               INTEGER (1..64)
OPTIONAL,     -- Need R
    rrc-ConfiguredUplinkGrant          SEQUENCE {
        timeDomainOffset                   INTEGER (0..5119),
        timeDomainAllocation               INTEGER  (0..15),
        frequencyDomainAllocation          BIT STRING (SIZE(18)),
        antennaPort                        INTEGER (0..31),
        dmrs-SeqInitialization             INTEGER (0..1)
OPTIONAL,     -- Need R
        precodingAndNumberOfLayers         INTEGER (0..63),
        srs-ResourceIndicator              INTEGER (0..15)
OPTIONAL,     -- Need R
        mcsAndTBS                          INTEGER (0..31),
        frequencyHoppingOffset             INTEGER (1.. maxNrofPhysicalResourceBlocks-1)
OPTIONAL,     -- Need R
        pathlossReferenceIndex             INTEGER (0..maxNrofPUSCH-
PathlossReferenceRSs-1),
        ...
    }
OPTIONAL,     -- Need R
    ...
}
```

Hereinafter, a PUSCH transmission method will be described. The DMRS antenna port for PUSCH transmission is identical to an antenna port for SRS transmission. PUSCH transmission may follow a codebook-based transmission method and a non-codebook-based transmission method according to whether the value of txConfig inside pusch-Config in Table 12, which is upper signaling, is"codebook" or "nonCodebook".

As described above, PUSCH transmission may be dynamically scheduled through DCI format 0_0 or 0_1, and may be semi-statically configured by a configured grant. Upon receiving indication of scheduling regarding PUSCH transmission through DCI format 0_0, the UE performs beam configuration for PUSCH transmission by using pucch-spatialRelationInfoID corresponding to a UE-specific PUCCH resource corresponding to the minimum ID inside an activated uplink BWP inside a serving cell, and the PUSCH transmission is based on a single antenna port. The UE does not expect scheduling regarding PUSCH transmission through DCI format 0_0 inside a BWP having no configured PUCCH resource including pucch-spatialRelationInfo. If the UE has no configured txConfig inside pusch-Config in Table 12, the UE does not expect scheduling through DCI format 0_1.

[Table 12]

```
PUSCH-Config ::=                          SEQUENCE {
    dataScramblingIdentityPUSCH              INTEGER (0..1023)
OPTIONAL,    -- Need S
    txConfig                                 ENUMERATED {codebook, nonCodebook}
OPTIONAL,    -- Need S
    dmrs-UplinkForPUSCH-MappingTypeA         SetupRelease { DMRS-UplinkConfig }
OPTIONAL,    -- Need M
    dmrs-UplinkForPUSCH-MappingTypeB         SetupRelease { DMRS-UplinkConfig }
OPTIONAL,    -- Need M

    pusch-PowerControl                       PUSCH-PowerControl
OPTIONAL,    -- Need M
    frequencyHopping                         ENUMERATED {intraSlot, interSlot}
OPTIONAL,    -- Need S
    frequencyHoppingOffsetLists              SEQUENCE (SIZE (1..4)) OF INTEGER (1..
maxNrofPhysicalResourceBlocks-1)

OPTIONAL,    -- Need M
    resourceAllocation                       ENUMERATED { resourceAllocationType0,
resourceAllocationType1, dynamicSwitch},
    pusch-TimeDomainAllocationList           SetupRelease { PUSCH-
TimeDomainResourceAllocationList }            OPTIONAL,    -- Need M
    pusch-AggregationFactor                  ENUMERATED { n2, n4, n8 }
OPTIONAL,    -- Need S
    mcs-Table                                ENUMERATED {qam256, qam64LowSE}
OPTIONAL,    -- Need S
    mcs-TableTransformPrecoder               ENUMERATED {qam256, qam64LowSE}
OPTIONAL,    -- Need S
    transformPrecoder                        ENUMERATED {enabled, disabled}
OPTIONAL,    -- Need S
    codebookSubset                           ENUMERATED {fullyAndPartialAndNonCoherent,
partialAndNonCoherent,nonCoherent}

OPTIONAL, -- Cond codebookBased
    maxRank                                  INTEGER (1..4)
OPTIONAL, -- Cond codebookBased
    rbg-Size                                 ENUMERATED { config2}
OPTIONAL, -- Need S
    uci-OnPUSCH                              SetupRelease { UCI-OnPUSCH}
OPTIONAL, -- Need M
    tp-pi2BPSK                               ENUMERATED {enabled}
OPTIONAL, -- Need S
    ...
}
```

Hereinafter, codebook-based PUSCH transmission will be described. The codebook-based PUSCH transmission may be dynamically scheduled through DCI format 0_0 or 0_1, and may be operated semi-statically by a configured grant. If a codebook-based PUSCH is dynamically scheduled through DCI format 0_1 or configured semi-statically by a configured grant, the UE determines a precoder for PUSCH transmission, based on an SRS resource indicator (SRI), a transmission precoding matrix indicator (TPMI), and a transmission rank (the number of PUSCH transmission layers).

The SRI may be given through the SRS resource indicator (a field inside DCI) or configured through srs-ResourceIndicator (upper signaling). During codebook-based PUSCH transmission, the UE has at least one SRS resource configured therefor, and may have a maximum of two SRS resources configured therefor. If the UE is provided with the SRI through DCI, the SRS resource indicated by the corresponding SRI refers to the SRS resource corresponding to the SRI, among SRS resources transmitted prior to the PDCCH including the corresponding SRI. In addition, the TPMI and the transmission rank may be given through "precoding information and number of layers" (a field inside DCI) or configured through precodingAndNumberOfLayers (upper signaling). The TPMI is used to indicate a precoder to be applied to PUSCH transmission. If one SRS resource is configured for the UE, the TPMI may be used to indicate a precoder to be applied in the configured one SRS resource. If multiple SRS resources are configured for the UE, the TPMI is used to indicate a precoder to be applied in an SRS resource indicated through the SRI.

The precoder to be used for PUSCH transmission is selected from an uplink codebook having the same number of antenna ports as the value of nrofSRS-Ports inside SRS-Config (upper signaling). In connection with codebook-based PUSCH transmission, the UE determines a codebook subset, based on codebookSubset inside pusch-Config (upper signaling) and TPMI. The codebookSubset inside pusch-Config (upper signaling) may be configured to be one of "fullyAndPartialAndNonCoherent", "partialAndNonCoherent", or "nonCoherent", based on UE capability reported by the UE to the base station. If the UE reported "partialAndNonCoherent'" as UE capability, the UE does not expect that the value of codebookSubset (upper signaling) will be configured as "fullyAndPartialAndNonCoherent". In addition, if the UE reported "nonCoherent" as UE capability, UE does not expect that the value of codebookSubset (upper signaling) will be configured as "fullyAndPartialAndNonCoherent" or "partialAndNonCoherent". If nrofSRS-Ports inside SRS-ResourceSet (upper signaling) indicates two SRS antenna ports, the UE does not expect that the value of codebookSubset (upper signaling) will be configured as "partialAndNonCoherent".

The UE may have one SRS resource set configured therefor, wherein the value of usage inside SRS-ResourceSet (upper signaling) is "codebook", and one SRS resource may be indicated through an SRI inside the corresponding SRS resource set. If multiple SRS resources are configured inside the SRS resource set wherein the value of usage inside SRS-ResourceSet (upper signaling) is "codebook", the UE expects that the value of nrofSRS-Ports inside SRS-Resource (upper signaling) is identical for all SRS resources.

The UE transmits, to the base station, one or multiple SRS resources included in the SRS resource set wherein the value of usage is configured as "codebook" according to upper signaling, and the base station selects one from the SRS resources transmitted by the UE and indicates the UE to be able to transmit a PUSCH by using transmission beam information of the corresponding SRS resource. In connection with the codebook-based PUSCH transmission, the SRI is used as information for selecting the index of one SRS resource, and is included in DCI. Additionally, the base station adds information indicating the rank and TPMI to be used by the UE for PUSCH transmission to the DCI. Using the SRS resource indicated by the SRI, the UE applies, in performing PUSCH transmission, the precoder indicated by the rank and TPMI indicated based on the transmission beam of the corresponding SRS resource, thereby performing PUSCH transmission.

Hereinafter, non-codebook-based PUSCH transmission will be described. The non-codebook-based PUSCH transmission may be dynamically scheduled through DCI format 0_0 or 0_1, and may be operated semi-statically by a configured grant. If at least one SRS resource is configured inside an SRS resource set wherein the value of usage inside SRS-ResourceSet (upper signaling) is "nonCodebook", non-codebook-based PUSCH transmission may be scheduled for the UE through DCI format 0_1.

With regard to the SRS resource set wherein the value of usage inside SRS-ResourceSet (upper signaling) is "nonCodebook", one connected NZP CSI-RS resource (non-zero power CSI-RS) may be configured for the UE. The UE may calculate a precoder for SRS transmission by measuring the NZP CSI-RS resource connected to the SRS resource set. If the difference between the last received symbol of an aperiodic NZP CSI-RS resource connected to the SRS resource set and the first symbol of aperiodic SRS transmission in the UE is less than 42 symbols, the UE does not expect that information regarding the precoder for SRS transmission will be updated.

If the configured value of resourceType inside SRS-ResourceSet (upper signaling) is "aperiodic", the connected NZP CSI-RS is indicated by an SRS request which is a field inside DCI format 0_1 or 1_1. If the connected NZP CSI-RS resource is an aperiodic NZP CSI-RS resource, the existence of the connected NZP CSI-RS is indicated with regard to the case in which the value of SRS request (a field inside DCI format 0_1 or 1_1) is not "00". The corresponding DCI may not indicate cross carrier or cross BWP scheduling. In addition, if the value of SRS request indicates the existence of a NZP CSI-RS, the NZP CSI-RS is located in the slot used to transmit the PDCCH including the SRS request field. In this case, TCI states configured for the scheduled subcarrier are not configured as QCL-TypeD.

If there is a periodic or semi-persistent SRS resource set configured, the connected NZP CSI-RS may be indicated through associatedCSI-RS inside SRS-ResourceSet (upper signaling). With regard to non-codebook-based transmission, the UE does not expect that spatialRelationInfo which is upper signaling regarding the SRS resource and associatedCSI-RS inside SRS-ResourceSet (upper signaling) will be configured together.

If multiple SRS resources are configured for the UE, the UE may determine a precoder to be applied to PUSCH transmission and the transmission rank, based on an SRI indicated by the base station. The SRI may be indicated through the SRS resource indicator (a field inside DCI) or configured through srs-ResourceIndicator (upper signaling). Similarly to the above-described codebook-based PUSCH transmission, if the UE is provided with the SRI through DCI, the SRS resource indicated by the corresponding SRI refers to the SRS resource corresponding to the SRI, among SRS resources transmitted prior to the PDCCH including the corresponding SRI. The UE may use one or multiple SRS resources for SRS transmission, and the maximum number of SRS resources that can be transmitted simultaneously in the same symbol inside one SRS resource set and the maximum number of SRS resources are determined by UE capability reported to the base station by the UE. SRS resources simultaneously transmitted by the UE occupy the same RB. The UE configures one SRS port for each SRS resource. There may be only one configured SRS resource set wherein the value of usage inside SRS-ResourceSet (upper signaling) is "nonCodebook", and a maximum of four SRS resources may be configured for non-codebook-based PUSCH transmission.

The base station transmits one NZP-CSI-RS connected to the SRS resource set to the UE, and the UE calculates the precoder to be used when transmitting one or multiple SRS resources inside the corresponding SRS resource set, based on the result of measurement when the corresponding NZP-CSI-RS is received. The UE applies the calculated precoder when transmitting, to the base station, one or multiple SRS resources inside the SRS resource set wherein the configured usage is"nonCodebook", and the base station selects one or multiple SRS resources from the received one or multiple SRS resources. In connection with the non-codebook-based PUSCH transmission, the SRI indicates an index that may express one SRS resource or a combination of multiple SRS resources, and the SRI is included in DCI. The number of SRS resources indicated by the SRI transmitted by the base station may be the number of transmission layers of the PUSCH, and the UE transmits the PUSCH by applying the precoder applied to SRS resource transmission to each layer.

[Regarding SRS]

Next, an uplink channel estimation method using sounding reference signal (SRS) transmission of a UE will be described. The base station may configure at least one SRS configuration with regard to each uplink BWP in order to transfer configuration information for SRS transmission to the UE, and may also configure as least one SRS resource set with regard to each SRS configuration. As an example, the base station and the UE may exchange upper signaling information as follows, in order to transfer information regarding the SRS resource set.

- srs-ResourceSetId: an SRS resource set index
- srs-ResourceIdList: a set of SRS resource indices referred to by SRS resource sets
- resource Type: A time domain transmission configuration of SRS resources referred to by SRS resource sets, and may be configured as one of "periodic", "semi-persistent", and "aperiodic". If configured as "periodic" or "semi-persistent", associated CSI-RS information may be provided according to the place of use of SRS resource sets. If configured as "aperiodic", an aperiodic SRS resource trigger list/slot offset information may be provided, and associated CSI-RS information may be provided according to the place of use of SRS resource sets.
- usage: a configuration regarding the place of use of SRS resources referred to by SRS resource sets, and may be configured as one of"beamManagement", "codebook", "nonCodebook",and "antennaSwitching".
- alpha, p0, pathlossReferenceRS, srs-PowerControlAdjustmentStates: provides a parameter configuration for adjusting the transmission power of SRS resources referred to by SRS resource sets.

The UE may understand that an SRS resource included in a set of SRS resource indices referred to by an SRS resource set follows the information configured for the SRS resource set.

In addition, the base station and the UE may transmit/receive upper layer signaling information in order to transfer individual configuration information regarding SRS resources. As an example, the individual configuration information regarding SRS resources may include time-frequency domain mapping information inside slots of the SRS resources, and this may include information regarding intra-slot or inter-slot frequency hopping of the SRS resources. In addition, the individual configuration information regarding SRS resources may include time domain transmission configuration of SRS resources, and may be configured as one of "periodic", "semi-persistent", and "aperiodic". The time domain transmission configuration of SRS resources may be limited to have the same time domain transmission configuration as the SRS resource set including the SRS resources. If the time domain transmission configuration of SRS resources is configured as "periodic" or "semi-persistent", the time domain transmission configuration may further include an SRS resource transmission cycle and a slot offset (for example, periodicityAndOffset).

The base station may activate or deactivate SRS transmission for the UE through upper layer signaling including RRC signaling or MAC CE signaling, or L1 signaling (for example, DCI). For example, the base station may activate or deactivate periodic SRS transmission for the UE through upper layer signaling. The base station may indicate activation of an SRS resource set having resourceType configured as "periodic" through upper layer signaling, and the UE may transmit the SRS resource referred to by the activated SRS resource set. Intra-slot time-frequency domain resource mapping of the transmitted SRS resource follows resource mapping information configured for the SRS resource, and slot mapping, including the transmission cycle and slot offset, follows periodicityAndOffset configured for the SRS resource. In addition, the spatial domain transmission filter applied to the transmitted SRS resource may refer to spatial relation info configured for the SRS resource, or may refer to associated CSI-RS information configured for the SRS resource set including the SRS resource. The UE may transmit the SRS resource inside the uplink BWP activated with regard to the periodic SRS resource activated through upper layer signaling.

For example, the base station may activate or deactivate semi-persistent SRS transmission for the UE through upper layer signaling. The base station may indicate activation of an SRS resource set through MAC CE signaling, and the UE may transmit the SRS resource referred to by the activated SRS resource set. The SRS resource set activated through MAC CE signaling may be limited to an SRS resource set having resourceType configured as "semi-persistent". Intra-slot time-frequency domain resource mapping of the transmitted SRS resource follows resource mapping information configured for the SRS resource, and slot mapping, including the transmission cycle and slot offset, follows periodicityAndOffset configured for the SRS resource. In addition, the spatial domain transmission filter applied to the transmitted SRS resource may refer to spatial relation info configured for the SRS resource, or may refer to associated CSI-RS information configured for the SRS resource set including the SRS resource. If spatial relation info is configured for the SRS resource, the spatial domain transmission filter may be determined,without following the same, by referring to configuration information regarding spatial relation info transferred through MAC CE signaling that activates semi-persistent SRS transmission. The UE may transmit the SRS resource inside the uplink BWP activated with regard to the semi-persistent SRS resource activated through upper layer signaling.

For example, the base station may trigger aperiodic SRS transmission by the UE through DCI. The base station may indicate one of aperiodic SRS triggers (aperiodic SRS-ResourceTrigger) through the SRS request field of DCI. The UE may understand that the SRS resource set including the aperiodic SRS resource trigger indicated through DCI in the aperiodic SRS resource trigger list, among configuration information of the SRS resource set, has been triggered. The UE may transmit the SRS resource referred to by the triggered SRS resource set. Intra-slot time-frequency domain resource mapping of the transmitted SRS resource follows resource mapping information configured for the SRS resource. In addition, slot mapping of the transmitted SRS resource may be determined by the slot offset between the SRS resource and a PDCCH including DCI, and this may refer to value(s) included in the slot offset set configured for the SRS resource set. Specifically, as the slot offset between the SRS resource and the PDCCH including DCI, a value indicated in the time domain resource assignment field of DCI, among offset value(s) included in the slot offset set configured for the SRS resource set, may be applied. In addition, the spatial domain transmission filter applied to the transmitted SRS resource may refer to spatial relation info configured for the SRS resource, or may refer to associated CSI-RS information configured for the SRS resource set including the SRS resource. The UE may transmit the SRS resource inside the uplink BWP activated with regard to the aperiodic SRS resource triggered through DCI.

If the base station triggers aperiodic SRS transmission by the UE through DCI, a minimum time interval may be necessary between the transmitted SRS and the PDCCH including the DCI that triggers aperiodic SRS transmission, in order for the UE to transmit the SRS by applying configuration information regarding the SRS resource. The time interval for SRS transmission by the UE maybe defined as the number of symbols between the last symbol of the PDCCH including the DCI that triggers aperiodic SRS transmission and the first symbol mapped to the first transmitted SRS resource among transmitted SRS resource(s). The minimum time interval may be determined with reference to the PUSCH preparation procedure time needed by the UE to prepare PUSCH transmission. In addition, the minimum time interval may have a different value depending on the place of use of the SRS resource set including the transmitted SRS resource. For example, the minimum time interval may be determined as N2 symbols defined in consideration of UE processing capability that follows the UE's capability with reference to the UE's PUSCH preparation procedure time. In addition, if the place of use of the SRS resource set is configured as "codebook" or "antennaSwitching" in consideration of the place of use of the SRS resource set including the transmitted SRS resource, the minimum time interval may be determined as N2 symbols, and if the place of use of the SRS resource set is configured as "nonCodebook" or "beamManagement", the minimum time interval may be determined as N2+14 symbols. The UE may transmit an aperiodic SRS if the time interval for aperiodic SRS transmission is larger than or equal to the minimum time interval, and may ignore the DCI that triggers the aperiodic SRS if the time interval for aperiodic SRS transmission is smaller than the minimum time interval.

[Table 13]

```
SRS-Resource ::=                        SEQUENCE {
    srs-ResourceId                          SRS-ResourceId,
    nrofSRS-Ports                           ENUMERATED {port1, ports2, ports4},
    ptrs-PortIndex                          ENUMERATED {n0, n1 }
OPTIONAL,    -- Need R
    transmissionComb                            CHOICE {
        n2                                          SEQUENCE {
            combOffset-n2                               INTEGER (0..1),
            cyclicShift-n2                              INTEGER (0..7)
        },
        n4                                          SEQUENCE {
            combOffset-n4                               INTEGER (0..3),
            cyclicShift-n4                              INTEGER (0..11)
        }
    },
    resourceMapping                         SEQUENCE {
        startPosition                           INTEGER (0..5),
        nrofSymbols                             ENUMERATED {n1, n2, n4},
        repetitionFactor                        ENUMERATED {n1, n2, n4}
    },
    freqDomainPosition                      INTEGER (0..67),
    freqDomainShift                         INTEGER (0..268),
    freqHopping                             SEQUENCE {
        c-SRS                                   INTEGER (0..63),
        b-SRS                                   INTEGER (0..3),
        b-hop                                   INTEGER (0..3)
    },
    groupOrSequenceHopping                  ENUMERATED { neither, groupHopping,
sequenceHopping },
    resourceType                            CHOICE {
        aperiodic                               SEQUENCE {

            ...
        },
        semi-persistent                         SEQUENCE {
            periodicityAndOffset-sp                 SRS-PeriodicityAndOffset,

            ...
        },
        periodic                                SEQUENCE {
            periodicityAndOffset-p                  SRS-PeriodicityAndOffset,

            ...
        }
    },
    sequenceId                              INTEGER (0..1023),
    spatialRelationInfo                     SRS-SpatialRelationInfo
OPTIONAL,    -- Need R
    ...
}
```

Configuration information spatialRelationInfo in Table 13 above may be applied, with reference to one reference signal, to a beam used for SRS transmission corresponding to beam information of the corresponding reference signal. For example, configuration of spatialRelationInfo may include information as in Table 14 below.

[Table 14]

```
SRS-SpatialRelationInfo ::=        SEQUENCE {
    servingCellId                      ServCellIndex              OPTIONAL,    -- Need
S
    referenceSignal                    CHOICE {
        ssb-Index                          SSB-Index,
        csi-RS-Index                       NZP-CSI-RS-ResourceId,
        srs                                SEQUENCE {
            resourceId                         SRS-ResourceId,
            uplinkBWP                          BWP-Id
        }
    }
}
```

Referring to the above-described spatialRelationInfo configuration, an SS/PBCH block index, CSI-RS index, or SRS index may be configured as the index of a reference signal to be referred to in order to use beam information of a specific reference signal. Upper signaling referenceSignal corresponds to configuration information indicating which reference signal's beam information is to be referred to for corresponding SRS transmission, ssb-Index refers to the index of an SS/PBCH block, csi-RS-Index refers to the index of a CSI-RS, and srs refers to the index of an SRS. If upper signaling referenceSignal has a configured value of "ssb-Index", the UE may apply the reception beam which was used to receive the SS/PBCH block corresponding to ssb-Index as the transmission beam for the corresponding SRS transmission. If upper signaling referenceSignal has a configured value of "csi-RS-Index", the UE may apply the reception beam which was used to receive the CSI-RS corresponding to csi-RS-Index as the transmission beam for the corresponding SRS transmission. If upper signaling referenceSignal has a configured value of "srs", the UE may apply the reception beam which was used to transmit the SRS corresponding to srs as the transmission beam for the corresponding SRS transmission.

[Regarding UE capability report]

In LTE and NR, a UE may perform a procedure in which, while being connected to a serving base station, the UE may report capability supported by the UE to the corresponding base station. In the following description, the above-described procedure will be referred to as a UE capability report.

The base station may transfer a UE capability enquiry message to a UE in a connected state so as to request a capability report. The message may include a UE capability request with regard to each radio access technology (RAT) type of the base station. The RAT type-specific request may include supported frequency band combination information and the like. In addition, in the case of the UE capability enquiry message, UE capability with regard to multiple RAT types may be requested through one RRC message container transmitted by the base station, or the base station may transfer a UE capability enquiry message including multiple UE capability requests with regard to respective RAT types. That is, a capability enquiry may be repeated multiple times in one message, and the UE may configure a UE capability information message corresponding thereto and report the same multiple times. In next-generation mobile communication systems, a UE capability request may be made regarding multi-RAT dual connectivity (MR-DC), such as NR, LTE, E-UTRA - NR dual connectivity (EN-DC). The UE capability enquiry message may be transmitted initially after the UE is connected to the base station, in general, but may be requested in any condition if needed by the base station.

Upon receiving the UE capability report request from the base station in the above step, the UE configures UE capability according to band information and RAT type requested by the base station. The method in which the UE configures UE capability in an NR system is summarized below:

1. If the UE receives a list regarding LTE and/or NR bands from the base station at a UE capability request, the UE constructs band combinations (BCs) regarding EN-DC and NR standalone(SA). That is, the UE configures a candidate list of BCs regarding EN-DC and NR SA, based on bands received from the base station at a request through FreqBandList. In addition, the priority of bands follows the order described in FreqBandList.

2. If the base station sets "eutra-nr-only" flag or "eutra" flag and requests a UE capability report, the UE removes everything related to NR SA BCs from the configured BC candidate list. Such an operation may occur only if an LTE base station (eNB) requests "eutra" capability.

3. The UE then removes fallback BCs from the BC candidate list configured in the above step. As used herein, a fallback BC refers to a BC that can be obtained by removing a band corresponding to at least one SCell from a specific BC, and since a BC before removal of the band corresponding to at least one SCell can already cover a fallback BC, the same may be omitted. This step is applied in MR-DC as well, that is, LTE bands are also applied. BCs remaining after the above step constitute the final "candidate BC list".

4. The UE selects BCs appropriate for the requested RAT type from the final "candidate BC list" and configures BCs to report. In this step, the UE configures supportedBandCombinationList in a determined order. That is, the UE configures BCs and UE capability to report according to a preconfigured rat-Type order. (nr - > eutra-nr -> eutra). In addition, the UE configures featureSetCombination regarding the configured supportedBandCombinationList and configures a list of "candidate feature set combinations" from a candidate BC list from which a list regarding fallback BCs (including capability of the same or lower level) is removed. The "candidate feature set combinations" may include all feature set combinations regarding NR and EUTRA-NR BCs, and may be acquired from feature set combinations of containers of UE-NR-Capabilities and UE-MRDC-Capabilities.

5. If the requested RAT type is eutra-nr and has an influence, featureSetCombinations is included on both containers of UE-MRDC-Capabilities and UE-NR-Capabilities. However, the feature set of NR is included only in UE-NR-Capabilities.

After the UE capability is configured, the UE transfers a UE capability information message including the UE capability to the base station. The base station performs scheduling and transmission/reception management appropriate for the UE, based on the UE capability received from the UE.

[Regarding MC-DCI]

As an embodiment of the disclosure, a scheduling method through multi-cell scheduling DCI (MC-DCI) will be described. This embodiment may be combined with other embodiments.

In the disclosure, one piece of DCI may be single-DCI or one piece of DCI format, and multiple pieces of DCI may be multi-DCI or multiple DCI formats. In the disclosure, one piece of DCI may be a single PDCCH and/or may be transmitted or received through a single PDCCH, and multiple pieces of DCI may be multiple PDCCHs and/or may be transmitted or received through multiple PDCCHs.

Generally, a UE receives one piece of DCI, and the one piece of DCI may include scheduling information for one cell. For example, in the case of DCI format 0_0/0_1/0_2, one PUSCH may be scheduled for one uplink cell. In addition, in the case of DCI format 1_0/1_1/1_2, one PDSCH may be scheduled for one downlink cell. The scheduled cell may be indicated by the DCI format's carrier indication field (CIF).

However, this approach requires multiple pieces of DCI to be transmitted and received when a PDSCH or PUSCH is scheduled in each of multiple cells. As a result, a large amount of DCI overhead may occur. In order to reduce the DCI overhead, one DCI may schedule a PDSCH or PUSCH for each of multiple cells. For the sake of convenience, this may be referred to as MC-DCI. In the disclosure, the MC-DCI may be one DCI which schedules a PDSCH and/or a PUSCH for each of multiple cells. In this case, the DCI format of the MC-DCI may be DCI format 1_X or 1_3 in the case of PDSCH scheduling and DCI format 0_X or 0_3 in the case of PUSCH scheduling.

Within a specific cell, the UE may report, to a base station through UE capabilities, the number of candidate cell sets that can be scheduled via MC-DCI. In this case, a cell set signifies a set that includes multiple cells, for example, cell set 1 may include cell 1, cell 2, cell 3, and cell 4, and cell set 2 may include cell 5, cell 6, cell 7, and cell 8. The number of cells that may be included in a cell set may be up to four, and the cells included in each cell set may not overlap. In this case, the number of candidate cell sets that the UE may report through UE capabilities may be one, or two or more.

In case that the UE reports the number of candidate cell sets within a specific cell that can be scheduled via the MC-DCI as one, the UE may expect that there is no cell set indicator in the MC-DCI. In case that the UE receives the MC-DCI from the base station, the UE may expect scheduling for cells in one cell set.

In case that the UE reports that the number of candidate cell sets that can be scheduled via MC-DCI within a specific cell as two or more, the UE may expect that there is a cell set indicator field in the MC-DCI, and the UE may receive, from the base station, an indication of one cell set index through the corresponding field. The UE may receive scheduling information for one or more cells within one cell set of multiple cell sets via the MC-DCI. The following discussion assumes that the number of candidate cell sets reported by the UE is one, but a case in which the number of candidate cell sets may be two or more is not excluded.

Cells which may be scheduled by the MC-DCI may be configured by the upper layer. For example, it is assumed that the MC-DCI is capable of scheduling (co-scheduling) cell 0, cell 1, cell 2, and cell 3. Upon receiving the MC-DCI, the UE may receive scheduling information for the cell 0, cell 1, cell 2, and cell 3. That is, the UE may receive scheduling information for cell 0, cell 1, cell 2, and cell 3 from the MC-DCI. For example, the MC-DCI being capable of scheduling cell 0, cell 1, cell 2, and cell 3 may be configured from the upper layer. Here, the scheduling information may include time domain resource assignment (TDRA) information and/or frequency domain resource assignment (FDRA) information by which data channels (PDSCH for downlink and PUSCH for uplink) are transmitted and received in each cell. Thus, the UE may acquire the scheduling information for each cell through the MC-DCI, and transmit/receive a data channel in each cell.

There may be a case in which the base station cannot schedule all cells configured for the UE in a specific situation. There may occur a case in which the base station cannot schedule at least some of multiple cells configured for the UE. For example, although the base station configures, for the UE, four cells (e.g., cell 0, cell 1, cell 2, and cell 3) for scheduling via the MC-DCI, scheduling for some of the cells may not possible because they are subject to scheduling for other UEs, because of poor channel conditions, or for other reasons. The base station may then indicate scheduling cells, among preconfigured cells scheduled by MC-DCI, to the UE. In other words, the base station may be able to indicate, to the UE, one or more cells (actually) subject to scheduling among the multiple cells subject to scheduling via MC-DCI.

This may be done based on one of the following two methods. Alternatively, this may be indicated based on a combination of at least one of the following two methods.

In a first method, the UE may obtain, from the MC-DCI, information indicating co-scheduled cells via the MC-DCI among the preconfigured cells (e.g., cell 0, cell 1, cell 2, cell 3). In other words, among the multiple cells configured to be scheduled via the MC-DCI, one or more cells that are (actually) co-scheduled via the MC-DCI may be identified based on the corresponding MC-DCI. More specifically, the base station may configure a table including the co-scheduled cells for the UE. For example, the rows in this table may have unique indices. The index of each row (and/or each row) may include the indices of the co-scheduled cells. For example, {cell 0, cell 1} may be configured for row 0, {cell 2, cell 3} may be configured for row 1, and {cell 0, cell 1, cell 2, cell 3} may be configured for row 2. An example of a table configured for the UE may refer to Table 15.

[Table 15]

| index | Co-scheduled cell |
|-------|-------------------|
| 0 | {0, 1} |
| 1 | {2, 3} |
| 2 | {0, 1, 2, 3} |

The UE may acquire, from the MC-DCI, a value indicating the index of the row. Therefore, the UE may determine a scheduled cell, based on the value. For example, MC-DCI may include information regarding a row index, and the UE may identify a scheduled cell, based on the table and the row index acquired from MC-DCI. For example, in case that row 0 is indicated by MC-DCI, the UE may identify that cell 0 and cell 1 are scheduled cells. For example, in case that row 1 is indicated by MC-DCI, the UE may identify that cell 2 and cell 3 are scheduled cells. For example, in case that row 2 is indicated by MC-DCI, the UE may identify that cell 0, cell 1, cell 2, and cell 3 are scheduled cells.

In the disclosure, a table of mapping relationships between a cell subject to scheduling (or an index of a cell subject to scheduling) and an index indicated by DCI may be configured, and a cell subject to scheduling may be identified based on the table and the index indicated by the DCI.

Although the disclosure sets forth an embodiment in which co-scheduled cells are identified based on the indices of rows of the table, the disclosure is not limited thereto and, for example, co-scheduled cells may be identified based on the indices of columns of the table, and in this case, the rows may be replaced with the columns in the above-described embodiment.

In the disclosure, when there are two or more candidate cell sets subject to scheduling via the MC-DCI that the UE receives within a specific cell, the UE may receive a configuration of the table as described above for each cell set, and the UE may determine which table to use for a cell set via the cell set indicator field in the MC-DCI.

In a second method, the UE may determine the presence or absence of scheduling information for one or more cells based on the FDRA field of the MC-DCI.

In case that the UE reports the number of candidate cell sets within a specific cell that can be scheduled via the MC-DCI as one, the UE may expect that there are as many FDRA fields in the MC-DCI as cells included in the one cell set. In this case, when the UE has not received a higher layer signaling configuration such as the table mentioned in the first method above, the UE may determine whether scheduling information exists for each cell based on one or more FDRA fields in the MC-DCI.

In case that the UE has reported the number of candidate cell sets within a specific cell that can be scheduled via MC-DCI, as two or more via UE capability reporting, the UE may expect as many FDRA fields to exist as those corresponding to the maximum of the number of cells included in each of the two or more cell sets. For example, when the UE has reported the number of candidate cell sets as two, the first cell set includes three cells, and the second cell set includes four cells, the UE may expect four FDRA fields to exist in the MC-DCI, which is the maximum of the number of cells included in each of the first and second cell sets.

- In case that the UE has not received the higher layer signaling configuration, such as the table referred to in the first method above, for all cell sets, the UE may determine whether scheduling information exists for each cell based on the FDRA fields in the MC-DCI, when the number of cells in the cell set indicated by the UE via the cell set indicator field is less than the number of FDRA fields, the UE may consider the FDRA fields corresponding to the number of cells in the indicated cell set as the ascending indices of the FDRA fields and may ignore the FDRA fields corresponding to indices greater than the number of cells.

- In case that the UE has received the higher layer signaling configuration, such as the table referred to in the first method above, for a specific cell set, but has not received the same for the other cell sets, the UE may expect that a scheduling cell indicator field capable of indicating the index of a specific row in the table configured via the higher layer signaling as in the first method is included in the MC-DCI, and the UE may use a method of analyzing the scheduling cell indicator field or analyzing the FDRA field when determining whether scheduling information exists for one or more cells in connection with which cell set is indicated through a cell set indicator field in the MC-DCI. In this case, the scheduling cell indicator field that may be included in the MC-DCI may be a separate field distinct from the carrier indication field (CIF), or the CIF may replace the scheduling cell indicator field in the MC-DCI. In case that the UE has received, via the cell set indicator field in the MC-DCI, an indication of the set of cells that have received higher layer signaling such as the table above, the UE may receive, via the scheduling cell indicator field, an indication of the presence or absence of scheduling information for one or more cells. If the UE has received, via the cell set indicator field in the MC-DCI, an indication of a set of cells for which no higher layer signaling such as the table above has been configured, the UE may receive, via the FDRA field, an indication of the presence or absence of scheduling information for one or more cells.

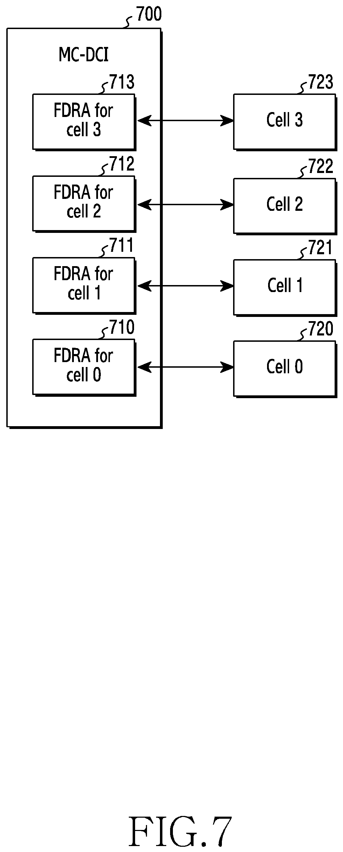

FIG. 7 is a diagram illustrating an example in which MC-DCI includes multiple FDRA fields according to an embodiment of the disclosure.

Referring to FIG. 7, MC-DCI 700 may include multiple FDRA fields. In addition, each FDRA field may have a corresponding cell. That is, if cell 0 720, cell 1 721, cell 2 722, and cell 3 723 are configured as cells simultaneously schedulable by the MC-DCI 700, the MC-DCI 700 may include an FDRA field 710 for cell 0, an FDRA field 711 for cell 1, an FDRA field 712 for cell 2, and an FDRA field 713 for cell 3. Whether each cell has been scheduled may be determined, based on the value of the FDRA field. Cells scheduled based on the values of the FDRA fields may be referred to as actually co-scheduled cells.

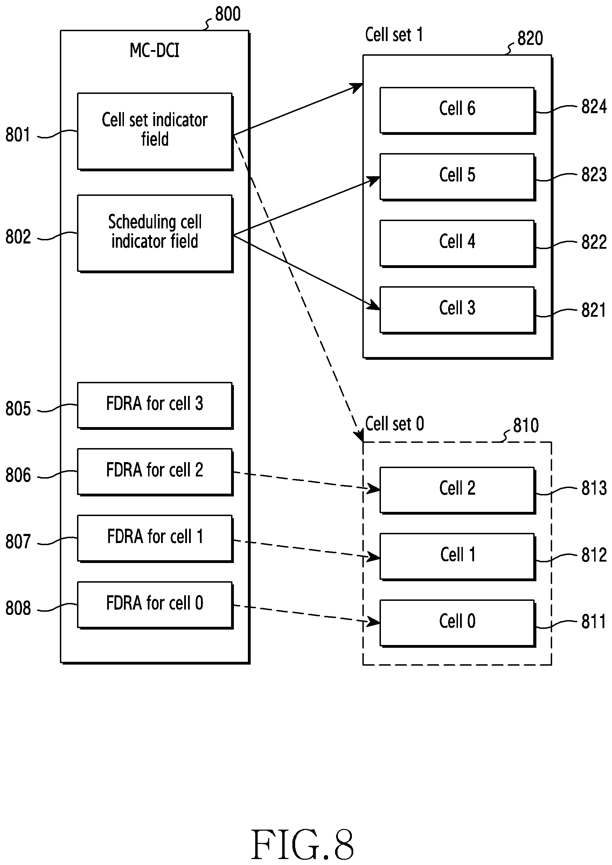

FIG. 8 is a diagram illustrating an example in which MC-DCI includes at least one of a cell set indicator field, a scheduling cell indicator field, and multiple FDRA fields according to an embodiment of the disclosure.

Referring to FIG. 8, MC-DCI 800 may include at least one of a cell set indicator field 801, a scheduling cell indicator field 802, and multiple FDRA fields 805, 806, 807, and 808. As described above, if the number of cell set candidates schedulable to a UE by MC-DCI received by the UE in a particular cell is two or more, and the UE has reported this value to a base station, the UE may expect that the cell set indicator field 801 exists in the MC-DCI. If the UE has reported a value of one to the base station, the field may not exist. FIG. 8 illustrates a case where the UE has reported the number of cell set candidates as two, cell set 0 810 may include three cells including cell 0 811, cell 1 812, and cell 2 813, and cell set 1 820 may include cell 3 821, cell 4 822, cell 5 823, and cell 6 824. Therefore, the UE may expect that FDRA fields corresponding to a maximum value of four among the numbers of cells included in cell set 0 810 and cell set 1 820, respectively, exist in the MC-DCI.

In addition, FIG. 8 illustrates a situation where higher layer signaling as in the above table has not been configured for the UE with respect to cell set 0 810. Therefore, as described in the above second method, whether or not there is scheduling information for the cells in cell set 0 810 may be indicated by the FDRA fields 805, 806, 807, and 808 in the MC-DCI. In this case, three cells exist in cell set 0 810, and thus scheduling information for cell 0 811, cell 1 812, and cell 2 813 may be indicated to the UE through the first, second, and third FDRA fields 808, 807, and 806.

In addition, with reference to FIG. 8, a situation where higher layer signaling as in the above table has been configured for the UE with respect to cell set 1 820 may be described. Therefore, as described in the above first method, whether or not there is scheduling information for the cells in cell set 1 820 may be indicated by the scheduling cell indicator field 802 in the MC-DCI. For example, a particular row may be indicated to the UE among all rows in a table configured by higher layer signaling, through the scheduling cell indicator field 802 in the MC-DCI, and the corresponding row may indicate, for example, scheduling information for cell 3 821 and cell 5 823 in cell set 1 820.

An FDRA field may be distinguished by a valid value and an invalid value. A valid value may refer to a case in which there exists frequency domain allocation corresponding to the value of the FDRA field. On the other hand, an invalid value may refer to a case in which there is no frequency domain allocation corresponding to the value of the FDRA field.

For example, the valid and invalid values may be described based on FDRA type-0. FDRA type-0 is a method of indicating scheduled RBs (or RBGs), based on a bitmap. Here, each bit may have corresponding RBs (or RBG). If a bit is "1," corresponding RBs (or RBG) may be scheduled, and if a bit is "0," corresponding RBs (or RBs) may not be scheduled. Therefore, if at least one bit is "1", the value may be determined to be valid, and if all the bits are "0", the value may be determined to be invalid.

For example, the valid and invalid values may be described based on FDRA type-1. FDRA type-1 is a method of indicating scheduled RBs, based on a resource indication value (RIV). Here, FDRA type-1 may schedule consecutive RBs in the frequency domain. FDRA type-1 may indicate the index of a starting RB and the number of consecutive RBs. A RIV value may be one of 0, 1, ..., and N*(N+1)/2 - 1. Here, N is the number of RBs included in the frequency domain. Therefore, when the RIV value is one of 0, 1, ..., and N*(N+1)/2-1, the value may be determined to be valid, and a value greater than or equal to N*(N+1)/2 may be determined to be invalid.

Some of the cells scheduled by MC-DCI may be cells in a licensed band, and some other cells may be cells in an unlicensed band (or shared spectrum). For example, in the case of a cell in an unlicensed band, FDRA type-2 may be required to be used for uplink scheduling. Specific information of FDRA type-2 or an embodiment in which FDRA type-2 is used will be described later.

The disclosure provides a method for determining a cell scheduled by one DCI when a UE supports multi-cell scheduling through the one DCI.

A UE may receive multiple frequency domain resource assignment (FDRA) fields in one DCI, and may determine a cell corresponding to each FDRA field. The UE may determine whether the cell is scheduled, through an FDRA type of the cell and a value of an FDRA field. The UE may identify whether a cell is scheduled, and/or a scheduled cell and/or an unscheduled cell, based on one or more of an FDRA type or an FDRA field. For example, an interpretation method of the FDRA field may differ according to a subcarrier spacing of a corresponding cell.

When FDRA type-2 is configured for the UE with respect to one cell, whether the cell is scheduled may be determined based on at least one of the following or a combination of one or more thereof.

In the case of the one cell having a 15 kHz subcarrier spacing, the UE may determine that the cell is not scheduled when the value of the FDRA field is as follows.

As a first case, all the bits of the FDRA field are "1."

As a second case, all the first six bits of the FDRA field are "1." That is, this is the case in which all the six most significant bits (MSBs) among the bits of the FDRA field are "1."

As a third case, all the last Y bits of the FDRA field are "1." That is, this is the case in which all the Y least significant bits (LSBs) among the bits of the FDRA field are "1."

In the case of the one cell having a 30 kHz subcarrier spacing, the UE may determine that the cell is not scheduled when the value of the FDRA field is as follows.

As a first case, all the first five bits of the FDRA field are "0" and all the last Y bits are "1." That is, this is the case in which all the five MSBs among the bits of the FDRA field are "0" and all Y LSBs are "1."

As a second case, all the bits of the FDRA field are "0."

As a third case, all the first five bits of the FDRA field are "0." That is, this is the case in which all the five MSBs among the bits of the FDRA field are "0."

As a fourth case, all the last Y bits of the FDRA field are "1." That is, this is the case in which all the Y LSBs among the bits of the FDRA field are "1."

Hereinafter, each situation will be described in more detail.

Situation 1. In case of one cell having a 15kHz subcarrier spacing

The UE may identify information on a subcarrier spacing and an FDRA type of each cell included in a set of candidate cells scheduled by MC-DCI. If FDRA type-2 is configured for one cell among the cells included in a set of candidate cells scheduled by MC-DCI, the UE may identify whether the subcarrier spacing of the cell is 15kHz ($\mu$=0) or 30 kHz ($\mu$=1). This embodiment may be a case where the UE has identified that the subcarrier spacing of the cell is 15 kHz ($\mu$=0).

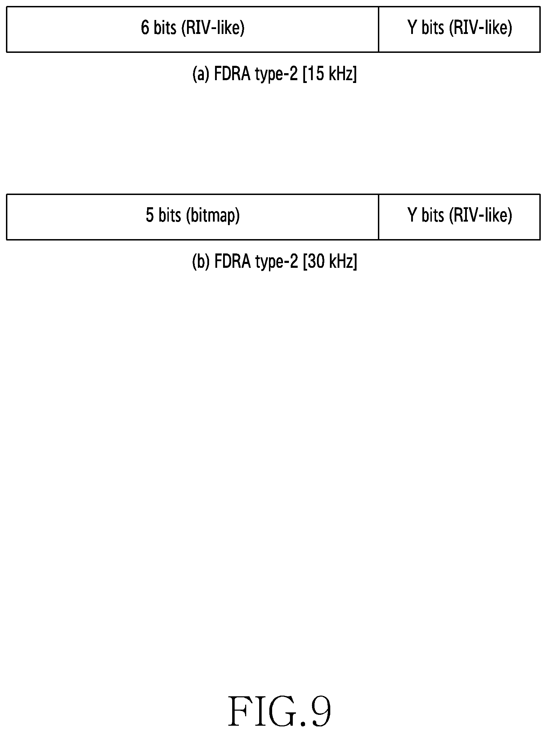

FIGS. 9 (a) and 9 (b) are diagrams illustrating examples of a field indicating frequency domain resource allocation information according to a subcarrier spacing of a cell according to an embodiment of the disclosure.

FIG. 9 (a) illustrates an example of a field indicating frequency domain resource allocation information when the subcarrier spacing of a cell is 15 kHz.

Referring to FIG. 9 (a), when the subcarrier spacing of a cell is 15 kHz, the length of a field indicating frequency domain allocation information of the cell in MC-DCI may be 6+Y bits. Here, the 6 bits may indicate a starting index ($m_0$) and a length (L) for M=10 interlaces included in one RB-set, and the Y bits may indicate a scheduled RB-set, and

$$Y = \left\lceil \log_2 \frac{N^{BWP}_{RB-set,UL}(N^{BWP}_{RB-set,UL}+1)}{2} \right\rceil$$ is given. Here, the Y bits may indicate the index of a starting RB set among RB sets included in a UL BWP and a length therefor. In the disclosure, $N^{BWP}_{RB-set,UL}$ may indicate the number of RB-sets configured for an indicated active UL BWP. In the disclosure, for convenience, 6 bits and Y bits may be referred to as an RIV scheme (or RIV-like).

More specifically, 6 bits are as follows.

When $\mu$ is equal to 0 ($\mu=0$), X=6 most significant bits (MSBs) of resource block allocation information (or frequency domain resource allocation information) may indicate an interlace index set $m_0+1$ allocated to the UE. Here, an indication for the interface index set is configured by a resource indication value (RIV). If $0 \le RIV < M(M+1)/2$ and 1=0, 1,..., L-1, the resource indication value corresponds to a starting interlace index $m_0$ and the number of consecutive interface indexes. The resource indicator value is defined as follows.

$$[\text{RIV equation}]$$
$$\text{if } (L - 1) \le \lfloor M/2 \rfloor \text{ then}$$
$$RIV = M(L - 1) + m_0$$
$$\text{else}$$
$$RIV = M(M - L + 1) + (M - 1 - m_0)$$

With respect to $RIV \ge M(M + 1)/2$, the RIV value corresponds to a starting interlace index m0 and an 1 value in [Table 16] below.

[Table 16] $m_0$ and l for **$RIV \ge M(M + 1)/2$**.

| RIV - M(M + 1)/2 | $m_0$ | l |
|---|---|---|
| 0 | 0 | {0, 5} |
| 1 | 0 | {0, 1, 5, 6} |
| 2 | 1 | {0, 5} |
| 3 | 1 | {0, 1, 2, 3, 5, 6, 7, 8} |
| 4 | 2 | {0, 5} |
| 5 | 2 | {0, 1, 2, 5, 6, 7} |
| 6 | 3 | {0, 5) |
| 7 | 4 | {0, 5} |

Referring to the RIV equation or Table 16 above, among RIV values, 0, 1, ..., M*(M+1)/2-1=54 may indicate a starting interlace index and the number of consecutive interlace indexes according to the RIV equation, and subsequent RIV = M*(M+1)/2=55, M*(M+1)/2+1=56, ..., M*(M+1)/2+7=62 may indicate a starting interlace index ($m_0$) and an 1 value according to [Table 16]. The 6 bits of the RIV value may indicate one value among 0, 1, ..., 63, and 0, 1, ..., 62 are values used for scheduling an interlace. However, RIV=63 ("111111" of 6 bits as binary) may be an unused value. In other words, there may be no scheduled interlace corresponding to the value (RIV=63). Therefore, the value (RIV=63 ("111111" of 6 bits as binary)) may be used to indicate an unscheduled cell.

More specifically, Y bits are as follows.

When $\mu$ is equal to 0 or 1 ($\mu=0$ or $\mu=1$), $Y = \left\lceil \log_2 \frac{N_{RB-set,UL}^{BWP}(N_{RB-set,UL}^{BWP}+1)}{2} \right\rceil$ least significant bits (LSBs) of resource block allocation information (or frequency domain resource allocation information) indicates consecutive RB sets to the UE. For example, Y bits may exist in DCI format 0_1. A resource allocation field is configured by a resource indication value ($RIV_{RB-set}$). For $0 \le RIV_{RB-set} < N_{RB-set,UL}^{BWP}\left(N_{RB-set,UL}^{BWP} + 1\right)/2$ and l=0, 1, ..., L$_{RBset}$-1, the resource indication value indicates to a starting RB set index ($N_{RB-set,UL}^{start}$) and the number (L$_{RB-set}$) of consecutive RB sets. The resource indicator value is defined as follows.

$$[RIV_{RB-set} \text{ equation}]$$

$$\text{if } (L_{RB-set} - 1) \leq \lfloor N_{RB-set,UL}^{BWP}/2 \rfloor \text{ then}$$

$$RIV_{RB-set} = N_{RB-set,UL}^{BWP}(L_{RB-set} - 1) + N_{RB-set,UL}^{start}$$

$$\text{else}$$

$$RIV_{RB-set} = N_{RB-set,UL}^{BWP}\left(N_{RB-set,UL}^{BWP} - L_{RB-set} + 1\right) + (N_{RB-set,UL}^{BWP} - 1 - N_{RB-set,UL}^{start}), \text{ where } N_{RB-set,UL}^{start} = 0, 1, \cdots N_{RB-set,UL}^{BWP} - 1 , \; L_{RB-set} \geq 1 \text{ and shall not exceed } N_{RB-set,UL}^{BWP} - N_{RB-set,UL}^{start}$$

Referring to the above equation, the following may be observed.

-  If one RB-set is included in a UL BWP ( $N_{RB-set,UL}^{BWP} = 1$ ), Y bits are zero bits (Y=0). Therefore, in the case of Y=0 bits, the Y bits may not be able to indicate an unscheduled cell.

-  If two RB-sets are included in a UL BWP ( $N_{RB-set,UL}^{BWP} = 2$ ), Y bits are two bits (Y=2). Here, $RIV_{RB-set}$=0, 1, 2 may be used to indicate a starting RB set index and the number of consecutive RB sets. Y bits may have a value of 0, 1, ..., 3.

Therefore, there may be no scheduled RB-set corresponding to Y bits equal to 3 (both two bits are "11" or "11" of two bits as binary). Therefore, the value (3 ("11" of two bits as binary)) may be used to indicate an unscheduled cell.

-  If three RB-sets are included in a UL BWP ( $N_{RB-set,UL}^{BWP} = 3$ ), Y bits are three bits (Y=3). Here, $RIV_{RB-set}$=0, 1, 2, 3, 4, 5 may be used to indicate a starting RB set index and the number of consecutive RB sets. Y bits may have a value of 0, 1, ..., 7. Therefore, there may be no scheduled RB-set corresponding to Y bits equal to 7 (all three bits are "111" or "111" of three bits as binary). Therefore, the value (7 ("111" of three bits as binary)) may be used to indicate an unscheduled cell.

-  If four RB-sets are included in a UL BWP ( $N_{RB-set,UL}^{BWP} = 4$ ), Y bits are four bits (Y=4). Here, $RIV_{RB-set}$=0, 1, ..., 9 is used to indicate a starting RB set index and the number of consecutive RB sets. Y bits may have a value of 0, 1, ..., 15. Therefore, there may be no scheduled RB-set corresponding to Y bits equal to 15 (all four bits are "1111" or "1111" of four bits as binary). Therefore, the value (15 (" 1111" of four bits as binary)) may be used to indicate an unscheduled cell.

-  If five RB-sets are included in a UL BWP ( $N_{RB-set,UL}^{BWP} = 5$ ), Y bits are four bits (Y=4). Here, $RIV_{RB-set}$=0, 1, ..., 14 is used to indicate a starting RB set index and the number of consecutive RB sets. Y bits may have a value of 0, 1, ..., 15. Therefore, there may be no scheduled RB-set corresponding to Y bits equal to 15 (all four bits are "1111" or "1111" of four bits as binary). Therefore, the value (15 ("1111" of four bits as binary)) may be used to indicate an unscheduled cell.

In summary, in the remaining cases other than when Y is equal to 0 (Y=0) among the sizes of Y bits, when Y bits are all "1," an unscheduled cell may be indicated. That is, if all the bits included in Y LSBs of FDRA are "1," this may be a case where an unscheduled cell is indicated.

In the disclosure, a method of indicating that a cell having a 15 kHz subcarrier spacing is not scheduled may be one of the following or a combination of at least one thereof. In the description of the method, an FDRA field is a field corresponding to the cell having a 15 kHz subcarrier spacing. An FDRA type may be FDRA type-2.

-  As a first method, the UE may determine whether a cell is scheduled, based on all the bits (6+Y bits) of an FDRA field. For example, if all the bits of the FDRA field are "1," the UE may determine that the cell is an unscheduled cell. The FDRA field may include 6 bits of MSBs and Y bits of LSBs. Therefore, if a total of 6+Y bits are all "1" (if the bit values of the bits included in the 6+Y bits are all 1), the UE may determine that the cell having a 15 kHz subcarrier spacing corresponding to the FDRA field is not scheduled. For example, if all the 6 bits of MSBs are "1" and the remaining Y bits of LSBs are not all "1" (if the bit values of the bits included in 6 MSBs are all 1, and the bit values of at least some of the bits included in Y LSBs are 0, or if the bit values of the bits included in 6 MSBs are all 1, and the bit values of the bits included in Y LSBs are all 0), the UE may determine that a DCI format including the information corresponds to an error case. Alternatively, if all the Y bits of LSBs are "1" and the remaining 6 bits of MSBs are not all "1" (if the bit values of the bits included in Y LSBs are all 1, and the bit values of at least some of the bits included in 6 MSBs are 0, or if the bit values of the bits included in Y LSBs are all 1, and the bit values of the bits included in 6 MSBs are all 0), the UE may determine that a DCI format including the information corresponds to an error case. If an error case is determined, the UE may not apply the information indicated by the DCI format and may discard (or ignore) same. If an error case is determined, the UE may not apply and discard information on the cell (the cell corresponding to the FDRA field determined as an error case) among the information indicated by the DCI format, and apply information on remaining cells (the remaining cells except for the cell corresponding to the FDRA field determined as an error case).

- As a second method, the UE may determine whether a cell is scheduled, based on only 6 bits of MSBs of an FDRA field. The UE may identify whether a cell is scheduled through 6 MSBs of an FDRA field. For example, if all the bits of the 6 bits of MSBs of the FDRA field are "1" (if the bit values of all the bits included in 6 MSBs are 1), the UE may determine that the cell (the cell corresponding to the FDRA field) is an unscheduled cell. Therefore, if a total of 6 bits of MSBs are all "1," the UE may determine that the cell having a 15 kHz subcarrier spacing corresponding to the FDRA field is not scheduled. For example, in this case, the bits of Y bits of LSBs may not provide information. That is, whether the cell is scheduled or not may be determined based on 6 bits of MSBs regardless of the value of Y bits of LSBs. For example, the Y bits of LSBs may be discarded, ignored, or not included in the FDRA field (e.g., Y may be 0 (Y=0)).

- As a third method, the UE may determine whether a cell is scheduled, based on only Y bits of LSBs of an FDRA field. The UE may identify whether a cell is scheduled through Y LSBs of an FDRA field. For example, if all the bits of the Y bits of LSBs of the FDRA field are "1" (if the bit values of all the bits included in Y LSBs are 1), the UE may determine that the cell (the cell corresponding to the FDRA field) is an unscheduled cell. Therefore, if a total of Y bits of LSBs are all "1," the UE may determine that the cell having a 15 kHz subcarrier spacing corresponding to the FDRA field is not scheduled. For example, in this case, the bits of 6 bits of MSBs may not provide information. That is, whether the cell is scheduled or not may be determined based on Y bits of LSBs regardless of the value of 6 bits of MSBs. For example, the 6 bits of MSBs may be discarded, ignored, or not included in the FDRA field. According to an embodiment, the third method may be used when Y is greater than 0 (Y>0). If Y is equal to 0 (Y=0), the second method may be used. That is, based on the value of Y, the second method or the third method may be selectively used. That is, a method to be used by the UE may be determined, based on the value of Y (the bit size of Y LSBs of an FDRA field).

Situation 2: In case of one cell having a 30kHz subcarrier spacing

The UE may identify information on a subcarrier spacing and an FDRA type of each cell included in a set of candidate cells scheduled by MC-DCI. If FDRA type-2 is configured for one cell among the cells included in a set of candidate cells scheduled by MC-DCI, the UE may identify whether the subcarrier spacing of the cell is 15 kHz ($\mu$=0) or 30 kHz ($\mu$=1). This embodiment may be a case where the UE has identified that the subcarrier spacing of the cell is 30 kHz ($\mu$=1).

FIG. 9 (b) illustrates an example of a field indicating frequency domain resource allocation information when the subcarrier spacing of a cell is 30 kHz.

Referring to FIG. 9 (b), when the subcarrier spacing of a cell is 30 kHz, the length of a field indicating frequency domain allocation information of the cell in MC-DCI may be 5+Y bits. The 5 bits may indicate, by using a bitmap, whether M=5 interlaces included in one RB-set are scheduled. That is, each of the 5 bits may be used to indicate whether an interlace is scheduled. An interlace corresponding to a bit having a value of "1" among the 5 bits may be determined to be scheduled. An interlace corresponding to a bit having a value of "0" among the 5 may be determined not to be scheduled.

The Y bits indicate a scheduled RB-set, and corresponds to $Y = \left\lceil \log_2 \frac{N_{RB-set,UL}^{BWP}(N_{RB-set,UL}^{BWP}+1)}{2} \right\rceil$. Here, the Y bits may indicate the index of a starting RB set among RB sets included in a UL BWP and a length therefor. In the disclosure, $N_{RB-set,UL}^{BWP}$ may indicate the number of RB-sets configured for an indicated active UL BWP. In the disclosure, for convenience, 5 bits are referred to as a bitmap scheme and Y bits are referred to as an RIV scheme (or RIV-like).

The 5 bits may indicate scheduled interlaces, based on a bitmap. The UE may determine that an interlace corresponding to "1" is scheduled, if each of the 5 bits is "1." That is, an interlace corresponding to a bit having a value of "1" among the 5 bits may be determined to be scheduled. If all of the 5 bits are "0," there may be no scheduled interlace. Therefore, when all of the 5 bits are "0," the 5 bits may be used to determine that the cell is not scheduled.

Since Y bits in situation 2 are the same as those described in embodiment 1 described above, a description thereof is omitted, and reference may be made to the description of Y bits in situation 1.

The FDRA field of a cell having a 30 kHz subcarrier spacing includes 5+Y bits, 5 bits of MSBs indicate scheduled interlaces in an RB set in a bitmap scheme, and Y bits of LSBs indicate scheduled RB sets in an RIV scheme. Therefore, whether the cell is scheduled may be determined according to the values of the 5 bits of MSBs and the Y bits of LSBs.

In the disclosure, a method of indicating that a cell having a 30 kHz subcarrier spacing is not scheduled may be one of the following or a combination of at least one thereof. In the description of the method, an FDRA field is a field corresponding to the cell having a 30 kHz subcarrier spacing. An FDRA type may be FDRA type-2.

- As a first method, the UE may determine whether a cell is scheduled, based on all the bits (5+Y bits) of an FDRA field. For example, if all the bits of the FDRA field are "0," the UE may determine that the cell having a 30 kHz subcarrier spacing is an unscheduled cell. The FDRA field may include 5 bits of MSBs and Y bits of LSBs. Therefore, if a total of 5+Y bits are all "0" (if the bit values of the bits included in the 5+Y bits are all 0), the UE may determine that the cell having a 30 kHz subcarrier spacing corresponding to the FDRA field is not scheduled. For example, if the Y bits of LSBs are all "0," there may be a corresponding value according to the $RIV_{RB\text{-}set}$ equation. However, the 5 bits of MSBs are all "0," and thus an RB set indicated by the Y bits of LSBs may not be used as information on whether scheduling has been performed. In other words, since the 5 bits of MSBs are all "0," it is determined that there is no scheduled interlace, and thus the RB set corresponding to the Y bits of the LSB may be ignored.

- As a second method, the UE may determine whether a cell is scheduled, based on only 5 bits of MSBs of an FDRA field. The UE may identify whether a cell is scheduled through 5 MSBs of an FDRA field. For example, if all the bits of the 5 bits of MSBs of the FDRA field are "0" (if the bit values of all the bits included in 5 MSBs are 1), the UE may determine that the cell (the cell corresponding to the FDRA field) is an unscheduled cell. Therefore, if a total of 5 bits of MSBs are all "0," the UE may determine that the cell having a 30 kHz subcarrier spacing corresponding to the FDRA field is not scheduled. For example, in this case, the bits of Y bits of LSBs may not provide information. That is, whether the cell is scheduled or not may be determined based on 5 bits of MSBs regardless of the value of Y bits of LSBs. For example, the Y bits of LSBs may be discarded, ignored, or not included in the FDRA field (e.g., Y may be 0 (Y=0)).

- As a third method, the UE may determine whether a cell is scheduled, based on only Y bits of LSBs of an FDRA field. The UE may identify whether a cell is scheduled through Y LSBs of an FDRA field. For example, if all the bits of the Y bits of LSBs of the FDRA field are "1" (if the bit values of all the bits included in Y LSBs are 1), the UE may determine that the cell (the cell corresponding to the FDRA field) is an unscheduled cell. Therefore, if a total of Y bits of LSBs are all "1," the UE may determine that the cell having a 30 kHz subcarrier spacing corresponding to the FDRA field is not scheduled. For example, in this case, the bits of 5 bits of MSBs may not provide information. That is, whether the cell is scheduled or not may be determined based on Y bits of LSBs regardless of the value of 5 bits of MSBs. For example, the 5 bits of MSBs may be discarded, ignored, or not included in the FDRA field.

According to an embodiment, the third method may be used when Y is greater than 0 (Y>0). If Y is equal to 0 (Y=0), the second method may be used. That is, based on the value of Y, the second method or the third method may be selectively used. That is, a method to be used by the UE may be determined, based on the value of Y (the bit size of Y LSBs of an FDRA field).

Hereinafter, embodiments of the disclosure will be described in detail in conjunction with the accompanying drawings. The details of the disclosure may be applied to FDD and TDD systems. As used herein, upper signaling (or upper layer signaling) is a method for transferring signals from a base station to a UE by using a downlink data channel of a physical layer, or from the UE to the base station by using an uplink data channel of the physical layer, and may also be referred to as "RRC signaling", "PDCP signaling", or "medium access control (MAC) control element (MAC CE)".

As used herein, the UE may use various methods to determine whether or not to apply cooperative communication, for example, PDCCH(s) that allocates a PDSCH to which cooperative communication is applied have a specific format, or PDCCH(s) that allocates a PDSCH to which cooperative communication is applied include a specific indicator indicating whether or not to apply cooperative communication, or PDCCH(s) that allocates a PDSCH to which cooperative communication is applied are scrambled by a specific RNTI, or cooperative communication application is assumed in a specific range indicated by an upper layer. Hereinafter, it will be assumed, for the sake of descriptive convenience, that NC-JT case refers to a case in which the UE receives a PDSCH to which cooperative communication is applied, based on conditions similar to those described above.

Hereinafter, determining priority between A and B may be variously described as, for example, selecting an entity having a higher priority according to a predetermined priority rule and performing an operation corresponding thereto, or omitting or dropping operations regarding an entity having a lower priority.

Hereinafter, the above examples may be described through several embodiments, but they are not independent of each other, and one or more embodiments may be applied simultaneously or in combination.

Hereinafter, for the sake of descriptive convenience, a cell, a transmission point, a panel, a beam, and/or a transmission direction which can be distinguished through an upper layer/L1 parameter such as a TCI state or spatial relation information, a cell ID, a TRP ID, or a panel ID may be described as a TRP, a beam, or a TCI state as a whole. Therefore, when actually applied, a TRP, a beam, or a TCI state may be appropriately replaced with one of the above terms. In the disclosure, a beam may be understood as an SSB beam or resource.

As used herein, the UE may use various methods to determine whether or not to apply cooperative communication, for example, PDCCH(s) that allocates a PDSCH to which cooperative communication is applied have a specific format, or PDCCH(s) that allocates a PDSCH to which cooperative communication is applied include a specific indicator indicating whether or not to apply cooperative communication, or PDCCH(s) that allocates a PDSCH to which cooperative communication is applied are scrambled by a specific RNTI, or cooperative communication application is assumed in a specific range indicated by an upper layer. Hereinafter, it will be assumed, for the sake of descriptive convenience, that NC-JT case refers to a case in which the UE receives a PDSCH to which cooperative communication is applied, based on conditions similar to those described above.

Hereinafter, embodiments of the disclosure will be described in detail in conjunction with the accompanying drawings. In the following description, a base station is an entity that allocates resources to terminals, and may be at least one of a gNode B, a gNB, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the following description of embodiments of the disclosure, 5G systems are described by way of example, but the embodiments of the disclosure may also be applied to other communication systems having similar technical backgrounds or channel types. Examples of such communication systems may include LTE or LTE-A mobile communication systems and mobile communication technologies developed beyond 5G. Therefore, based on determinations by those skilled in the art, the embodiments of the disclosure may also be applied to other communication systems through some modifications without significantly departing from the scope of the disclosure. The details of the disclosure may be applied to FDD and TDD systems.

Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description of the disclosure, upper layer signaling may refer to signaling corresponding to at least one signaling among the following signaling, or a combination of one or more thereof.

- Master information block (MIB)
- System information block (SIB) or SIB X (X=1, 2, ...)
- Radio resource control (RRC)
- Medium access control (MAC) control element (CE)

In addition, L1 signaling may refer to signaling corresponding to at least one signaling method among signaling methods using the following physical layer channels or signaling, or a combination of one or more thereof.

- Physical downlink control channel (PDCCH)
- Downlink control information (DCI)
- UE-specific DCI
- Group common DCI
- Common DCI
- Scheduling DCI (for example, DCI used for the purpose of scheduling downlink or uplink data)
- Non-scheduling DCI (for example, DCI not used for the purpose of scheduling downlink or uplink data)
- Physical uplink control channel (PUCCH)
- Uplink control information (UCI)

Hereinafter, determining priority between A and B may be variously described as, for example, selecting an entity having a higher priority according to a predetermined priority rule and performing an operation corresponding thereto, or omitting or dropping operations regarding an entity having a lower priority.

As used herein, the term "slot" may generally refer to a specific time unit corresponding to a transmit time interval (TTI), may specifically refer to a slot used in a 5G NR system, or may refer to a slot or a subframe used in a 4G LTE system.

Hereinafter, the above examples may be described through several embodiments, but they are not independent of each other, and one or more embodiments may be applied simultaneously or in combination.

<First embodiment: Non-codebook-based PUSCH transmission scheme of UE>

As an embodiment of the disclosure, a non-codebook-based PUSCH transmission scheme of a UE is described. This embodiment may be combined with other embodiments.

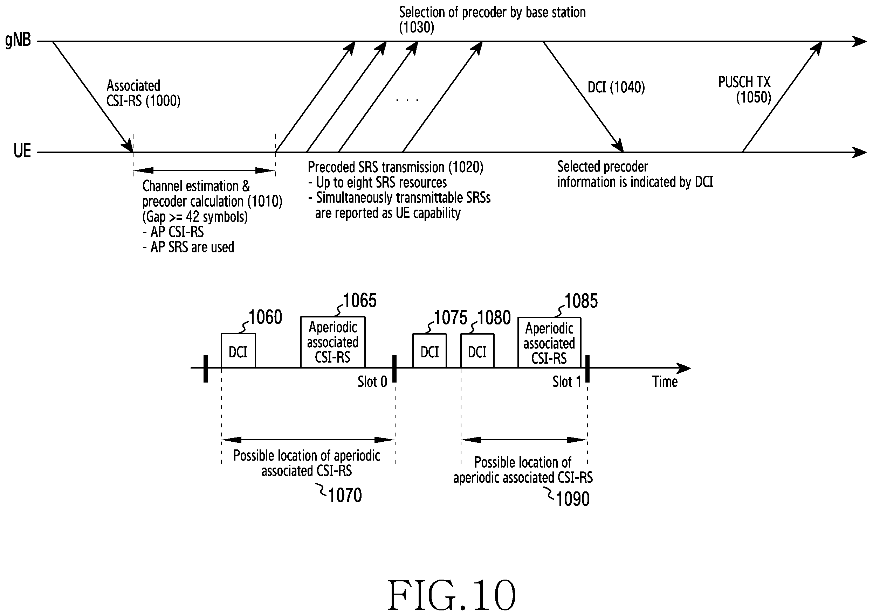

FIG. 10 is a diagram illustrating a non-codebook-based PUSCH transmission process according to an embodiment of the disclosure.

A UE may receive an associated CSI-RS from a base station (1000). The UE may estimate a channel between the base station and the UE, based on the associated CSI-RS, and then based on the channel estimation, may calculate a precoder to be used for non-codebook-based PUSCH transmission (1010). In this case, the UE may calculate the same precoder for the entire frequency resource region for which the UE is to calculate the precoder, or may calculate different precoders for partial frequency resource regions. That is, the UE may calculate a wideband precoder or a subband precoder.

Thereafter, the UE may apply vectors of respective layers of a calculated entire precoding matrix to SRS resources, respectively, and transmit the SRS resources to the base station. According to a UE capability report of the UE and a higher layer signaling configuration of the base station (or one or more of the UE capability report of the UE and the higher layer signaling configuration of the base station), a layer value of the entire precoding matrix and the number of SRS resources may be determined. Accordingly, the UE may apply vectors of respective layers of an entire precoding matrix composed of up to eight layers to up to eight SRS resources, respectively, and simultaneously transmit, to the base station, one or more SRS resources to which the precoding matrix calculated by the UE has been applied.

The UE may report, to the base station as a UE capability, a maximum number of SRS resources simultaneously transmittable among one or more SRS resources to which the precoding matrix has been applied (1020). If the associated CSI-RS is an aperiodic CSI-RS and an SRS resource in an SRS resource set having usage configured as non-codebook is an aperiodic SRS, the UE may not expect that a time interval from a time point at which the associated CSI-RS is received to a time point at which one or more SRS resources to which precoding has been applied are transmitted is smaller than $42 \cdot 2^{\max(0,\mu-3)}$ symbols. Here, $\mu$ may be a value representing a subcarrier spacing. For example, the subcarrier spacing may be $15 \cdot 2^{\mu}$ kHz. That is, if the associated CSI-RS is an aperiodic CSI-RS and an SRS resource in an SRS resource set having usage configured as non-codebook is an aperiodic SRS, the UE may use a time corresponding to at least 42 symbols to estimate a channel based on the associated CSI-RS, calculate a precoder, apply precoding to the SRS resource, and transmit the SRS resource (1010).

The base station that has received the one or more SRS resources to which precoding has been applied may determine, for each PUSCH precoding frequency resource unit, a combination of SRS resources that is determined to have the best reception performance, and a combination of precoders applied to the selected one or more SRS resources may be determined as precoders of the UE for non-codebook-based PUSCH transmission in a corresponding PUSCH precoding frequency resource unit (1030). Thereafter, information on the combination of SRS resources determined by the base station may be indicated to the UE by the base station through an SRI field in DCI (1040). In this case, the UE may understand the number of SRS resources indicated to the UE through the SRI as rank information of a non-codebook-based PUSCH to be transmitted by the UE, and may understand the one or more SRS resources indicated to the UE through the SRI as precoder information of a non-codebook-based PUSCH to be transmitted by the UE. Based on the rank and precoder information, the UE may perform non-codebook-based PUSCH transmission (1050).

The UE may expect that the length of an SRS request field in DCI format 0_2 is one of 0, 1, 2, or 3 bits, and may interpret the SRS request field for each bit length as follows.

- If the higher layer signaling srs-RequestDCI-0-2 is not configured, the SRS request field in DCI format 0_2 may be 0 bits.
- If the higher layer signaling srs-RequestDCI-0-2 is configured as 1 and supplementaryUplink in ServingCellConfig is not configured, the UE may consider the SRS request field in DCI format 0_2 as 1 bit, and may interpret the 1 bit according to [Table 18] below or according to the first two rows of [Table 17] below. If [Table 17] below is used, the UE may interpret a case in which the value of the SRS request field is 0 as an operation corresponding to the first row of "00" in [Table 17] below, and may interpret a case in which the value of the SRS request field is 1 as an operation corresponding to the second row of "01" in [Table 17] below.
- If the higher layer signaling srs-RequestDCI-0-2 is configured as 1 and supplementary Uplink in ServingCellConfig is configured, the UE may consider the SRS request field in DCI format 0_2 as 2 bits, interpret the first bit thereamong as indicating one of non-SUL or SUL, and interpret the remaining 1 bit according to [Table 18] below or according to the first two rows of [Table 17] below. If [Table 17] below is used, the UE may interpret a case in which the value of the SRS request field is 0 as an operation corresponding to the first row of "00" in [Table 17] below, and may interpret a case in which the value of the SRS request field is 1 as an operation corresponding to the second row of "01" in [Table 17] below.
- If the higher layer signaling srs-RequestDCI-0-2 is configured as 2 and supplementaryUplink in ServingCellConfig is not configured, the UE may consider the SRS request field in DCI format 0_2 as 2 bits, and may interpret the 2 bit according to [Table 17] below.
- If the higher layer signaling srs-RequestDCI-0-2 is configured as 2 and supplementaryUplink in ServingCellConfig is configured, the UE may consider the SRS request field in DCI format 0_2 as 3 bits, interpret the first bit thereamong as indicating one of non-SUL or SUL, and interpret the remaining 2 bits according to [Table 17] below.

The UE may expect that the length of an SRS request field in DCI format 1_2 is one of 0, 1, 2, or 3 bits, and may interpret the SRS request field for each bit length as follows.

- If the higher layer signaling srs-RequestDCI-1-2 is not configured, the SRS request field in DCI format 1_2 may be 0 bits.
- If the higher layer signaling srs-RequestDCI-1-2 is configured as 1 and supplementaryUplink in ServingCellConfig is not configured, the UE may consider the SRS request field in DCI format 1_2 as 1 bit, and may interpret the 1 bit according to [Table 18] below or according to the first two rows of [Table 17] below. If [Table 17] below is used, the UE may interpret a case in which the value of the SRS request field is 0 as an operation corresponding to the first row of "00" in [Table 17] below, and may interpret a case in which the value of the SRS request field is 1 as an operation corresponding to the second row of "01" in [Table 17] below.
- If the higher layer signaling srs-RequestDCI-1-2 is configured as 1 and supplementary Uplink in ServingCellConfig is configured, the UE may consider the SRS request field in DCI format 1_2 as 2 bits, interpret the first bit thereamong as indicating one of non-SUL or SUL, and interpret the remaining 1 bit according to [Table 18] or according to the first two rows of [Table 17] below. If [Table 17] below is used, the UE may interpret a case in which the value of the SRS request field is 0 as an operation corresponding to the first row of "00" in [Table 17] below, and may interpret a case in which the value of the SRS request field is 1 as an operation corresponding to the second row of "01" in [Table 17] below.
- If the higher layer signaling srs-RequestDCI-1-2 is configured as 2 and supplementaryUplink in ServingCellConfig is not configured, the UE may consider the SRS request field in DCI format 1_2 as 2 bits, and may interpret the 2 bit according to [Table 17] below.
- If the higher layer signaling srs-RequestDCI-1-2 is configured as 2 and supplementaryUplink in ServingCellConfig is configured, the UE may consider the SRS request field in DCI format 1_2 as 3 bits, interpret the first bit thereamong as indicating one of non-SUL or SUL, and interpret the remaining 2 bits according to [Table 17] below.

If supplementaryUplink in the higher layer signaling ServingCellConfig is not configured, the UE may interpret the higher layer signaling srs-RequestDCI-0-2 as the length of an SRS request field in DCI format 0_2. If supplementaryUplink in the higher layer signaling ServingCellConfig is configured, the UE may interpret the higher layer signaling srs-RequestDCI-0-2 as a value smaller by 1 than the length of the SRS request field in DCI format 0_2.
If supplementaryUplink in the higher layer signaling ServingCellConfig is not configured, the UE may perform interpretation related to the bit length of the SRS request field according to each configuration situation of srs-RequestDCI-0-2 below.

- If the higher layer signaling srs-RequestDCI-0-2 is not configured, the UE may consider the length of the SRS request field in DCI format 0_2 as 0 bits.
- If the higher layer signaling srs-RequestDCI-0-2 is configured as 1, the UE may consider the SRS request field in DCI format 0_2 as 1 bit, and the 1 bit may indicate one of the two values of [Table 18] below or one of the first two values of [Table 17] below.
- If the higher layer signaling srs-RequestDCI-0-2 is configured as 2, the UE may consider the SRS request field in DCI format 0_2 as 2 bits, and the 2 bits may indicate one of all the rows of [Table 17] below.

If supplementaryUplink in the higher layer signaling ServingCellConfig is configured, the UE may consider to add one bit to the first bit position of the SRS request field, and the added one bit may indicate one of non-SUL or SUL. Even if supplementary Uplink in the higher layer signaling ServingCellConfig is configured, when the higher layer signaling srs-RequestDCI-0-2 is not configured, the UE may consider, as 0, the bit length of the SRS request field in DCI format 0_2.
If supplementaryUplink in the higher layer signaling ServingCellConfig is not configured, the UE may interpret the higher layer signaling srs-RequestDCI-1-2 as the length of an SRS request field in DCI format 1_2. If supplementaryUplink in the higher layer signaling ServingCellConfig is configured, the UE may interpret the higher layer signaling srs-RequestDCI-1-2 as a value smaller by 1 than the length of the SRS request field in DCI format 1_2.
If supplementaryUplink in the higher layer signaling ServingCellConfig is not configured, the UE may perform interpretation related to the bit length of the SRS request field according to each configuration situation of srs-RequestDCI-1-2 below.

- If the higher layer signaling srs-RequestDCI-1-2 is not configured, the UE may consider the length of the SRS request field in DCI format 1_2 as 0 bits.
- If the higher layer signaling srs-RequestDCI-1-2 is configured as 1, the UE may consider the SRS request field in DCI format 1_2 as 1 bit, and the 1 bit may indicate one of the two values of [Table 18] below or one of the first two values of [Table 17] below.
- If the higher layer signaling srs-RequestDCI-1-2 is configured as 2, the UE may consider the SRS request field in DCI format 1_2 as 2 bits, and the 2 bits may indicate one of all the rows of [Table 17] below.

If supplementaryUplink in the higher layer signaling ServingCellConfig is configured, the UE may consider to add one bit to the first bit position of the SRS request field, and the added one bit may indicate one of non-SUL or SUL. Even if supplementaryUplink in the higher layer signaling ServingCellConfig is configured, when the higher layer signaling srs-RequestDCI-1-2 is not configured, the UE may consider, as 0, the bit length of the SRS request field in DCI format 1_2.

[Table 17]

| SRS request field value | One or more aperiodic SRS resource sets triggered by DCI format 0_1, 0_2, 1_1, or 1_2, and one or more aperiodic SRS resource sets triggered by DCI format 2_3 having the higher layer signaling srs-TPC-PDCCH-Group configured as typeB | One or more aperiodic SRS resource sets triggered by DCI format 2_3 having the higher layer signaling srs-TPC-PDCCH-Group configured as typeA |
|---|---|---|
| 00 | No aperiodic SRS resource set is triggered | No aperiodic SRS resource set is triggered |
| 01 | One or more SRS resource sets for which aperiodicSRS-ResourceTrigger in the higher layer signaling SRS-ResourceSet is configured as 1, or one entry in aperiodicSRS-ResourceTriggerList is configured as 1 In the case where the UE receives DCI formats 0_1, 0_2, 1_1, and 1_2, one or more SRS resource sets for which aperiodicSRS-ResourceTrigger in the higher layer signaling SRS-PosResourceSet is configured as 1, or one entry in aperiodicSRS-ResourceTriggerList is configured as 1 | One or more SRS resource sets in a first set including a plurality of serving cells configured by higher layer signaling, for which usage in the higher layer signaling SRS-ResourceSet is configured as antennaSwitching and resource Type is configured as aperiodic |
| 10 | One or more SRS resource sets for which aperiodicSRS-ResourceTrigger in the higher layer signaling SRS-ResourceSet is configured as 2, or one entry in aperiodicSRS-ResourceTriggerList is configured as 2 In the case where the UE receives DCI formats 0_1, 0_2, 1_1, and 1_2, one or more SRS resource sets for which aperiodicSRS-ResourceTrigger in the higher layer signaling SRS-PosResourceSet is configured as 2, or one entry in aperiodicSRS-ResourceTriggerList is configured as 2 | One or more SRS resource sets in a second set including a plurality of serving cells configured by higher layer signaling, for which usage in the higher layer signaling SRS-ResourceSet is configured as antennaSwitching and resource Type is configured as aperiodic |
| 11 | One or more SRS resource sets for which aperiodicSRS-ResourceTrigger in the higher layer signaling SRS-ResourceSet is configured as 3, or one entry in aperiodicSRS-ResourceTriggerList is configured as 3 In the case where the UE receives DCI formats 0_1, 0_2, 1_1, and 1_2, one or more SRS resource sets for which aperiodicSRS-ResourceTrigger in the higher layer signaling SRS-PosResourceSet is configured as 3, or one entry in aperiodicSRS-ResourceTriggerList is configured as 3 | One or more SRS resource sets in a third set including a plurality of serving cells configured by higher layer signaling, for which usage in the higher layer signaling SRS-ResourceSet is configured as antennaSwitching and resource Type is configured as aperiodic |

[Table 18]

| SRS request field value | One or more aperiodic SRS resource sets triggered by DCI formats 0_2 and 1_2 |
|---|---|
| 0 | No aperiodic SRS resource set is triggered |
| 1 | One or more SRS resource sets for which the higher layer signaling aperiodicSRS-ResourceTrigger is configured as 1, or one entry in aperiodicSRS-ResourceTriggerList is configured as 1 |

If an aperiodic SRS resource set is configured, i.e., if the RRC parameter resourceType in the corresponding SRS resource set is aperiodic, an associated CSI-RS may be indicated through an SRS request field in DCI format 0_1, 1_1, 0_2, or 1_2 (in the case of DCI format 0_2 or 1_2, the associated CSI-RS may be indicated only when an SRS request field exists in the corresponding DCI). In this case, aperiodicSRS-ResourceTrigger, AperiodicSRS-ResourceTriggerList, srs-ResourceSetId, and csi-RS, which are higher layer signaling, may be configured in the corresponding SRS resource set for the UE by the base station. The UE may define one or more SRS resource sets associated with the SRS request fields in DCI formats 0_1 and 1_1 through entries in the higher layer signaling srs-ResourceSetToAddModList, and may also define one or more SRS resource sets associated with the SRS request fields in DCI formats 0_2 and 1_2 through entries in the higher layer signaling srs-ResourceSetToAddModListDCI-0-2.

If an SRS resource set having usage configured as non-codebook is configured for the UE by the base station through higher layer signaling, the RRC parameter resourceType in the SRS resource set is aperiodic, and an associated CSI-RS configured in the same SRS resource set is also an aperiodic NZP CSI-RS, the UE may receive a triggering indication for the aperiodic associated CSI-RS from the base station through an SRS request field in DCI. The UE may interpret the triggering indication for the aperiodic associated CSI-RS from the base station through at least one combination of the following items.

- When the SRS request field in DCI format 0_1 or 1_1 is not "00" and the DCI is not cross-carrier scheduling or cross-BWP scheduling, the UE may expect to receive an indication of whether an aperiodic associated CSI-RS exists. For example, if an SRS resource set having usage configured as non-codebook is associated with an SRS request field value of "01," if the value of the higher layer signaling aperiodicSRS-ResourceTrigger is configured as 1, if one of the entries in aperiodicSRS-ResourceTriggerList is configured as 1, or if a value of "01" is indicated to the UE by the base station through the SRS request field in DCI format 0_1 or 1_1, the UE may interpret that an aperiodic associated CSI-RS has been triggered by the base station and transmitted to the UE, and may understand that an aperiodic associated CSI-RS exists.

- When the last two bits of the SRS request field in DCI format 0_1 or 1_1 are not "00" and the DCI is not cross-carrier scheduling or cross-BWP scheduling, the UE may expect to receive an indication of whether an aperiodic associated CSI-RS exists. If supplementaryUplink in the higher layer signaling ServingCellConfig is not configured for the UE, the UE may consider that the SRS request field in DCI format 0_1 or 1_1 is 2 bits. If supplementaryUplink in the higher layer signaling ServingCellConfig is configured for the UE, the UE may consider that the SRS request field in DCI format 0_1 or 1_1 is 3 bits. If the SRS request field is 3 bits, the UE may interpret the first bit among the 3 bits as indicating one of non-SUL or SUL, and interpret the subsequent two bits, based on [Table 17] above.

- The UE may interpret an SRS request field in DCI format 0_2 or 1_2 to correspond to at least one combination of the following according to a configuration value of the higher layer signaling srs-RequestDCI-0-2 or srs-RequestDCI-1-2.

  * If a value of 1 is configured for the UE as srs-RequestDCI-0-2 or srs-RequestDCI-1-2, and supplementaryUplink in the higher layer signaling ServingCellConfig is not configured, the UE may consider that the SRS request field in DCI format 0_2 or 1_2 is 1 bit. When the 1 bit is not "0" and the DCI is not cross-carrier scheduling or cross-BWP scheduling, the UE may expect to receive an indication of whether an aperiodic associated CSI-RS exists. For example, if an SRS resource set having usage configured as non-codebook is associated with an SRS request field value of "1," if the value of the higher layer signaling aperiodicSRS-ResourceTrigger is configured as 1, if one of the entries in aperiodicSRS-ResourceTriggerList is configured as 1, or if a value of "1" is indicated to the UE by the base station through the SRS request field in DCI format 0_2 or 1_2, the UE may interpret that an aperiodic associated CSI-RS has been triggered by the base station and transmitted to the UE, and may understand that an aperiodic associated CSI-RS exists.

  * If a value of 1 is configured for the UE as srs-RequestDCI-0-2 or srs-RequestDCI-1-2, and supplementaryUplink in the higher layer signaling ServingCellConfig is configured, the UE may consider that the SRS request field in DCI format 0_2 or 1_2 is 2 bits. When the last one bit of the field is not "0" and the DCI is not cross-carrier scheduling or cross-BWP scheduling, the UE may expect to receive an indication of whether an aperiodic associated CSI-RS exists. For example, if an SRS resource set having usage configured as non-codebook is associated with "1" that is the value of the last one bit of the SRS request field, if the value of the higher layer signaling aperiodicSRS-ResourceTrigger is configured as 1, if one of the entries in aperiodicSRS-ResourceTriggerList is configured as 1, or if a value of "1" is indicated to the UE by the base station as the last one bit of the SRS request field in DCI format 0_2 or 1_2, the UE may interpret that an aperiodic associated CSI-RS has been triggered by the base station and transmitted to the UE, and may understand that an aperiodic associated CSI-RS exists.

  * If a value of 2 is configured for the UE as srs-RequestDCI-0-2 or srs-RequestDCI-1-2, and supplementaryUplink in the higher layer signaling ServingCellConfig is not configured, the UE may consider that the SRS request field in DCI format 0_2 or 1_2 is 2 bits. When the field is not "00" and the DCI is not cross-carrier scheduling or cross-BWP scheduling, the UE may expect to receive an indication of whether an aperiodic associated CSI-RS exists. For example, if an SRS resource set having usage configured as non-codebook is associated with an SRS request field value of "01," if the value of the higher layer signaling aperiodicSRS-ResourceTrigger is configured as 1, if one of the entries in aperiodicSRS-ResourceTriggerList is configured as 1, or if a value of "01" is indicated to the UE by the base station through the SRS request field in DCI format 0_2 or 1_2, the UE may interpret that an aperiodic associated CSI-RS has been triggered by the base station and transmitted to the UE, and may understand that an aperiodic associated CSI-RS exists.

* If a value of 2 is configured for the UE as srs-RequestDCI-0-2 or srs-RequestDCI-1-2, and supplementaryUplink in the higher layer signaling ServingCellConfig is configured, the UE may consider that the SRS request field in DCI format 0_2 or 1_2 is 3 bits. When the last two bits of the field are not "00" and the DCI is not cross-carrier scheduling or cross-BWP scheduling, the UE may expect to receive an indication of whether an aperiodic associated CSI-RS exists. For example, if an SRS resource set having usage configured as non-codebook is associated with "01" that is the value of the last two bits of the SRS request field, if the value of the higher layer signaling aperiodicSRS-ResourceTrigger is configured as 1, if one of the entries in aperiodicSRS-ResourceTriggerList is configured as 1, or if a value of "01" is indicated to the UE by the base station through the last two bits of the SRS request field in DCI format 0_2 or 1_2, the UE may interpret that an aperiodic associated CSI-RS has been triggered by the base station and transmitted to the UE, and may understand that an aperiodic associated CSI-RS exists.

The cross-carrier scheduling may refer to a case where a scheduling cell for receiving DCI and a cell for performing transmission or reception through scheduling are different from each other. The cross-BWP scheduling may refer to a case where a bandwidth part for receiving DCI and a bandwidth part for performing transmission or reception through scheduling are different from each other.

In this case, the UE may understand that a corresponding aperiodic associated CSI-RS is located in the same slot as DCI including an SRS request field having triggered the aperiodic associated CSI-RS.

If the UE receives DCI 1060 triggering an aperiodic associated CSI-RS 1065 in slot 0, the UE may expect that the aperiodic associated CSI-RS 1065 which may be triggered through the DCI exists in the same slot 0. In addition, even if the UE expects that the aperiodic associated CSI-RS 1065 exists in the same slot 0, the UE may define a location at which the aperiodic associated CSI-RS 1065 may exist, within a period from the first symbol in which the DCI 1060 is transmitted to the last symbol of slot 0 (1070).

If DCI triggering an aperiodic associated CSI-RS 1085 is repeatedly transmitted (1075 and 1080), that is, if two DCIs are repeated PDCCH candidates transmitted in two different search spaces configured to have the same searchspacelinkingID, the UE may expect that the aperiodic associated CSI-RS 1085 exists in slot 1 in which the repeatedly transmitted DCIs 1075 and 1080 exist. In addition, even if the UE expects that the aperiodic associated CSI-RS 1085 exists in the same slot 1, the UE may define a location at which the aperiodic associated CSI-RS 1085 may exist, within a period from the first symbol of the DCI 1080, among the repeated two DCIs 1075 and 1080, which starts later in time, to the last symbol of slot 1 (1090).

If an SRS resource set having usage configured as non-codebook is configured for the UE by the base station through higher layer signaling, the RRC parameter resourceType in the SRS resource set is aperiodic, and an associated CSI-RS configured in the same SRS resource set is also an aperiodic NZP CSI-RS, and if the higher layer signaling minimumSchedulingOffsetK0 is configured for the UE for an activated downlink bandwidth part, and a corresponding configuration value is greater than 0, the UE may not expect to receive scheduling DCI having an SRS request field value of "00."

If an SRS resource set having usage configured as non-codebook is configured for the UE by the base station through higher layer signaling, the RRC parameter resourceType in the SRS resource set is aperiodic, and an associated CSI-RS configured in the same SRS resource set is also an aperiodic NZP CSI-RS, and if the higher layer signaling minimumSchedulingOffsetK0 is configured for the UE for an activated downlink bandwidth part, and a corresponding configuration value is greater than 0, the UE may perform a DCI reception operation considering at least one combination of the following items.

- If the UE receives DCI format 0_1 or 1_1, the UE may not expect to receive a value other than "00" as an SRS request field value in the DCI.

- If the UE receives DCI format 0_1 or 1_1, and if supplementaryUplink in the higher layer signaling ServingCellConfig is configured for the UE, the UE may not expect to receive a value other than "00" for the last two bits of an SRS request field in the DCI. If supplementaryUplink in the higher layer signaling ServingCellConfig is not configured for the UE, the UE may not expect to receive a value other than "00" for the two bits of the SRS request field in the DCI.

- If the UE receives DCI format 0_2 or 1_2, and if a value of 1 is configured for the UE as srs-RequestDCI-0-2 or srs-RequestDCI-1-2, and supplementaryUplink in the higher layer signaling ServingCellConfig is not configured, the UE may consider that an SRS request field in DCI format 0_2 or 1_2 is 1 bit and may not expect to receive a value other than "0" as the 1 bit.

- If the UE receives DCI format 0_2 or 1_2, and if a value of 1 is configured for the UE as srs-RequestDCI-0-2 or srs-RequestDCI-1-2, and supplementaryUplink in the higher layer signaling ServingCellConfig is configured, the UE may consider that an SRS request field in DCI format 0_2 or 1_2 is 2 bits and may not expect to receive a value other than "0" as the last one bit of the field.
- If the UE receives DCI format 0_2 or 1_2, and if a value of 2 is configured for the UE as srs-RequestDCI-0-2 or srs-RequestDCI-1-2, and supplementaryUplink in the higher layer signaling ServingCellConfig is not configured, the UE may consider that an SRS request field in DCI format 0_2 or 1_2 is 2 bits and may not expect to receive a value other than "00" as the field.
- If the UE receives DCI format 0_2 or 1_2, and if a value of 2 is configured for the UE as srs-RequestDCI-0-2 or srs-RequestDCI-1-2, and supplementaryUplink in the higher layer signaling ServingCellConfig is configured, the UE may consider that an SRS request field in DCI format 0_2 or 1_2 is 3 bits and may not expect to receive a value other than "00" as the last two bits of the field.

If an aperiodic associated CSI-RS associated with an aperiodic SRS resource is configured for the UE, the UE may not expect that the higher layer signaling qcl-Type is configured as typeD for all TCI states configured in a scheduled cell. That is, the case may refer to a case where all the TCI states configured in a scheduled cell may not include QCL-TypeD or the UE operates in FR1.

For the above operations, the UE may report a corresponding UE capability. For example, the UE may report a UE capability indicating that the UE supports an aperiodic associated CSI-RS. For example, the UE may report a UE capability indicating that the UE is capable of triggering an aperiodic associated CSI-RS through DCI format 0_1, 1_1, 0_2, or 1_2. For example, the UE may report a UE capability indicating that the UE supports supplementaryUplink. For example, the UE may report a UE capability indicating that the UE supports minimumSchedulingOffsetK0.

<Second embodiment: MC-DCI-based aperiodic associated CSI-RS triggering method>

A method of triggering aperiodic associated CSI-RS by a UE having received MC-DCI according to an embodiment of the disclosure is as follows. This embodiment may be combined with other embodiments. MC-DCI may indicate, to the UE, scheduling information for multiple cells through one DCI, and a DCI format may be 0_3 when PUSCH transmission is scheduled and 1_3 when PDSCH reception is scheduled. In the following, DCI format 0_3 or 1_3 may be considered as a type of MC-DCI.

The UE may define an SRS request field in DCI format 0_3 or 1_3 as follows.

- The UE may define the length of an SRS request field in each of DCI format 0_3 and 1_3 as a corresponding number of bits capable of representing the number of entries configured in the higher layer signaling srs-RequestListDCI-0-3 and srs-RequestListDCI-1-3. For example, if srs-RequestListDCI-0-3 and srs-RequestListDCI-1-3 include 16 and 8 entries, respectively, the lengths of the SRS request fields in DCI format 0_3 and 1_3 may be

$$\lceil \log_2(16) \rceil = 4 \text{ bits and } \lceil \log_2(8) \rceil = 3 \text{ bits, respectively.}$$

- Each entry in the higher layer signaling srs-RequestListDCI-0-3 and srs-RequestListDCI-1-3 may include "SRS request" indexes for respective cells in a set of scheduled cells, and "SRS request" indexes, for all the scheduled cells, corresponding to the number of the one or more cells may be sorted in ascending order according to the indexes of the scheduled cells. Each "SRS request" index may be defined as follows.

  * If supplementary Uplink in the higher layer signaling ServingCellConfig is not configured for the UE, an "SRS request" index for each scheduled cell may be 2 bits.
  * If supplementary Uplink in the higher layer signaling ServingCellConfig is configured for the UE, an "SRS request" index for each scheduled cell may be 3 bits. The UE may interpret the first bit among the 3 bits as indicating one of non-SUL or SUL, and interpret the subsequent two bits, based on [Table 17] above.

As described above, the UE may configure an SRS request field in DCI format 0_3 or 1_3 as shown in [Table 19] below. As in [Table 19] below, the UE may map an entry configured in the higher layer signaling srs-RequestListDCI-0-3 or srs-RequestListDCI-1-3 to each index value of the SRS request field.

- For example, if the number of cell sets indicatable by DCI format 0_3 is one, and four cells exist in the corresponding cell set, a particular entry in srs-RequestListDCI-0-3 may be configured to include four "SRS request" indexes for the UE by the base station through higher layer signaling. If the higher layer signaling supplementaryUplink is not configured for the UE in ServingCellConfig for each of the four cells in the cell set, the UE may consider that the four "SRS request" indexes are each 2 bits, and the particular entry in srs-RequestListDCI-0-3 may be configured to be {'00','01','11','10'}. The value of "00" of the first "SRS request" index in the particular entry in srs-RequestListDCI-0-3 corresponds to a cell having the lowest index in the cell set, the value of "01" of the second "SRS request" index may correspond to a cell having the second lowest index in the cell set, and in a similar manner, the values of "11" and "10" of the third and fourth "SRS request" indexes may be values corresponding to cells having the third and fourth lowest indexes in the cell set.

- For example, if the number of cell sets indicatable by DCI format 1_3 is one, and four cells exist in the corresponding cell set, a particular entry in srs-RequestListDCI-1-3 may be configured to include four "SRS request" indexes for the UE by the base station through higher layer signaling. If the higher layer signaling supplementaryUplink is not configured for the UE in ServingCellConfig for a cell having the lowest index and a cell having the second lowest index in the cell set and the higher layer signaling supplementaryUplink is configured in ServingCellConfig for cells having the third and fourth lowest indexes, the UE may consider that the first two "SRS request" indexes are each 2 bits and the remaining two "SRS request" indexes are each 3 bits, and the particular entry in srs-RequestListDCI-1-3 may be configured to be {'00','01','011','110'}. The value of "00" of the first "SRS request" index in the particular entry in srs-RequestListDCI-1-3 corresponds to the cell having the lowest index in the cell set, the value of "01" of the second "SRS request" index may correspond to the cell having the second lowest index in the cell set, and in a similar manner, the values of "011" and "110" of the third and fourth "SRS request" indexes may be values corresponding to the cells having the third and fourth lowest indexes in the cell set.

[Table 19]

| Index value in SRS request field | One or more triggered aperiodic SRS resource sets |
|---|---|
| 0 | First entry in srs-RequestListDCI-0-3 or srs-RequestListDCI-1-3 |
| 1 | Second entry in srs-RequestListDCI-0-3 or srs-RequestListDCI-1-3 |
| 2 | Third entry in srs-RequestListDCI-0-3 or srs-RequestListDCI-1-3 |
| ... | ... |
| 15 | 16th entry in srs-RequestListDCI-0-3 or srs-RequestListDCI-1-3 |

If an aperiodic SRS resource set is configured, i.e., if the RRC parameter resource Type in the corresponding SRS resource set is aperiodic, an associated CSI-RS may be indicated through an SRS request field in DCI format 0_3 or 1_3. In this case, aperiodicSRS-ResourceTrigger, aperiodicSRS-ResourceTriggerList, srs-ResourceSetId, and csi-RS, which are higher layer signaling, may be configured in the corresponding SRS resource set for the UE by the base station. The UE may define one or more SRS resource sets associated with the SRS request fields in DCI formats 0_3 and 1_3 through entries in the higher layer signaling srs-ResourceSetToAddModList, or may define same through entries in srs-ResourceSetToAddModListDCI-0-2. The UE may define one or more SRS resource sets associated with an "SRS request" index included in each entry in srs-RequestListDCI-0-3 or srs-RequestListDCI-1-3 that may be indicated by the SRS request fields in DCI formats 0_3 and 1_3, through the entries in srs-ResourceSetToAddModList or srs-Resource-SetToAddModListDCI-0-2, which is higher layer signaling within each cell that may be scheduled by DCI formats 0_3 and 1_3 or within each bandwidth part in each cell.

If an SRS resource set having usage configured as non-codebook is configured for the UE by the base station through higher layer signaling, the RRC parameter resourceType in the SRS resource set is aperiodic, and an associated CSI-RS configured in the same SRS resource set is also an aperiodic NZP CSI-RS, the UE may receive a triggering indication for the aperiodic associated CSI-RS from the base station through an SRS request field in DCI. The UE may interpret the triggering indication for the aperiodic associated CSI-RS from the base station through DCI formats 0_3 and 1_3 by using at least one combination of the following items.

- [Method 2-1] When the SRS request field in DCI format 0_3 or 1_3 is not "00" and the DCI is not cross-carrier scheduling or cross-BWP scheduling, the UE may expect to receive an indication of whether an aperiodic associated CSI-RS exists. For example, if an SRS resource set having usage configured as non-codebook is associated with an SRS request field value of "01," if the value of the higher layer signaling aperiodicSRS-ResourceTrigger is configured as 1, if one of the entries in aperiodicSRS-ResourceTriggerList is configured as 1, or if a value of "01" is indicated to the UE by the base station through the SRS request field in DCI format 0_3 or 1_3, the UE may interpret that an aperiodic associated CSI-RS has been triggered by the base station and transmitted to the UE, and may understand that an aperiodic associated CSI-RS exists. In this case, the UE may consider only the case in which the SRS request field in DCI format 0_3 or 1_3 is 2 bits, and such a case may refer to a case in which the number of entries in srs-RequestListDCI-0-3 or srs-RequestListDCI-1-3 is 3 or more and 4 or less. In this case, when DCI format 0_3 or 1_3 does not perform cross-carrier scheduling or cross-BWP scheduling, that is, scheduling information for only the same cell as a cell in which DCI format 0_3 or 1_3 is received may be received through DCI format 0_3 or 1_3, and scheduling information for a cell different from the cell in which DCI is received is not included, and when the SRS request field in DCI format 0_3 or 1_3 is not "00," the UE may expect that whether an aperiodic associated CSI-RS exists is indicated for the same cell as the cell in which DCI format 0_3 or 1_3 is received.

- [Method 2-2] When, in a particular entry in srs-RequestListDCI-0-3 or srs-RequestListDCI-1-3 that may be indicated through the SRS request field in DCI format 0_3 or 1_3, two bits of an "SRS request" index corresponding to the same cell as the cell in which DCI format 0_3 or 1_3 is received or the last two bits among all the bits of the "SRS request" index are not "00," and the DCI format 0_3 or 1_3 does not perform cross-carrier scheduling or cross-BWP scheduling, that is, scheduling information for only the same cell as the cell in which DCI format 0_3 or 1_3 is received may be received through DCI format 0_3 or 1_3, and scheduling information for a cell different from the cell in which DCI is received is not included, the UE may expect that whether an aperiodic associated CSI-RS exists is indicated for the same cell as the cell in which DCI format 0_3 or 1_3 is received. Therefore, even for MC-DCI, when an aperiodic associated CSI-RS is triggered, a similar manner as for DCI format 0_1, 1_1, 0_2, or 1_2 is used such that only when only scheduling for a cell in which DCI is received exists with no scheduling for multiple cells, and two bits of an "SRS request" index corresponding to the cell or the last two bits among all the bits of the "SRS request" index in a particular entry in srs-RequestListDCI-0-3 or srs-RequestListDCI-1-3 indicated through the SRS request field are not "00," the UE may interpret that an aperiodic associated CSI-RS has been triggered by the base station and transmitted to the UE, and may understand that an aperiodic associated CSI-RS exists. In addition, with respect to the same cell as the cell in which DCI format 0_3 or 1_3 is received, if a value greater than 0 is configured for the higher layer signaling minimumSchedulingOffsetK0, the UE may not expect that a value other than "00" is received as two bits of an "SRS request" index in the SRS request field or the last two bits among all the bits of the "SRS request" index, the "SRS request" index corresponding to a corresponding cell which may be indicated in a particular entry in srs-RequestListDCI-0-3 or srs-RequestListDCI-1-3 which may be indicated through the SRS request field in DCI format 0_3 or 1_3. In addition, the UE may expect that the cell which may be indicated in a particular entry in srs-RequestListDCI-0-3 or srs-RequestListDCI-1-3 which may be indicated through the SRS request field in DCI format 0_3 or 1_3 is limited to include only the same cell as the cell in which DCI format 0_3 or 1_3 is received. In addition, the UE may expect that the cell which may be indicated in a particular entry in srs-RequestListDCI-0-3 or srs-RequestListDCI-1-3 which may be indicated through the SRS request field in DCI format 0_3 or 1_3 may include other cells as well as the same cell as the cell in which DCI format 0_3 or 1_3 is received. With respect to cells different from the cell in which DCI format 0_3 or 1_3 is received, even if a value greater than 0 is configured for the higher layer signaling minimumSchedulingOffsetK0 for each of corresponding cells, since an aperiodic associated CSI-RS is triggered only for the cell in which DCI format 0_3 or 1_3 is received, the UE may expect that there is no restriction on receiving a value of "00" or a value other than "00" as an "SRS request" index corresponding to each of the cells.

- [Method 2-3] When, in a particular entry in srs-RequestListDCI-0-3 or srs-RequestListDCI-1-3 that may be indicated through the SRS request field in DCI format 0_3 or 1_3, two bits of an "SRS request" index corresponding to the same cell as the cell in which DCI format 0_3 or 1_3 is received or the last two bits among all the bits of the "SRS request" index are not "00," the UE may expect that whether an aperiodic associated CSI-RS exists is indicated for the same cell as the cell in which DCI format 0_3 or 1_3 is received. In this case, the UE may receive scheduling information for multiple cells through the DCI format 0_3 or 1_3. Therefore, according to the original purpose of MC-DCI, DCI format 0_3 or 1_3 may include scheduling information for multiple cells. However, if the base station triggers an aperiodic associated CSI-RS for the UE through DCI format 0_3 or 1_3, the base station may trigger an aperiodic associated CSI-RS for only the cell in which the DCI is received, in a similar manner as for DCI format 0_1, 1_1, 0_2, or 1_2. Therefore, only when two bits of an "SRS request" index corresponding to the cell in which DCI is received or the last two bits among all the bits of the "SRS request" index in a particular entry in srs-RequestListDCI-0-3 or srs-RequestListDCI-1-3 indicated through the SRS request field are not "00," the UE may interpret that an aperiodic associated CSI-RS has been triggered by the base station and transmitted to the UE, and may understand that an aperiodic associated CSI-RS exists. In addition, with respect to the same cell as the cell in which DCI format 0_3 or 1_3 is received, if a value greater than 0 is configured for the higher layer signaling minimumSchedulingOffsetK0, the UE may not expect that a value other than "00" is received as two bits of an "SRS request" index in the SRS request field or the last two bits among all the bits of the "SRS request" index, the "SRS request" index corresponding to the cell may be indicated in a particular entry in srs-RequestListDCI-0-3 or srs-RequestListDCI-1-3 which may be indicated through the SRS request field in DCI format 0_3 or 1_3. With respect to cells different from the cell in which DCI format 0_3 or 1_3 is received among cells indicatable in a particular entry in srs-RequestListDCI-0-3 or srs-RequestListDCI-1-3 which may be indicated through the SRS request field in DCI format 0_3 or 1_3, even if a value greater than 0 is configured for the higher layer signaling minimumSchedulingOffsetK0 for each of corresponding cells, since an aperiodic associated CSI-RS is triggered only for the cell in which DCI format 0_3 or 1_3 is received, and thus the UE may expect that there is no restriction on receiving a value of "00" or a value other than "00" as an "SRS request" index corresponding to each of the cells.

- [Method 2-4] When, in a particular entry in srs-RequestListDCI-0-3 or srs-RequestListDCI-1-3 that may be indicated through the SRS request field in DCI format 0_3 or 1_3, two bits of an "SRS request" index corresponding to each cell scheduled through DCI format 0_3 or 1_3 or the last two bits among all the bits of the "SRS request" index corresponding to each cell are not "00," the UE may expect that whether an aperiodic associated CSI-RS exists is indicated for each corresponding cell. In this case, the UE may receive scheduling information for multiple cells through the DCI format 0_3 or 1_3. Therefore, according to the original purpose of MC-DCI, DCI format 0_3 or 1_3 may include scheduling information for multiple cells, and when two bits of an "SRS request" index for each of the multiple cells or the last two bits among all the bits of the "SRS request" index are not "00," an aperiodic associated CSI-RS may be triggered for each cell. Therefore, only when two bits of an "SRS request" index corresponding to each scheduled cell or the last two bits among all the bits of the "SRS request" index in a particular entry in srs-RequestListDCI-0-3 or srs-RequestListDCI-1-3 indicated through the SRS request field are not "00," the UE may interpret that an aperiodic associated CSI-RS has been triggered for each cell by the base station and transmitted to the UE, and may understand that an aperiodic associated CSI-RS exists. In addition, with respect to each cell which may be scheduled through DCI format 0_3 or 1_3, in a case of a cell for which a value greater than 0 is configured for the higher layer signaling minimumSchedulingOffsetK0, the UE may not expect that a value other than "00" is received as two bits of an "SRS request" index in the SRS request field or the last two bits among all the bits of the "SRS request" index, the "SRS request" index corresponding to the cell which may be indicated in a particular entry in srs-RequestListDCI-0-3 or srs-RequestListDCI-1-3 which may be indicated through the SRS request field in DCI format 0_3 or 1_3.

The cross-carrier scheduling may refer to a case where a scheduling cell for receiving DCI and a cell for performing transmission or reception through scheduling are different from each other, and a case where a cell for receiving MC-DCI and one or more cells scheduled by the MC-DCI are different from each other. For example, if the UE has received MC-DCI in cell 1, and has received scheduling information for cell 1 and cell 2 through the MC-DCI, the UE may consider this scheduling as cross-carrier scheduling. For example, if the UE has received MC-DCI in cell 1, and has received scheduling information for cell 2 and cell 3 through the MC-DCI, the UE may consider this scheduling as cross-carrier scheduling.

The cross-BWP scheduling may refer to a case where a bandwidth part for receiving DCI and a bandwidth part for performing transmission or reception through scheduling are different from each other.

With respect to an aperiodic associated CSI-RS which may be triggered through MC-DCI (i.e., DCI format 0_3 or 1_3), at least one combination of [Method 2-1] to [Method 2-4] above may be notified to the UE by the base station through at least one combination of higher layer signaling, MAC-CE signaling, and L1 signaling or may be fixedly defined in a specification.

For the above operations, the UE may report a corresponding UE capability to the base station.

- For example, the UE may report a UE capability indicating that the UE supports an aperiodic associated CSI-RS.
- For example, the UE may report a UE capability indicating that the UE is capable of triggering an aperiodic associated CSI-RS through DCI format 0_3 or 1_3.
- For example, the UE may report a UE capability indicating that the UE supports supplementaryUplink.
- For example, the UE may report a UE capability indicating that the UE supports minimumSchedulingOffsetK0.
- For example, when multiple cells are scheduled through MC-DCI, the UE may report, to the base station, a UE capability indicating that the UE supports the same value of minimumSchedulingOffsetK0 for all the scheduled multiple cells.
- For example, when multiple cells are scheduled through MC-DCI, the UE may report, to the base station, a UE capability indicating that the UE supports the same or different values of minimumSchedulingOffsetK0 for the scheduled multiple cells.
- For example, when multiple cells are scheduled through MC-DCI, the UE may report, to the base station, a UE capability indicating that the UE supports that minimumSchedulingOffsetK0 is not configured for all the scheduled multiple cells. This UE capability may also indicate that MC-DCI scheduling and a minimumSchedulingOffsetK0 configuration are not supported simultaneously.
- For example, the UE may report, to the base station, a UE capability indicating that the UE is capable of supporting at least one combination of [Method 2-1] to [Method 2-4] above.
- If [Method 2-4] above is supported, the UE may independently define and support a UE capability for a maximum number of aperiodic associated CSI-RS resources simultaneously receivable in different cells and a maximum number of aperiodic associated CSI-RS ports, or may reuse the existing UE capability for a maximum number of activatable CSI-RS resources and a maximum number of CSI-RS ports.
- For example, the UE may report a UE capability indicating that the UE is capable of triggering, through DCI format 0_3 or 1_3, an aperiodic associated CSI-RS only for the same cell as the cell in which the DCI is received.

- For example, the UE may report a UE capability indicating that the UE is capable of triggering, through DCI format 0_3 or 1_3, an aperiodic associated CSI-RS for each cell scheduled by the DCI.

<Third embodiment: Reception location at time of MC-DCI-based aperiodic associated CSI-RS triggering>

As an embodiment of the disclosure, a location at which an aperiodic associated CSI-RS is triggered when the UE triggers the aperiodic associated CSI-RS, based on MC-DCI is described. This embodiment may be combined with other embodiments.

The UE may define scheduling scenarios possible through DCI format 0_3 or 1_3 as the following two cases.

[Scheduling situation 1]

The UE may receive, through DCI format 0_3 or 1_3, PUSCH or PDSCH scheduling for one or more cells including the cell in which the DCI is received. The cell in which the DCI is received may be referred to as a scheduling cell, and a cell to which PDSCH reception scheduling or PUSCH transmission scheduling information is applied through the DCI may be referred to as a scheduled cell. In this case, the UE may expect that multiple scheduled cells includes the same cell as the scheduling cell, and may expect that all the scheduled cells have the same subcarrier spacing. That is, the UE may expect that all the scheduled cells and the scheduling cell have the same subcarrier spacing.

[Scheduling situation 2]

The UE may receive, through DCI format 0_3 or 1_3, PUSCH or PDSCH scheduling for one or more cells except for the cell in which the DCI is received. In this case, the UE may expect that multiple scheduled cells do not include the same cell as the scheduling cell, and may expect that all the scheduled cells have the same subcarrier spacing. Therefore, all the scheduled cells may have the same subcarrier spacing, but the scheduling cell and all the scheduled cells are not required to necessarily have the same subcarrier spacing. For example, the scheduling cell may have a 15 kHz subcarrier, while all the scheduled cells may have a 30 kHz subcarrier. For example, the scheduling cell and all the scheduled cells may all have a 15 kHz subcarrier. For example, the scheduling cell may have a 30 kHz subcarrier, while all the scheduled cells may have a 15 kHz subcarrier.

When an aperiodic associated CSI-RS is triggered through DCI format 0_3 or 1_3, the UE may define the location of the aperiodic associated CSI-RS as follows.

If the UE receives scheduling information as in the above [Scheduling situation 1] through DCI format 0_3 or 1_3, the UE may expect that an aperiodic associated CSI-RS exists in the slot in which DCI format 0_3 or 1_3 is received, with respect to aperiodic associated CSI-RS triggering definable through at least one combination of the above [Method 2-1] to [Method 2-4]. That is, the UE may expect that, in the slot in which DCI format 0_3 or 1_3 is received, from the first symbol of the DCI to the last symbol of the slot, an aperiodic associated CSI-RS triggered for each cell exists. This is because all scheduled cell have the same subcarrier spacing as the scheduling cell.

If the UE receives scheduling information as in the above [Scheduling situation 2] through DCI format 0_3 or 1_3, the location of an aperiodic associated CSI-RS may differ according to which method among the above [Method 2-1] to [Method 2-4] is used by the UE to trigger the aperiodic associated CSI-RS.

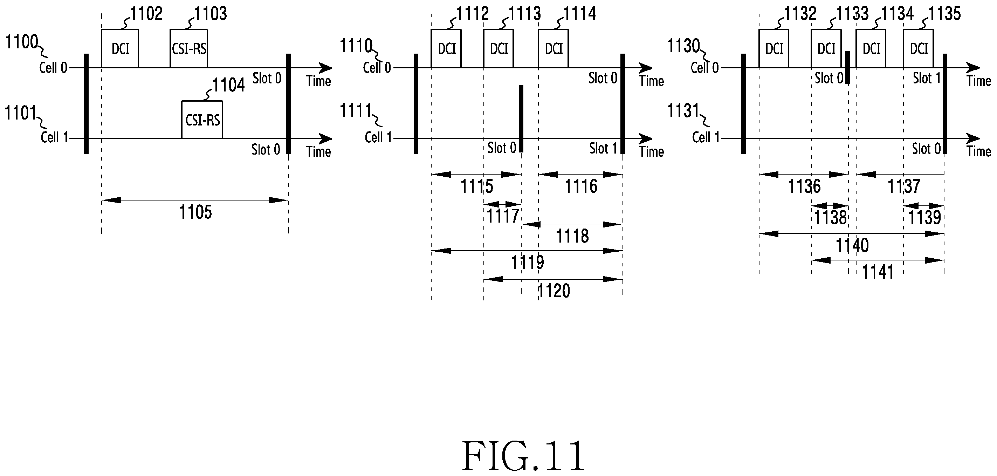

FIG. 11 is a diagram illustrating a possible location at which an aperiodic associated CSI-RS may exist for each MC-DCI scheduling situation according to an embodiment of the disclosure.

If a scheduling cell 1100 and scheduled cell 1100 and 1101 have all the same subcarrier spacing through DCI format 0_3 or 1_3 as in a specific situation such as the above [Scheduling situation 1] and [Scheduling situation 2], the UE may expect that aperiodic associated CSI-RSs 1103 and 1104 triggered through DCI format 0_3 or 1_3 1102 exists in the same slot as the DCI format 0_3 or 1_3 received by the UE. That is, a period from the first symbol of the DCI received by the UE to the last symbol of the corresponding slot may be a location at which an aperiodic associated CSI-RS may exist (1105).

If the subcarrier spacing of a scheduling cell 1100 is half a scheduled cell 1111 through DCI format 0_3 or 1_3 as in a specific situation such as the above [Scheduling situation 2] (e.g., the subcarrier spacing of the scheduling cell is 15 kHz, and the subcarrier spacing of the scheduled cell is 30 kHz), the UE may determine the location of an aperiodic associated CSI-RS through at least one combination of the following items.

[Method 3-1]

- If the UE receives non-repeated DCI format 0_3 or 1_3, the UE may expect that an aperiodic associated CSI-RS exists at a slot location within a scheduled cell overlapping with the reception location of the DCI.

  * For example, if the UE receives DCI at such a location as "1112", the UE may expect an aperiodic associated CSI-RS triggering location as "1115".
  * For example, if the UE receives DCI at such a location as "1113", the UE may expect an aperiodic associated CSI-RS triggering location as "1117".
  * For example, if the UE receives DCI at such a location as "1114", the UE may expect an aperiodic associated CSI-RS triggering location as "1116".

  - If DCI format 0_3 or 1_3 is repeatedly transmitted, the UE may expect that an aperiodic associated CSI-RS exists in a slot location within a scheduled cell overlapping with the reception location of DCI, among the repeatedly transmitted two DCIs, which starts to be transmitted later in time.

  * For example, if the UE receives two repeatedly transmitted DCIs at such locations as "1112" and "1113", respectively, the UE may expect an aperiodic associated CSI-RS triggering location as "1117".
  * For example, if the UE receives two repeatedly transmitted DCIs at such locations as "1112" and "1114", respectively, the UE may expect an aperiodic associated CSI-RS triggering location as "1116".

[Method 3-2]

- If the UE receives non-repeated DCI format 0_3 or 1_3, the UE may expect that an aperiodic associated CSI-RS exists at a last slot location within a scheduled cell overlapping with a slot of a scheduling cell in which the DCI is received.

  * For example, if the UE receives DCI at a location such as (1112) or (1113), the UE may expect an aperiodic associated CSI-RS triggering location as (1118).
  * For example, if the UE receives DCI at a location such as (1114), the UE may expect an aperiodic associated CSI-RS triggering location as (1116).

- If DCI format 0_3 or 1_3 is repeatedly transmitted, the UE may expect that an aperiodic associated CSI-RS exists at a last slot location within a scheduled cell overlapping with a slot of a scheduling cell in which DCI, among the repeatedly transmitted two DCIs, which starts to be transmitted later in time, is received.

  * For example, if the UE receives two repeatedly transmitted DCIs at such locations as "1112" and "1113", respectively, the UE may expect an aperiodic associated CSI-RS triggering location as "1118".
  * For example, if the UE receives two repeatedly transmitted DCIs at such locations as "1112" and "1114", respectively, the UE may expect an aperiodic associated CSI-RS triggering location as "1116".

[Method 3-3]

- If the UE receives non-repeated DCI format 0_3 or 1_3, the UE may expect that an aperiodic associated CSI-RS exists at an entire slot location within a scheduled cell overlapping with a slot of a scheduling cell in which the DCI is received.

  * For example, if the UE receives DCI at such a location as "1112", the UE may expect an aperiodic associated CSI-RS triggering location as "1119".
  * For example, if the UE receives DCI at such a location as "1113", the UE may expect an aperiodic associated CSI-RS triggering location as "1120".
  * For example, if the UE receives DCI at such a location as "1114", the UE may expect an aperiodic associated CSI-RS triggering location as "1116".

- If DCI format 0_3 or 1_3 is repeatedly transmitted, the UE may expect that an aperiodic associated CSI-RS exists at an entire slot location within a scheduled cell overlapping with a slot of a scheduling cell in which DCI, among the repeatedly transmitted two DCIs, which starts to be transmitted later in time, is received.

* For example, if the UE receives two repeatedly transmitted DCIs at such locations as "1112" and "1113", respectively, the UE may expect an aperiodic associated CSI-RS triggering location as "1120".
* For example, if the UE receives two repeatedly transmitted DCIs at such locations as "1112" and "1114", respectively, the UE may expect an aperiodic associated CSI-RS triggering location as "1116".

If the subcarrier spacing of a scheduling cell 1130 is two times a scheduled cell 1131 through DCI format 0_3 or 1_3 as in a specific situation such as the above [Scheduling situation 2] (e.g., the subcarrier spacing of the scheduling cell is 30 kHz, and the subcarrier spacing of the scheduled cell is 15 kHz), the UE may determine the location of an aperiodic associated CSI-RS through at least one combination of the following items.

[Method 3-4]

- If the UE receives non-repeated DCI format 0_3 or 1_3, the UE may expect that an aperiodic associated CSI-RS exists in a symbol within a scheduled cell overlapping with a reception slot of the DCI in a scheduling cell.

  * For example, if the UE receives DCI at such a location as "1132", the UE may expect an aperiodic associated CSI-RS triggering location as "1136".
  * For example, if the UE receives DCI at such a location as "1133", the UE may expect an aperiodic associated CSI-RS triggering location as "1138".
  * For example, if the UE receives DCI at such a location as "1134", the UE may expect an aperiodic associated CSI-RS triggering location as "1137".
  * As another example, if the UE receives DCI at such a location as "1135", the UE may expect an aperiodic associated CSI-RS triggering location as "1139".

- If DCI format 0_3 or 1_3 is repeatedly transmitted, the UE may expect that an aperiodic associated CSI-RS exists in a symbol within a scheduled cell overlapping with a reception slot, in a scheduling cell, of DCI starting to be transmitted later in time among the repeatedly transmitted two DCIs.

  * For example, if the UE receives two repeatedly transmitted DCIs at such locations as "1132" and "1133", respectively, the UE may expect an aperiodic associated CSI-RS triggering location as "1138".
  * For example, if the UE receives two repeatedly transmitted DCIs at such locations as "1134" and "1135", respectively, the UE may expect an aperiodic associated CSI-RS triggering location as "1139".

[Method 3-5]

- If the UE receives non-repeated DCI format 0_3 or 1_3, the UE may expect that an aperiodic associated CSI-RS exists in a slot within a scheduled cell overlapping with a slot of a scheduling cell in which the DCI is received.

  * For example, if the UE receives DCI at such a location such as "1132", the UE may expect an aperiodic associated CSI-RS triggering location as "1140".
  * For example, if the UE receives DCI at such a location as "1133", the UE may expect an aperiodic associated CSI-RS triggering location as "1141".

- If DCI format 0_3 or 1_3 is repeatedly transmitted, the UE may expect that an aperiodic associated CSI-RS exists in a slot within a scheduled cell overlapping with a reception slot, in a scheduling cell, of DCI starting to be transmitted later in time among the repeatedly transmitted two DCIs.

  * For example, if the UE receives two repeatedly transmitted DCIs at such locations as "1132" and "1133", respectively, the UE may expect an aperiodic associated CSI-RS triggering location as "1141".
  * For example, if the UE receives two repeatedly transmitted DCIs at such locations as "1134" and "1135", respectively, the UE may expect an aperiodic associated CSI-RS triggering location as "1139".

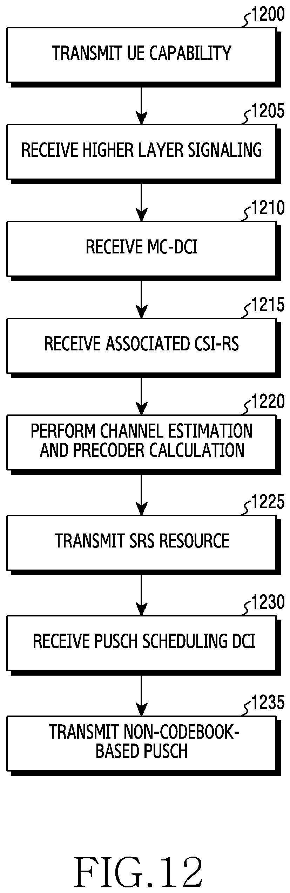

FIG. 12 is a diagram illustrating an operation of a UE according to an embodiment of the disclosure.
In operation 1200, a UE may transmit a UE capability to a base station. UE capability signaling which may be reported may be related to at least one combination of a UE capability related to support for non-codebook-based PUSCH transmission, a UE capability related to an SRS resource configuration and an SRS resource set configuration in which usage may be configured as non-codebook, a UE capability related to support for an associated CSI-RS, and a UE capability supporting the above [Method 2-1] to [Method 2-4] and the above [Method 3-1] to [Method 3-3]. Operation 1200 may be omitted.

In operation 1205, the UE may receive higher layer signaling from the base station according to the reported UE capability. The UE may define higher layer parameters and use one of the parameters, the higher layer parameters being defined for at least one combination of higher layer signaling related to support for non-codebook-based PUSCH transmission, an SRS resource configuration and an SRS resource set configuration in which usage may be configured as non-codebook, higher layer signaling related to support for an associated CSI-RS, and the above [Method 2-1] to [Method 2-4] and the above [Method 3-1] to [Method 3-3], which are received from the base station.

In operation 1210, the UE may receive MC-DCI from the base station. Through an SRS request field in a corresponding cell, the UE may be triggered later for an SRS set indicated through the SRS request field.

In operation 1215, the UE may receive an associated CSI-RS from the base station. The UE may identify how an aperiodic associated CSI-RS is triggered through the MC-DCI or which location the aperiodic associated CSI-RS is located at according to the above [Method 2-1] to [Method 2-4] and [Method 3-1] to [Method 3-3].

In operation 1220, the UE may estimate a channel between the base station and the UE and calculate a precoder, based on the associated CSI-RS received from the base station.

In operation 1225, the UE may apply the calculated precoder to one or more SRS resources and transmit the SRS resources to the base station.

In operation 1230, the UE may receive, from the base station, DCI for scheduling non-codebook-based PUSCH transmission.

In operation 1235, the UE may perform non-codebook-based PUSCH transmission by referring to precoding-related scheduling information in the DCI received from the base station.

The flowchart described above illustrates an example of a method implementable according to the principle of the disclosure, and a method illustrated in the flowchart of this specification may be variously modified. For example, a series of operations are illustrated, but various operations in each drawing may overlap with each other, occur in parallel, occur in a different sequence, or occur several times. In another example, an operation may be omitted or replaced with another operation.

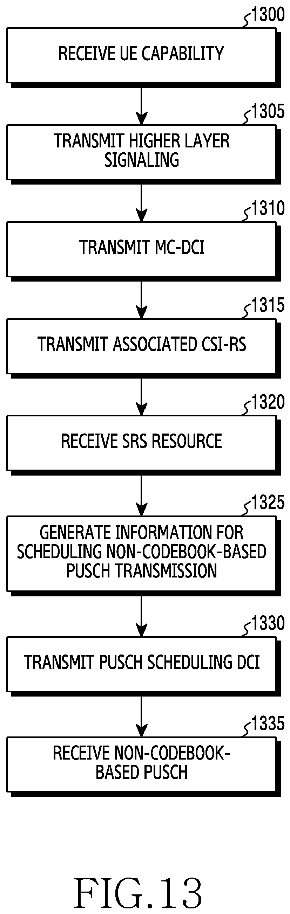

FIG. 13 is a diagram illustrating an operation of a base station according to an embodiment of the disclosure.

In operation 1300, a base station may receive a UE capability from a UE. UE capability signaling which may be received by the base station may be related to at least one combination of a UE capability related to support for non-codebook-based PUSCH transmission, a UE capability related to an SRS resource configuration and an SRS resource set configuration in which usage may be configured as non-codebook, a UE capability related to support for an associated CSI-RS, and a UE capability indicating support or non-support for [Method 2-1] to [Method 2-4], [Method 3-1] to [Method 3-3], and [SRI indication method 2-1-1] to [SRI indication method 2-1-4] described above. Operation 1300 may be omitted.

In operation 1305, the base station may receive higher layer signaling from the base station according to the UE capability reported by the UE. The UE may define higher layer parameters and use one of the parameters, the higher layer parameters being defined for at least one combination of higher layer signaling related to support for non-codebook-based PUSCH transmission, an SRS resource configuration and an SRS resource set configuration in which usage may be configured as non-codebook, higher layer signaling related to support for an associated CSI-RS, and the above [Method 2-1] to [Method 2-4] and the above [Method 3-1] to [Method 3-3], which are received from the base station.

In operation 1310, the base station may transmit MC-DCI to the UE.

In operation 1315, the base station may receive an SRS resource transmitted by the UE.

In operation 1320, the base station may receive the SRS resource transmitted by the UE and generate precoding information for scheduling non-codebook-based PUSCH transmission to the UE.

In operation 1330, the base station may transmit PUSCH scheduling DCI to the UE.

In operation 1335, the base station may receive a non-codebook-based PUSCH from the UE.

The flowchart described above illustrates an example of a method implementable according to the principle of the disclosure, and a method illustrated in the flowchart of this specification may be variously modified. For example, a series of operations are illustrated, but various operations in each drawing may overlap with each other, occur in parallel, occur in a different sequence, or occur several times. In another example, an operation may be omitted or replaced with another operation.

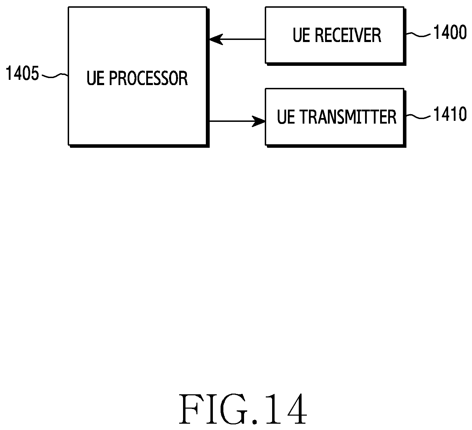

FIG. 14 illustrates a structure of a UE in a wireless communication system according to an embodiment of the disclosure.

Referring to FIG. 14, the UE may include a transceiver, which refers to a UE receiver 1400 and a UE transmitter 1410 as a whole, a memory (not illustrated), and a UE processor 1405 (or UE controller or processor). he UE transceiver 1400 and 1410, the memory, and the UE processor 1405 may operate according to the above-described communication methods of the UE. However, components of the UE are not limited to the above-described example. For example, the UE may include a larger or smaller number of components than the above-described components. Furthermore, the transceiver, the memory, and the processor may be implemented in the form of a single chip.

The transceiver may transmit/receive signals with base stations. Here, the signals may include control information and data. To this end, the transceiver may include an RF transmitter configured to up-convert and amplify the frequency of transmitted signals, an RF receiver configured to low-noise-amplify received signals and down-convert the frequency thereof, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for operations of the UE. In addition, the memory may store control information or data included in signals transmitted/received by the UE. The memory may include storage media such as a ROM, a RAM, a hard disk, a CD-ROM, and a DVD, or a combination of storage media. In addition, the memory may include multiple memories.

Furthermore, the processor may control a series of processes so that the UE can operate according to the above-described embodiments. For example, the processor may control components of the UE to receive DCI configured in two layers so as to simultaneously receive multiple PDSCHs. The processor may include multiple processors, and the processor may perform operations of controlling the components of the UE by executing programs stored in the memory.

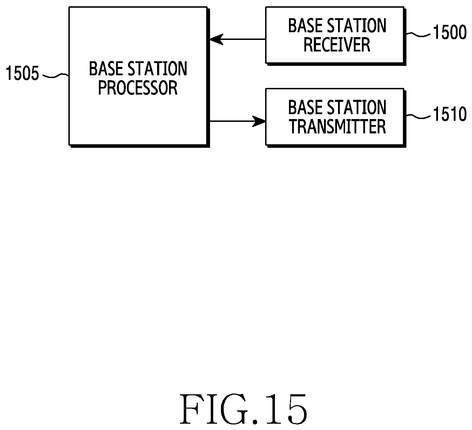

FIG. 15 illustrates a structure of a base station in a wireless communication system according to an embodiment of the disclosure.

Referring to FIG. 15, the base station may include a transceiver, which refers to a base station receiver 1500 and a base station transmitter 1510 as a whole, a memory (not illustrated), and a base station processor 1505 (or base station controller or processor). The base station transceiver 1500 and 1510, the memory, and the base station processor 1505 may operate according to the above-described communication methods of the base station. However, components of the base station are not limited to the above-described example. For example, the base station may include a larger or smaller number of components than the above-described components. Furthermore, the transceiver, the memory, and the processor may be implemented in the form of a single chip.

The transceiver may transmit/receive signals with UEs. Here, the signals may include control information and data. To this end, the transceiver may include an RF transmitter configured to up-convert and amplify the frequency of transmitted signals, an RF receiver configured to low-noise-amplify received signals and down-convert the frequency thereof, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for operations of the base station. In addition, the memory may store control information or data included in signals transmitted/received by the base station. The memory may include storage media such as a ROM, a RAM, a hard disk, a CD-ROM, and a DVD, or a combination of storage media. In addition, the memory may include multiple memories.

The processor may control a series of processes so that the base station can operate according to the above-described embodiments of the disclosure. For example, the processor may control components of the base station to configure DCI configured in two layers including allocation information regarding multiple PDSCHs and to transmit the same. The processor may include multiple processors, and the processor may perform operations of controlling the components of the base station by executing programs stored in the memory.

Methods disclosed in the claims or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of embodiments of the disclosure and help understanding of embodiments of the disclosure, and are not intended to limit the scope of embodiments of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. As an example, a part of a first embodiment of the disclosure may be combined with a part of a second embodiment to operate a base station and a terminal. Moreover, although the above embodiments have been described based on the FDD LTE system, other variants based on the technical idea of the embodiments may also be implemented in other communication systems such as TDD LTE, and 5G, or NR systems.

In the drawings in which methods of the disclosure are described, the order of the description does not always correspond to the order in which steps are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

In addition, in methods of the disclosure, some or all of the contents of each embodiment may be implemented in combination without departing from the essential spirit and scope of the disclosure.

Various embodiments of the disclosure have been described above. The above description of the disclosure is for the purpose of illustration, and is not intended to limit embodiments of the disclosure to the embodiments set forth herein. Those skilled in the art will appreciate that other specific modifications and changes may be easily made to the forms of the disclosure without changing the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

**Claims**

1. A method performed by a terminal in a wireless communication system, the method comprising:

   receiving, from a base station, multi-cell scheduling DCI (MC-DCI) including a sounding reference signal (SRS) request field having a number of bits corresponding to a number of entries configured by higher layer signaling srs-RequestListDCI;
   based on the SRS request field, receiving, from at least one scheduled cell scheduled by the MC-DCI, an associated channel status information reference signal (CSI-RS) after a first symbol of the MC-DCI;
   based on the associated CSI-RS, calculating a precoder; and
   based on the precoder, transmitting an SRS.

2. The method of claim 1, wherein, in case that the scheduled cell comprises a cell in which the MC-DCI is received, the scheduled cell has an identical subcarrier spacing, and
   wherein the associated CSI-RS is received in at least one of a slot identical to and a slot overlapping a slot in which the MC-DCI is received.

3. The method of claim 1, wherein, in case that the scheduled cell does not include a cell in which the MC-DCI is received, the cell in which the MC-DCI is received and the scheduled cell have an identical subcarrier spacing or different subcarrier spacings,

   wherein, in case that the subcarrier spacing of the cell in which the MC-DCI is received is identical to the subcarrier spacing of the scheduled cell, the associated CSI-RS is received in a slot overlapping the slot in which the MC-DCI is received,
   wherein, in case that the subcarrier spacing of the cell in which the MC-DCI is received is greater than the subcarrier spacing of the scheduled cell, the associated CSI-RS is received in a slot of the scheduled cell, overlapping the slot in which the MC-DCI is received, and

wherein in case that the subcarrier spacing of the cell in which the MC-DCI is received is smaller than the subcarrier spacing of the scheduled cell, the associated CSI-RS is received in one of a slot overlapping the first symbol of the MC-DCI to a last slot among slots of the scheduled cell, overlapping slots in which the MC-DCI is received among slots of the scheduled cell.

4. The method of claim 1, wherein, in case that the MC-DCI is repetitively transmitted, the associated CSI-RS is received based on last received MC-DCI.

5. A method performed by a base station in a wireless communication system, the method comprising:

transmitting, to a terminal, multi-cell scheduling DCI (MC-DCI) including a sounding reference signal (SRS) request field having a number of bits corresponding to a number of entries configured by higher layer signaling srs-RequestListDCI;

based on the SRS request field, transmitting, from at least one scheduled cell scheduled by the MC-DCI, an associated channel status information reference signal (CSI-RS) after a first symbol of the MC-DCI; and

based on a precoder, receiving an SRS,

wherein the precoder is calculated based on the associated CSI-RS.

6. The method of claim 5, wherein, in case that the scheduled cell comprises a cell in which the MC-DCI is transmitted, the scheduled cell has an identical subcarrier spacing, and

wherein the associated CSI-RS is transmitted in at least one of a slot identical to and a slot overlapping a slot in which the MC-DCI is transmitted.

7. The method of claim 5, wherein, in case that the scheduled cell does not include a cell in which the MC-DCI is transmitted, the cell in which the MC-DCI is transmitted and the scheduled cell have an identical subcarrier spacing or different subcarrier spacings,

wherein, in case that the subcarrier spacing of the cell in which the MC-DCI is transmitted is identical to the subcarrier spacing of the scheduled cell, the associated CSI-RS is transmitted in a slot overlapping a slot in which the MC-DCI is transmitted,

wherein, in case that the subcarrier spacing of the cell in which the MC-DCI is transmitted is greater than the subcarrier spacing of the scheduled cell, the associated CSI-RS is transmitted in a slot of the scheduled cell, overlapping the slot in which the MC-DCI is transmitted, and

wherein, in case that the subcarrier spacing of the cell in which the MC-DCI is transmitted is smaller than the subcarrier spacing of the scheduled cell, the associated CSI-RS is transmitted in one of a slot overlapping the first symbol of the MC-DCI to a last slot among slots of the scheduled cell, overlapping slots in which the MC-DCI is transmitted among slots of the scheduled cell.

8. The method of claim 5, wherein, in case that the MC-DCI is repetitively transmitted, the associated CSI-RS is transmitted based on last transmitted MC-DCI.

9. A terminal in a wireless communication system, the terminal comprising:

a transceiver; and
a controller coupled to the transceiver,
wherein the controller is configured to:

receive, from a base station, multi-cell scheduling DCI (MC-DCI) including a sounding reference signal (SRS) request field having a number of bits corresponding to a number of entries configured by higher layer signaling srs-RequestListDCI;

based on the SRS request field, receive, from at least one scheduled cell scheduled by the MC-DCI, an associated channel status information reference signal (CSI-RS) after a first symbol of the MC-DCI;

based on the associated CSI-RS, calculate a precoder; and

based on the precoder, transmit an SRS.

10. The terminal of claim 9, wherein, in case that the scheduled cell comprises a cell in which the MC-DCI is received, the scheduled cell has an identical subcarrier spacing, and

wherein the associated CSI-RS is received in at least one of a slot identical to and a slot overlapping a slot in which the MC-DCI is received.

11. The terminal of claim 9, wherein, in case that the scheduled cell does not include a cell in which the MC-DCI is received, the cell in which the MC-DCI is received and the scheduled cell have an identical subcarrier spacing or different subcarrier spacings,

wherein, in case that the subcarrier spacing of the cell in which the MC-DCI is received is identical to the subcarrier spacing of the scheduled cell, the associated CSI-RS is received in a slot overlapping a slot in which the MC-DCI is received,

wherein, in case that the subcarrier spacing of the cell in which the MC-DCI is received is greater than the subcarrier spacing of the scheduled cell, the associated CSI-RS is received in a slot of the scheduled cell, overlapping the slot in which the MC-DCI is received, and

wherein, in case that the subcarrier spacing of the cell in which the MC-DCI is received is smaller than the subcarrier spacing of the scheduled cell, the associated CSI-RS is received in one of a slot overlapping the first symbol of the MC-DCI to a last slot among slots of the scheduled cell, overlapping slots in which the MC-DCI is received among slots of the scheduled cell.

12. The terminal of claim 9, wherein, in case that the MC-DCI is repetitively transmitted, the associated CSI-RS is received based on last received MC-DCI.

13. A base station in a wireless communication system, the base station comprising:

a transceiver; and
a controller coupled to the transceiver,
wherein the controller is configured to:

transmit, to a terminal, multi-cell scheduling DCI (MC-DCI) including a sounding reference signal (SRS) request field having a number of bits corresponding to a number of entries configured by higher layer signaling srs-RequestListDCI;
based on the SRS request field, transmit, from at least one scheduled cell scheduled by the MC-DCI, an associated channel status information reference signal (CSI-RS) after a first symbol of the MC-DCI; and
based on a precoder, receive an SRS,
wherein the precoder is calculated based on the associated CSI-RS.

14. The base station of claim 13, wherein, in case that the scheduled cell comprises a cell in which the MC-DCI is transmitted, the scheduled cell has an identical subcarrier spacing, and
wherein the associated CSI-RS is transmitted in at least one of a slot identical to and a slot overlapping a slot in which the MC-DCI is transmitted.

15. The base station of claim 13, wherein, in case that the scheduled cell does not include a cell in which the MC-DCI is transmitted, the cell in which the MC-DCI is transmitted and the scheduled cell have an identical subcarrier spacing or different subcarrier spacings,

wherein, in case that a subcarrier spacing of the cell in which the MC-DCI is transmitted is identical to a subcarrier spacing of the scheduled cell, the associated CSI-RS is transmitted in a slot overlapping a slot in which the MC-DCI is transmitted,

wherein, in case that the subcarrier spacing of the cell in which the MC-DCI is transmitted is greater than the subcarrier spacing of the scheduled cell, the associated CSI-RS is transmitted in a slot of the scheduled cell, overlapping the slot in which the MC-DCI is transmitted, and

wherein, in case that the subcarrier spacing of the cell in which the MC-DCI is transmitted is smaller than the subcarrier spacing of the scheduled cell, the associated CSI-RS is transmitted in one of a slot overlapping the first symbol of the MC-DCI to a last slot among slots of the scheduled cell, overlapping slots in which the MC-DCI is transmitted among slots of the scheduled cell.

One subframe
(110)

$N_{symb}^{subframe,\mu}$ OFDM symbols

1 OFDM symbols (102)

1 subcarrier (103)

$k = N_{RB,x}^{max,\mu} \, N_{sc}^{RB} - 1$

$N_{RB}^{\mu} \, N_{sc}^{RB}$ subcarriers

Resource block $N_{sc}^{RB}$ subcarriers (104)

Resource element (k,l)
(101)

Frequency

Time

$\overline{l} = 0$

$\overline{l} = 14 \cdot 2^{\mu} - 1$

$k = 0$

FIG.1

FIG.2

BWP#1
(301)

BWP#2
(302)

Frequency

UE bandwidth
(300)

# FIG.3

**Single cell LTE/NR (400)**

gNB
- SDAP (425)
- PDCP (430)
- RLC (435)
- MAC (440)
- PHY (445)

UE
- PHY (450)
- MAC (455)
- RLC (460)
- PDCP (465)
- SDAP (470)

**Carrier aggregation (410)**

gNB
- SDAP
- PDCP
- RLC
- MAC
- PHY ... PHY

UE
- PHY ... PHY
- MAC
- RLC
- PDCP
- SDAP

**Dual connectivity (420)**

MgNB
- SDAP
- PDCP
- RLC
- MAC
- PHY

SgNB
- RLC
- MAC
- PHY

UE
- PHY
- MAC
- RLC
- PDCP
- SDAP

UE
- PHY
- MAC
- RLC

FIG.4

FIG.5

FIG.6

700

MC-DCI

713

FDRA for
cell 3

723

Cell 3

712

FDRA for
cell 2

722

Cell 2

711

FDRA for
cell 1

721

Cell 1

710

FDRA for
cell 0

720

Cell 0

# FIG.7

FIG.8

| 6 bits (RIV-like) | Y bits (RIV-like) |
|---|---|

(a) FDRA type-2 [15 kHz]

| 5 bits (bitmap) | Y bits (RIV-like) |
|---|---|

(b) FDRA type-2 [30 kHz]

# FIG.9

FIG.10

FIG.11

EP 4 773 538 A1

```
                                              ⌐1200
              ┌─────────────────────────────┐
              │     TRANSMIT UE CAPABILITY    │
              └─────────────────────────────┘
                            │
                            ▼              ⌐1205
              ┌─────────────────────────────┐
              │  RECEIVE HIGHER LAYER SIGNALING │
              └─────────────────────────────┘
                            │
                            ▼              ⌐1210
              ┌─────────────────────────────┐
              │        RECEIVE MC-DCI         │
              └─────────────────────────────┘
                            │
                            ▼              ⌐1215
              ┌─────────────────────────────┐
              │     RECEIVE ASSOCIATED CSI-RS  │
              └─────────────────────────────┘
                            │
                            ▼              ⌐1220
              ┌─────────────────────────────┐
              │  PERFORM CHANNEL ESTIMATION   │
              │   AND PRECODER CALCULATION    │
              └─────────────────────────────┘
                            │
                            ▼              ⌐1225
              ┌─────────────────────────────┐
              │      TRANSMIT SRS RESOURCE    │
              └─────────────────────────────┘
                            │
                            ▼              ⌐1230
              ┌─────────────────────────────┐
              │   RECEIVE PUSCH SCHEDULING DCI │
              └─────────────────────────────┘
                            │
                            ▼              ⌐1235
              ┌─────────────────────────────┐
              │    TRANSMIT NON-CODEBOOK-     │
              │        BASED PUSCH           │
              └─────────────────────────────┘
```

# FIG.12

1300
RECEIVE UE CAPABILITY

1305
TRANSMIT HIGHER LAYER
SIGNALING

1310
TRANSMIT MC-DCI

1315
TRANSMIT ASSOCIATED CSI-RS

1320
RECEIVE SRS RESOURCE

1325
GENERATE INFORMATION FOR
SCHEDULING NON-CODEBOOK-BASED
PUSCH TRANSMISSION

1330
TRANSMIT PUSCH SCHEDULING DCI

1335
RECEIVE NON-CODEBOOK-
BASED PUSCH

FIG.13

FIG.14

FIG.15

## INTERNATIONAL SEARCH REPORT

| International application No. |
|---|
| **PCT/KR2024/096220** |

| | |
|---|---|
| **A.** | **CLASSIFICATION OF SUBJECT MATTER** |
| | **H04L 5/00**(2006.01)i |

According to International Patent Classification (IPC) or to both national classification and IPC

| | |
|---|---|
| **B.** | **FIELDS SEARCHED** |

Minimum documentation searched (classification system followed by classification symbols)

H04L 5/00(2006.01); H04W 72/02(2009.01); H04W 72/04(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: srs-RequestListDCI, 엔트리(entry), SRS request 필드(SRS request field), MC-DCI, associated CSI-RS, 프리코더(precoder), SRS

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| Y<br>A | HUAWEI. Introduction of Rel-18 multi-carrier enhancements. R1-2306313, 3GPP TSG RAN WG1 Meeting #113. Incheon, Korea. 12 June 2023.<br>See pages 11-13. | 1,5,9,13<br>2-4,6-8,10-12,14-15 |
| Y | MODERATOR (NTT DOCOMO, INC.). Summary of discussion on higher layer signalling for MC-Enh. R1-2308626, 3GPP TSG RAN WG1 Meeting #114. Toulouse, France. 25 August 2023.<br>See page 50. | 1,5,9,13 |
| A | WO 2023-141074 A1 (INTEL CORPORATION) 27 July 2023 (2023-07-27)<br>See paragraphs [0157]-[0158]; and figures 6-7. | 1-15 |
| A | US 2022-0377706 A1 (TELEFONAKTIEBOLAGET LM ERICSSON (PUBL)) 24 November 2022 (2022-11-24)<br>See paragraphs [0163]-[0173]; and figure 14. | 1-15 |
| A | US 2023-0239106 A1 (QUALCOMM INCORPORATED) 27 July 2023 (2023-07-27)<br>See paragraphs [0062]-[0085]; and figures 4-5. | 1-15 |

☐ Further documents are listed in the continuation of Box C.  ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **21 January 2025** | **22 January 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
| --- |
| **PCT/KR2024/096220** |

| Patent document cited in search report | | | Publication date (day/month/year) | Patent family member(s) | | | Publication date (day/month/year) |
| --- | --- | --- | --- | --- | --- | --- | --- |
| WO | 2023-141074 | A1 | 27 July 2023 | US | 2024-0251401 | A1 | 25 July 2024 |
| US | 2022-0377706 | A1 | 24 November 2022 | EP | 4055754 | A1 | 14 September 2022 |
| | | | | EP | 4055754 | B1 | 03 January 2024 |
| | | | | EP | 4055754 | C0 | 03 January 2024 |
| | | | | MX | 2022005363 | A | 19 July 2022 |
| | | | | WO | 2021-090168 | A1 | 14 May 2021 |
| | | | | ZA | 202206366 | B | 28 June 2023 |
| US | 2023-0239106 | A1 | 27 July 2023 | CN | 115885488 | A | 31 March 2023 |
| | | | | EP | 4201016 | A1 | 28 June 2023 |
| | | | | WO | 2022-046439 | A1 | 03 March 2022 |

Form PCT/ISA/210 (patent family annex) (July 2022)